# EUROPEAN PATENT APPLICATION

(11) **EP 4 488 249 A1**
(43) Date of publication of application: **08.01.2025**
(21) Application number: 23763578.4
(22) Date of filing: 03.03.2023
(51) Int. Cl.: C07B 61/00, C07B 37/04, C07C 41/30, C07C 43/20, C07C 43/205, C07C 43/21, C07C 43/215, C07C 45/68, C07C 49/517, C07C 49/84, C07F 9/50, C08G 65/327

(54) **MECHANOCHEMICAL-REACTION ADDITIVE, MECHANOCHEMICAL METHOD, LIGAND COMPOUND, AND COMPLEX**

(30) Priority: 04.03.2022 JP 2022033684
(71) Applicant: National University Corporation Hokkaido University, Hokkaido 060-0808 (JP)
(72) Inventor: ITO, Hajime, Sapporo-shi, Hokkaido 060-0808 (JP); KUBOTA, Koji, Sapporo-shi, Hokkaido 060-0808 (JP)
(74) Representative: Hasegawa, Kan
(86) International application number: PCT/JP2023/008125
(87) International publication number: WO 2023/167321

(57) **Abstract**

An object is to provide a mechanochemical-reaction additive that can be handled in the air, can be easily synthesized, can be used in a mechanochemical reaction to increase the activity of the mechanochemical reaction, and can be applied to wide-ranging substrates under mild conditions. A solving means provided is a mechanochemical-reaction additive including at least a ligand compound (Lx) or salt thereof, wherein the ligand compound (Lx) is one or more of a phosphorus-based compound, a bipyridine-based compound, and an N-heterocyclic carbene-based compound, and the ligand compound (Lx) intramolecularly has a polymer chain and the polymer chain is one or more of polyether, polyamide, polyester, and polyurethane.

## Description

### Technical Field

The present invention relates to a novel mechanochemical-reaction additive, a novel mechanochemical-reaction method, a novel ligand compound, and a novel complex.

### Background Art

In methods for synthesizing pharmaceuticals, liquid crystal compounds, organic electroluminescence compounds, coloring materials, energy ray absorption materials, information storage materials, wavelength conversion materials, indicator materials, sensor materials, organic light emitting diodes (OLED), organic semiconductor materials, and the like, a known means is, for example, cross-coupling reactions.

Non Patent Literatures 1 and 2 describe known cross-coupling reactions in which an aromatic compound having a leaving group, an aromatic boronic acid derivative, and the like are caused to react in the presence of a metallic compound such as a palladium catalyst to cause coupling to obtain an aromatic compound. Because of their synthetic chemical importance, Dr. Akira Suzuki, Dr. Eiichi Negishi, and Dr. Richard Heck were awarded the Nobel Prize in Chemistry for "development of cross-coupling reaction using palladium catalyst" in 2010.

Cross-coupling reactions in which, in general, compounds serving as the starting materials are dissolved in organic solvents and caused to react, require relatively large amounts of organic solvents. However, in recent years, the use of large amounts of organic solvents may cause problems from the viewpoint of work environments and safety of workers, protection of the global environment, the environmental load during treatment of used organic solvents, and the like. For this reason, there has been a demand for a cross-coupling reaction method that is less likely to cause problems from the viewpoint of work environments and safety, protection of the global environment, environmental load, and the like.

Non Patent Literature 3 has reported a cross-coupling reaction method that substantially does not use organic solvents and uses a palladium catalyst. However, the number of the reaction examples is small and there remains considerable room for improvements in starting materials and reaction efficiency.

Organic synthesis reaction methods that are performed by, without use of organic solvents, bringing reaction raw materials into direct contact with each other have a low environmental load and are scientifically and industrially interesting. Of such organic synthesis reaction methods, mechanochemical-reaction methods have been attracting attention. The mechanochemical-reaction methods use a means such as milling, shearing, impacting, or compression to apply mechanical energy to a solid raw material, to activate the solid raw material to cause a reaction.

The inventors of the present invention proposed, in Patent Literature 1, a mechanochemical-reaction method in which various compounds can be used as starting materials and a cross-coupling reaction can be caused in which organic solvents are substantially not used and the reaction can be caused to proceed efficiently under mild reaction conditions in a relatively short time. This mechanochemical-reaction method enables relatively efficient formation of a chemical bond selected from C-N, C-B, C-C, C-O, and C-S bonds, and the reaction product can be obtained at high yield. However, even this mechanochemical-reaction method has room for improvements in substrate application range, reaction efficiency, reaction activity, reaction time, and the like.

### Citation List

### Patent Literature

PTL 1: International Publication No. 2020/085396

### Non Patent Literature

NPL 1: Akira Suzuki, Journal of Synthetic Organic Chemistry, Japan, 2005, Vol. 63, No. 4, 312
NPL 2: Ruiz-Castillo, P., Buchwald, S. L. Chem. Rev., 2016, Vol. 116, 12564
NPL 3: Howard, J. L., Cao, Q., Browne, D. L. Chem. Sci. 2018, Vol. 9, 3080.

### Summary of Invention

### Technical Problem

In mechanochemical-reaction methods, a ball mill or the like can be used to perform milling, shearing, impacting, compression, or the like to apply mechanical energy to the reaction raw materials, to cause a reaction under solventless conditions or conditions of substantially not using organic solvents. For this reason, the methods have been attracting considerable attention because environmentally harmful waste derived from organic solvents is reduced, but organic molecules with high added value can be synthesized. In particular, mechanochemical cross-coupling reactions using metallic compounds (metallic catalysts) of palladium or the like have been attracting attention as a new technique that solves various problems of the existing solution-based synthesis using solvents.

However, for catalysts, ligands, and the like used in mechanochemical cross-coupling reactions, the catalysts and ligands developed for solution-based cross-coupling reactions are currently applied.

An object of the present invention is to provide a mechanochemical-reaction additive that can be handled in the air, can be easily synthesized, can be used in a mechanochemical reaction to increase the activity of the mechanochemical reaction, and can be applied to wide-ranging substrates under mild conditions.

Another object of the present invention is to provide a mechanochemical-reaction method, without use of solvents or substantially without use of organic solvents, that can be applied to wide-ranging substrates under mild conditions, provides high reaction activity, and can provide the reaction product in a short time at high yield.

Still another object of the present invention is to provide a ligand compound or salt thereof having a novel structure that can be handled in the air, can be easily synthesized, exhibits high activity in a mechanochemical reaction, and can be used in a mechanochemical method that can be applied to wide-ranging substrates under mild conditions, and a complex including the ligand compound or salt thereof and a metallic atom.

### Solution to Problem

The inventors of the present invention performed thorough studies on how to achieve the objects and, as a result, have found that a novel ligand compound (Lx) having a specified structure or salt thereof can be handled in the air, can be easily synthesized, and exhibits high activity in the case of being used in a mechanochemical reaction, in particular, the Suzuki-Miyaura cross-coupling reaction; thus, they have accomplished the present invention. This ligand compound (Lx) or salt thereof, in particular, a ligand compound (Ly) or salt thereof exhibits much higher activity than ligand compounds used in the existing solution-based cross-coupling reactions.

The present invention provides the following mechanochemical-reaction additive, mechanochemical-reaction method, novel ligand compound (Ly) or salt thereof, and novel complex.

### [Item 1]

A mechanochemical-reaction additive including at least a ligand compound (Lx) or salt thereof,
wherein the ligand compound (Lx) is one or more kinds of a phosphorus-based compound, a bipyridine-based compound, and an N-heterocyclic carbene-based compound, and
the ligand compound (Lx) intramolecularly has a polymer chain and the polymer chain is one or more of polyether, polyamide, polyester, and polyurethane.

### [Item 2]

The mechanochemical-reaction additive according to item 1, further including a metallic compound.

### [Item 3]

A mechanochemical-reaction additive including a complex including at least a ligand compound (Lx) or salt thereof and a metallic atom,
wherein the ligand compound (Lx) is one or more kinds of a phosphorus-based compound, a bipyridine-based compound, and an N-heterocyclic carbene-based compound, and
the ligand compound (Lx) intramolecularly has a polymer chain and the polymer chain is one or more kinds of polyether, polyamide, polyester, and polyurethane.

### [Item 4]

The mechanochemical-reaction additive according to any one of items 1 to 3, wherein the ligand compound (Lx) is represented by a structure (La), (Lb), or (Lc) below; 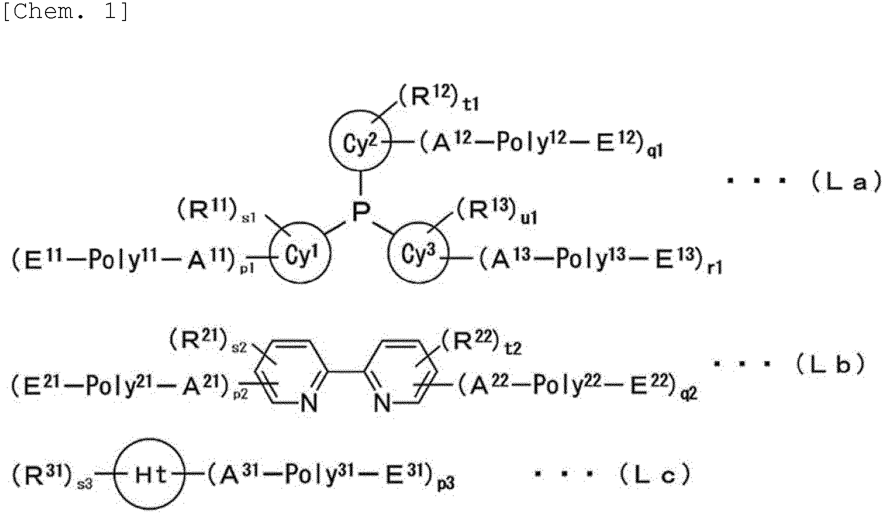 (groups in the formulas (La), (Lb), and (Lc) are as follows: Cy¹, Cy², and Cy³ are each independently a group selected from the group consisting of an aromatic hydrocarbon group having 6 to 30 carbon atoms, an aliphatic hydrocarbon group having 1 to 20 carbon atoms, an alicyclic hydrocarbon group having 3 to 20 carbon atoms, and a heterocyclic group having 1 to 20 carbon atoms (a heteroatom is one or more selected from the group consisting of oxygen, nitrogen, and sulfur. When there are a plurality of heteroatoms, they may be the same or different.).

Ht is a group represented by any one of formulas (Ht1) to (Ht10) below:

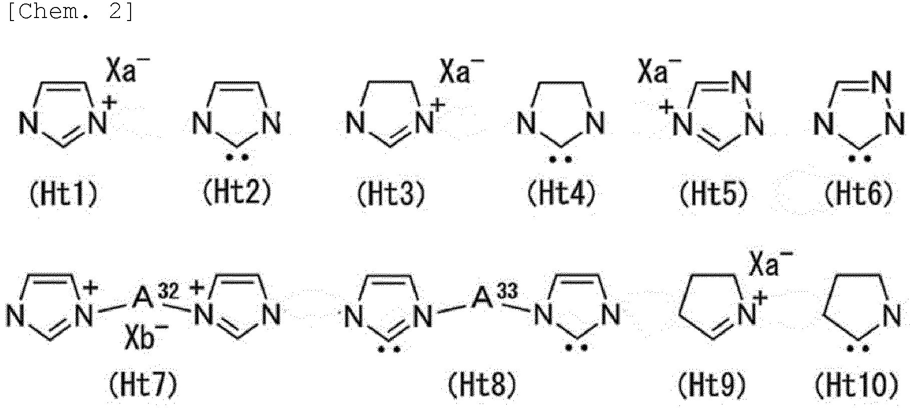

R¹¹, R¹², R¹³, R²¹, R²², and R³¹ are each independently a group selected from the group consisting of an alkyl group having 1 to 24 carbon atoms, an alkoxy group having 1 to 24 carbon atoms, an alkylthio group having 1 to 24 carbon atoms, a cycloalkyl group having 3 to 24 carbon atoms, an alkenyl group having 2 to 24 carbon atoms, an alkynyl group having 2 to 24 carbon atoms, an aryl group having 6 to 24 carbon atoms, an aryloxy group having 6 to 24 carbon atoms, an arylthio group having 6 to 24 carbon atoms, a heteroaryl group having 3 to 24 carbon atoms (a heteroatom is one or more selected from the group consisting of oxygen, nitrogen, and sulfur. When there are a plurality of heteroatoms, they may be the same or different.), an acyl group having 1 to 24 carbon atoms, an amino group having 0 to 24 carbon atoms, a halogen group, a cyano group, a nitro group, a hydroxyl group, a mercapto group, and a carboxyl group; when there are a plurality of R¹¹, R¹², R¹³, R²¹, R²², and R³¹, they may be the same or different.

A¹¹, A¹², A¹³, A²¹, A²², A³¹, A³², and A³³ are each independently a group selected from the group consisting of a direct bond, an alkylene group having 1 to 24 carbon atoms, a cycloalkylene group having 3 to 24 carbon atoms, an alkenylene group having 1 to 24 carbon atoms, an alkynylene group having 1 to 24 carbon atoms, an arylene group having 6 to 24 carbon atoms, an aryleneoxy group having 6 to 24 carbon atoms, an arylene sulfide group having 6 to 24 carbon atoms, a heteroarylene group having 3 to 24 carbon atoms (a heteroatom is one or more selected from the group consisting of oxygen, nitrogen, and sulfur. When there are a plurality of heteroatoms, they may be the same or different.), an ester group (-COO- or -OCO-), an ether group, a thioether group, an amide group, a urethane group, a carbonate group, and an amine group having 0 to 24 carbon atoms; two or more kinds of the foregoing may be bonded together. When there are a plurality of A¹¹, A¹², A¹³, A²¹, A²², A³¹, A³², and A³³, they may be the same or different.

Poly¹¹, Poly¹², Poly¹³, Poly²¹, Poly²², and Poly³¹ are each independently one or more kinds of polymer chains selected from the group consisting of polyether, polyamide, polyester, and polyurethane. When there are a plurality of Poly¹¹, Poly¹², Poly¹³, Poly²¹, Poly²², and Poly³¹, they may be the same or different.

E¹¹, E¹², E¹³, E²¹, E²², and E³¹ are each independently a group selected from the group consisting of an alkyl group having 1 to 24 carbon atoms, an alkoxy group having 1 to 24 carbon atoms, an alkylthio group having 1 to 24 carbon atoms, a cycloalkyl group having 3 to 24 carbon atoms, an alkenyl group having 2 to 24 carbon atoms, an alkynyl group having 2 to 24 carbon atoms, an aryl group having 6 to 24 carbon atoms, an aryloxy group having 6 to 24 carbon atoms, an arylthio group having 6 to 24 carbon atoms, a heteroaryl group having 3 to 24 carbon atoms (a heteroatom is one or more selected from the group consisting of oxygen, nitrogen, and sulfur. When there are a plurality of heteroatoms, they may be the same or different.), an acyl group having 1 to 24 carbon atoms, an amino group having 0 to 24 carbon atoms, a halogen group, a cyano group, a nitro group, a hydroxyl group, a mercapto group, and a carboxyl group; when there are a plurality of E¹¹, E¹², E¹³, E²¹, E²², and E³¹, they may be the same or different.

Xa⁻ is a monovalent anion and Xb⁻ is a divalent anion or two monovalent anions.

p1, q1, r1, s1, t1, and u1 are each independently 0 or an integer of 1 or more and satisfy p1 + q1 + r1 ≥ 1. And p1 + s1 is 0 or an integer of equal to or less than a number of substitutable positions in the Cy¹ group; q1 + t1 is 0 or an integer of equal to or less than a number of substitutable positions in the Cy² group; r1 + u1 is 0 or an integer of equal to or less than a number of substitutable positions in the Cy³ group.

p2, q2, s2, and t2 are each independently 0 or an integer of 1 or more, and satisfy p2 + q2 ≥ 1, 4 ≥ p2 + s2 ≥ 0, and 4 ≥ q2 + t2 ≥ 0.

p3 is an integer of 1 or more, s3 is 0 or an integer of 1 or more, and p3 + s3 is an integer of equal to or less than a number of substitutable positions in the Ht group.

In one or more of each of R¹¹, R¹², R¹³, A¹¹, A¹², and A¹³, two or more may be bonded together to form a carbon ring or a heterocycle.

In one or more of each of R²¹, R²², A²¹, and A²², two or more may be bonded together to form a carbon ring or a heterocycle.

In one or more of each of R³¹, A³¹, A³², and A³³, two or more may be bonded together to form a carbon ring or a heterocycle.

In the formulas (La), (Lb), and (Lc), Cy¹, Cy², Cy³, R¹¹, R¹², R¹³, R²¹, R²², R³¹, A¹¹, A¹², A¹³, A²¹, A²², A³¹, A³², A³³, E¹¹, E¹², E¹³, E²¹, E²², and E³¹ may each independently have a substituent. The substituent in each group is a group selected from the group consisting of an alkyl group having 1 to 24 carbon atoms, an alkoxy group having 1 to 24 carbon atoms, an alkylthio group having 1 to 24 carbon atoms, a cycloalkyl group having 3 to 24 carbon atoms, an alkenyl group having 2 to 24 carbon atoms, an alkynyl group having 2 to 24 carbon atoms, an aryl group having 6 to 24 carbon atoms, an aryloxy group having 6 to 24 carbon atoms, an arylthio group having 6 to 24 carbon atoms, a heteroaryl group having 3 to 24 carbon atoms (a heteroatom is one or more selected from the group consisting of oxygen, nitrogen, and sulfur. When there are a plurality of heteroatoms, they may be the same or different.), an acyl group having 1 to 24 carbon atoms, an amino group having 0 to 24 carbon atoms, a halogen group, a cyano group, a nitro group, a hydroxyl group, a mercapto group, and a carboxyl group; when there are a plurality of substituents, they may be the same or different.).

### [Item 5]

The mechanochemical-reaction additive according to any one of items 1 to 4, wherein the polymer chain is polyalkylene ether.

### [Item 6]

The mechanochemical-reaction additive according to any one of items 2 to 5, wherein a metallic atom included in the metallic compound or the metallic atom included in the complex is one or more kinds selected from the group consisting of Mg, Ca, Sr, Ba, Sc, Ti, V, Cr, Mn, Fe, Co, Ni, Cu, Zn, Ru, Pd, Ag, Re, Ir, Pt, Pb, Bi, Al, and Sn.

### [Item 7]

A mechanochemical-reaction method including using the mechanochemical-reaction additive according to any one of items 1 to 6.

### [Item 8]

A ligand compound (Ly) or salt thereof represented by a structure (La), (Lb), or (Lc) below; 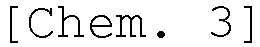 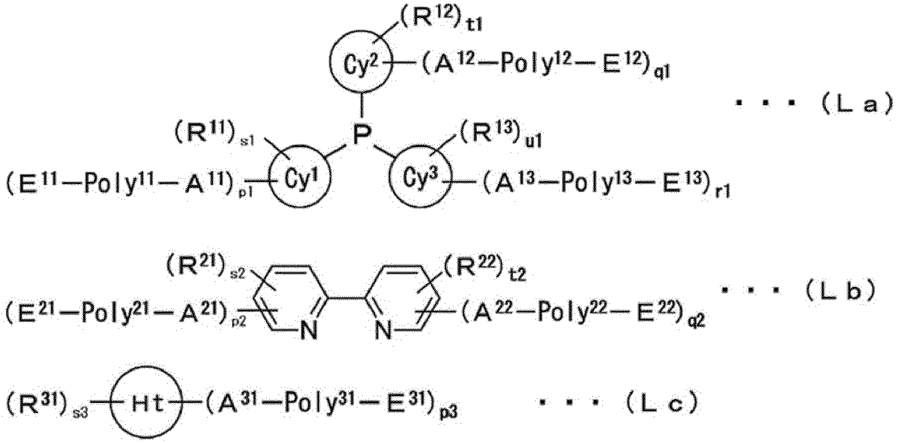 (groups in the formulas (La), (Lb), and (Lc) are as follows.

Cy¹, Cy², and Cy³ are each independently a group selected from the group consisting of an aromatic hydrocarbon group having 6 to 30 carbon atoms, an aliphatic hydrocarbon group having 1 to 20 carbon atoms, an alicyclic hydrocarbon group having 3 to 20 carbon atoms, and a heterocyclic group having 1 to 20 carbon atoms (a heteroatom is one or more selected from the group consisting of oxygen, nitrogen, and sulfur. When there are a plurality of heteroatoms, they may be the same or different.).

Ht is a group represented by any one of formulas (Ht1) to (Ht7) below.

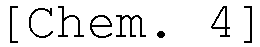

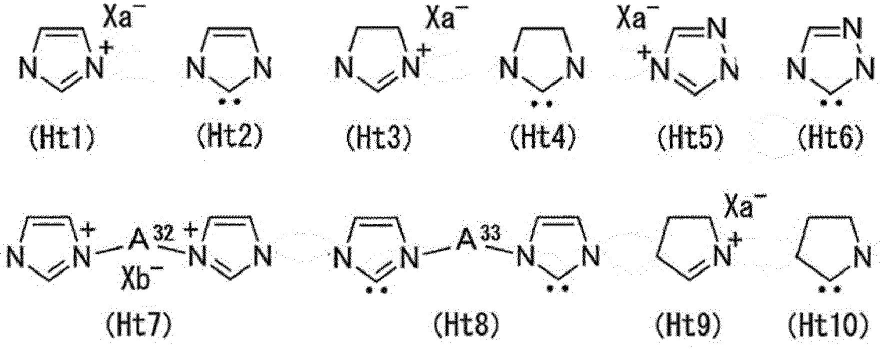

R¹¹, R¹², R¹³, R²¹, R²², and R³¹ are each independently a group selected from the group consisting of an alkyl group having 1 to 24 carbon atoms, an alkoxy group having 1 to 24 carbon atoms, an alkylthio group having 1 to 24 carbon atoms, a cycloalkyl group having 3 to 24 carbon atoms, an alkenyl group having 2 to 24 carbon atoms, an alkynyl group having 2 to 24 carbon atoms, an aryl group having 6 to 24 carbon atoms, an aryloxy group having 6 to 24 carbon atoms, an arylthio group having 6 to 24 carbon atoms, a heteroaryl group having 3 to 24 carbon atoms (a heteroatom is one or more selected from the group consisting of oxygen, nitrogen, and sulfur. When there are a plurality of heteroatoms, they may be the same or different.), an acyl group having 1 to 24 carbon atoms, an amino group having 0 to 24 carbon atoms, a halogen group, a cyano group, a nitro group, a hydroxyl group, a mercapto group, and a carboxyl group. When there are a plurality of R¹¹, R¹², R¹³, R²¹, R²², and R³¹, they may be the same or different.

A¹¹, A¹², A¹³, A²¹, A²², A³¹, A³², and A³³ are each independently a group selected from the group consisting of a direct bond, an alkylene group having 1 to 24 carbon atoms, a cycloalkylene group having 3 to 24 carbon atoms, an alkenylene group having 1 to 24 carbon atoms, an alkynylene group having 1 to 24 carbon atoms, an arylene group having 6 to 24 carbon atoms, an aryleneoxy group having 6 to 24 carbon atoms, an arylene sulfide group having 6 to 24 carbon atoms, a heteroarylene group having 3 to 24 carbon atoms (a heteroatom is one or more selected from the group consisting of oxygen, nitrogen, and sulfur. When there are a plurality of heteroatoms, they may be the same or different.), an ester group (-COO- or -OCO-), an ether group, a thioether group, an amide group, a urethane group, a carbonate group, and an amine group having 0 to 24 carbon atoms; two or more of the foregoing may be bonded together. When there are a plurality of A¹¹, A¹², A¹³, A²¹, A²², A³¹, A³², and A³³, they may be the same or different.

Poly¹¹, Poly¹², Poly¹³, Poly²¹, Poly²², and Poly³¹ are each independently one or more polymer chains selected from the group consisting of polyether, polyamide, polyester, and polyurethane. When there are a plurality of Poly¹¹, Poly¹², Poly¹³, Poly²¹, Poly²², and Poly³¹, they may be the same or different.

E¹¹, E¹², E¹³, E²¹, E²², and E³¹ are each independently a group selected from the group consisting of an alkyl group having 1 to 24 carbon atoms, an alkoxy group having 1 to 24 carbon atoms, an alkylthio group having 1 to 24 carbon atoms, a cycloalkyl group having 3 to 24 carbon atoms, an alkenyl group having 2 to 24 carbon atoms, an alkynyl group having 2 to 24 carbon atoms, an aryl group having 6 to 24 carbon atoms, an aryloxy group having 6 to 24 carbon atoms, an arylthio group having 6 to 24 carbon atoms, a heteroaryl group having 3 to 24 carbon atoms (a heteroatom is one or more selected from the group consisting of oxygen, nitrogen, and sulfur. When there are a plurality of heteroatoms, they may be the same or different.), an acyl group having 1 to 24 carbon atoms, an amino group having 0 to 24 carbon atoms, a halogen group, a cyano group, a nitro group, a hydroxyl group, a mercapto group, and a carboxyl group. When there are a plurality of E¹¹, E¹², E¹³, E²¹, E²², and E³¹, they may be the same or different.

Xa⁻ is a monovalent anion and Xb⁻ is a divalent anion or two monovalent anions.

p1, q1, r1, s1, t1, and u1 are each independently 0 or an integer of 1 or more and satisfy p1 + q1 + r1 ≥ 1. And p1 + s1 is 0 or an integer of equal to or less than a number of substitutable positions in the Cy¹ group; q1 + t1 is 0 or an integer of equal to or less than a number of substitutable positions in the Cy² group; r1 + u1 is 0 or an integer of equal to or less than a number of substitutable positions in the Cy³ group.

p2, q2, s2, and t2 are each independently 0 or an integer of 1 or more, and satisfy p2 + q2 ≥ 1, 4 ≥ p2 + s2 ≥ 0, and 4 ≥ q2 + t2 ≥ 0.

p3 is an integer of 1 or more, s3 is 0 or an integer of 1 or more, and p3 + s3 is an integer of equal to or less than a number of substitutable positions in the Ht group.

In one or more of each of R¹¹, R¹², R¹³, A¹¹, A¹², and A¹³, two or more may be bonded together to form a carbon ring or a heterocycle.

In one or more of each of R²¹, R²², A²¹, and A²², two or more may be bonded together to form a carbon ring or a heterocycle.

In one or more of each of R³¹, A³¹, A³², and A³³, two or more may be bonded together to form a carbon ring or a heterocycle.
in the formulas (La), (Lb), and (Lc), Cy¹, Cy², Cy³, R¹¹, R¹², R¹³, R²¹, R²², R³¹, A¹¹, A¹², A¹³, A²¹, A²², A³¹, A³², A³³, E¹¹, E¹², E¹³, E²¹, E²², and E³¹ may each independently have a substituent. The substituent in each group is a group selected from the group consisting of an alkyl group having 1 to 24 carbon atoms, an alkoxy group having 1 to 24 carbon atoms, an alkylthio group having 1 to 24 carbon atoms, a cycloalkyl group having 3 to 24 carbon atoms, an alkenyl group having 2 to 24 carbon atoms, an alkynyl group having 2 to 24 carbon atoms, an aryl group having 6 to 24 carbon atoms, an aryloxy group having 6 to 24 carbon atoms, an arylthio group having 6 to 24 carbon atoms, a heteroaryl group having 3 to 24 carbon atoms (a heteroatom is one or more selected from the group consisting of oxygen, nitrogen, and sulfur. When there are a plurality of heteroatoms, they may be the same or different.), an acyl group having 1 to 24 carbon atoms, an amino group having 0 to 24 carbon atoms, a halogen group, a cyano group, a nitro group, a hydroxyl group, a mercapto group, and a carboxyl group; when there are a plurality of substituents, they may be the same or different.).

### [Item 9]

A complex including at least the ligand compound (Ly) or salt thereof according to item 8 and a metallic atom. Advantageous Effects of Invention

The present invention provides a mechanochemical-reaction additive that can be handled in the air, can be easily synthesized, can be used in a mechanochemical reaction to increase the activity of the mechanochemical reaction, and can be applied to wide-ranging substrates under mild conditions.

The present invention provides a mechanochemical-reaction method, without use of solvents or substantially without use of organic solvents, that can be applied to wide-ranging substrates under mild conditions, provides high reaction activity, and can provide the reaction product in a short time at high yield.

The present invention provides a ligand compound (Ly) or salt thereof having a novel structure that can be handled in the air, can be easily synthesized, exhibits high activity in a mechanochemical reaction, and can be used in a mechanochemical method that can be applied to wide-ranging substrates under mild conditions, and a complex including the ligand compound (Ly) or salt thereof and a metallic atom.

### Brief Description of Drawings

[Fig. 1] Fig. 1 is a DSC diagram of a sample obtained by subjecting a ball mill mixture of aryl bromide BrAr (1-bromo-3,5-diphenylbenzene) and a phosphorus-based ligand compound (La111) to ball mill grinding (vibration frequency: 30 Hz) at 45°C for 30 minutes.
[Fig. 2] Fig. 2 is a DSC diagram of a sample obtained by subjecting aryl bromide BrAr (1-bromo-3,5-diphenylbenzene) to ball mill grinding (vibration frequency: 30 Hz) at 45°C for 30 minutes.

### Description of Embodiments

Hereinafter, a mechanochemical-reaction additive, a mechanochemical-reaction method, a ligand compound or salt thereof, and a complex according to the present invention will be described in detail.

### [Mechanochemical-reaction additive]

The mechanochemical-reaction additive is used by being converted to the reaction system in a mechanochemical-reaction method. The mechanochemical-reaction method is a method of applying mechanical energy to a substrate, a catalyst, and the like to cause a reaction. The mechanical energy can be mechanically generated by a means such as milling, shearing, impacting, or compression. Such mechanical energy is applied to a substrate, a catalyst, and the like to thereby activate the substrate, the catalyst, and the like to cause the reaction. The mechanochemical-reaction method is an organic synthesis reaction method in which components included within the reaction system are brought into direct contact with each other and mixed together to react without use of organic solvents; this method has low environmental load, but provides high reaction activity.

A mechanochemical-reaction additive according to an embodiment of the present invention includes at least a ligand compound (Lx) or salt thereof, and may further include a metallic compound.

A mechanochemical-reaction additive according to another embodiment of the present invention includes a complex at least including a ligand compound (Lx) or salt thereof and a metallic atom.

### <Ligand compound (Lx) or salt thereof>

For the ligand compound (Lx) included in a mechanochemical-reaction additive according to the present invention, the ligand compound is one or more of a phosphorus-based compound, a bipyridine-based compound, and an N-heterocyclic carbene-based compound, the ligand compound intramolecularly has a polymer chain, and the polymer chain is one or more of polyether, polyamide, polyester, and polyurethane.

In the present invention, the ligand compound is preferably composited with the metallic compound (catalyst) during the mechanochemical reaction, and degrades at least a portion of the crystalline region of the substrate and accelerates the reaction. The inventors of the present invention infer that the flexible and fluid polymer chain (solid polymer domain) is composited with the catalyst, to thereby improve dispersion of the substrate near the catalyst, which can efficiently accelerate the reaction. However, the present invention is not limited at all by such inference.

The phosphorus-based ligand compound is, for example, one or more compounds represented by a formula (La) below; the bipyridine-based ligand compound is, for example, one or more compounds represented by a formula (Lb) below; and the N-heterocyclic carbene-based ligand compound is, for example, one or more compounds represented by a formula (Lc) below.

These compounds may be salts.

The content of the ligand compound (Lx) or salt thereof is not particularly limited as long as, with the amount, upon addition of the mechanochemical-reaction additive to the reaction system, the mechanochemical reaction such as a Suzuki-Miyaura cross-coupling reaction proceeds, and can be appropriately determined in accordance with the types and amounts of the substrate, the metallic compound, optionally used base and unsaturated hydrocarbon compound, and the reaction product, the reaction temperature, and the like.

The amount of the ligand compound (Lx) or salt thereof used can be, for example, as the molar ratio of the ligand compound (Lx) to the metallic compound (ligand compound (Lx)/metallic compound), 10/1 to 1/10, preferably 5/1 to 1/5, more preferably 3/1 to 1/3, and still more preferably 2/1 to 1/2.

### (Compound represented by formula (La))

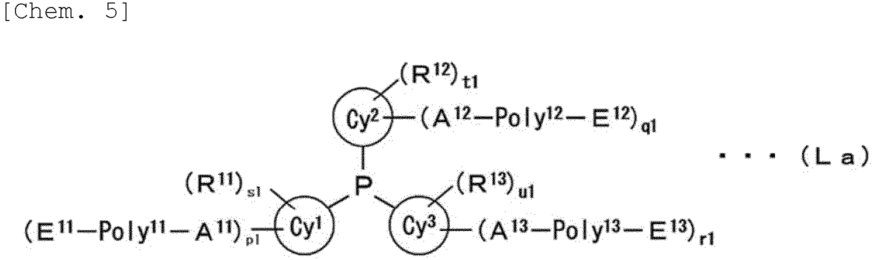

In the compound represented by the formula (La), three groups such as cyclic groups are bonded to the phosphorus atom; one or more polymer chains selected from the group consisting of polyether, polyamide, polyester, and polyurethane are bonded to one or more groups of the three groups. In the present invention, as the compound represented by the formula (La), a salt thereof may be used.

In the formula (La), Cy¹, Cy², and Cy³ are each independently any one of an aromatic hydrocarbon group having 6 to 30 carbon atoms, an aliphatic hydrocarbon group having 1 to 20 carbon atoms, an alicyclic hydrocarbon group having 3 to 20 carbon atoms, and a heterocyclic group having 1 to 20 carbon atoms (the heteroatom is one or more selected from the group consisting of oxygen, nitrogen, and sulfur; when there are a plurality of heteroatoms, they may be the same or different). These groups may have a substituent.

Examples of the aromatic hydrocarbon group having 6 to 30 carbon atoms include a phenyl group, a naphthyl group, an anthracenyl group (or an anthracene group), a phenanthrenyl group (or a phenanthrene group), a biphenyl group, a group in which two or more phenyl groups are bonded together via a divalent linking group, a terphenyl group, a pyrenyl group (or a pyrene group), a perylenyl group (or a perylene group), a triphenylenyl group (or a triphenylene group), and a fluorenyl group.

Examples of the aliphatic hydrocarbon group having 1 to 20 carbon atoms include alkyl groups having 1 to 20 (for example, a methyl group, an ethyl group, an n-propyl group, an isopropyl group, an n-butyl group, an isobutyl group, a tert-butyl group, a pentyl group, a hexyl group, and an octyl group); alkenyl groups having 1 to 24, preferably 1 to 18, more preferably 1 to 12, and still more preferably 1 to 8 carbon atoms (for example, an ethenyl group, a propenyl group, a butenyl group, a pentenyl group, a hexenyl group, and an octenyl group); and alkynyl groups having 1 to 24, preferably 1 to 18, more preferably 1 to 12, and still more preferably 1 to 8 carbon atoms (for example, an ethynyl group, a propynyl group, a butynyl group, a pentynyl group, a hexynyl group, and an octynyl group).

Examples of the alicyclic hydrocarbon group having 3 to 20 carbon atoms include cycloalkyl groups having 3 to 20, preferably 3 to 18, more preferably 3 to 12, and still more preferably 3 to 8 carbon atoms (for example, a cyclopropyloxy group, a cyclobutyloxy group, a cyclopentyloxy group, and a cyclohexyloxy group).

Examples of the heterocyclic group having 1 to 20 carbon atoms (the heteroatom is one or more selected from the group consisting of oxygen, nitrogen, and sulfur; when there are a plurality of heteroatoms, they may be the same or different) include nitrogen-containing heteroaryl groups such as a pyridyl group (or a pyridine group), a pyridylenyl group (or a pyridinediyl group), a pyrimidinyl group (or a pyrimidine group), a pyrazyl group (or a pyrazine group), a quinolyl group (or a quinoline group), an isoquinolyl group (or an isoquinoline group), a carbazolyl group (or a carbazole group), a 9-phenylcarbazolyl group, an acridinyl group (or an acridine group), a quinazolyl group (or a quinazoline group), a quinoxalyl group (or a quinoxaline group), a 1,6-naphthyridinyl group, a 1,8-naphthyridinyl group, and a porphyrin group (or a porphyrin ring); oxygen-containing heteroaryl groups such as a furanyl group (or a furan group), a benzofuranyl group (a benzofuran group), a dibenzofuranyl group (a dibenzofuran group), a phenyldibenzofuranyl group, and a dibenzofuranylphenyl group; sulfur-containing heteroaryl groups such as a thiophenyl group (a thiophene group or a thienyl group), a thienylenyl group (or a thiophenediyl group), a benzothienyl group (a benzothiophene group), a dibenzothienyl group (a dibenzothiophene group), a phenyldibenzothienylenyl group, and a dibenzothienylenylphenyl group; and heteroaryl groups including two or more heteroatom species (such as nitrogen and sulfur) such as a benzothiazolyl group (or a benzothiazole group) and a benzothiadiazole group. Other examples include a pyrrole group, a silole group, a borole group, a phosphole group, a selenophene group, a germole group, an indole group, an indene group, a benzosilole group, a benzoborole group, a benzophosphole group, a benzoselenophene group, a benzogermole group, a dibenzosilole group, a dibenzoborole group, a dibenzophosphole group, a dibenzoselenophene group, a dibenzogermole group, a dibenzothiophene 5-oxide group, a 9H-fluoren-9-one group, a dibenzothiophene 5,5-dioxide group, an azabenzothiophene group, an azabenzofuran group, an azaindole group, an azaindene group, an azabenzosilole group, an azabenzoborole group, an azabenzophosphole group, an azabenzoselenophene group, an azabenzogermole group, an azadibenzothiophene group, an azadibenzofuran group, an azacarbazole group, an azafluorene group, an azadibenzosilole group, an azadibenzoborole group, an azadibenzophosphole group, an azadibenzoselenophene group, an azadibenzogermole group, an azadibenzothiophene 5-oxide group, an aza-9H-fluoren-9-one group, an azadibenzothiophene 5,5-dioxide group, a pyridazine group, a triazine group, a phenanthroline group, a pyrazole group, an imidazole group, a triazole group, an oxazole group, an isooxazole group, a thiazole group, an isothiazole group, an oxadiazole group, a thiadiazole group, a benzopyrazole group, a benzoimidazole group, a benzooxazole group, a benzooxadiazole group, a 5,6,7,8-tetrahydroisoquinoline group, and a 5,6,7,8-tetrahydroquinoline group.

In the formula (La), R¹¹, R¹², and R¹³ correspond to substituents of Cy¹, Cy², and Cy³. R¹¹, R¹², and R¹³ may each independently be a group selected from the group consisting of an alkyl group having 1 to 24 carbon atoms, an alkoxy group having 1 to 24 carbon atoms, an alkylthio group having 1 to 24 carbon atoms, a cycloalkyl group having 3 to 24 carbon atoms, an alkenyl group having 2 to 24 carbon atoms, an alkynyl group having 2 to 24 carbon atoms, an aryl group having 6 to 24 carbon atoms, an aryloxy group having 6 to 24 carbon atoms, an arylthio group having 6 to 24 carbon atoms, a heteroaryl group having 3 to 24 carbon atoms (the heteroatom is one or more selected from the group consisting of oxygen, nitrogen, and sulfur; when there are a plurality of heteroatoms, they may be the same or different), an acyl group having 1 to 24 carbon atoms, an amino group having 0 to 24 carbon atoms, a halogen group, a cyano group, a nitro group, a hydroxyl group, a mercapto group, and a carboxyl group. The amino group having 0 carbon atoms is a primary amino group; the amino group having 1 carbon atom is a secondary amino group; the amino group having 2 or more carbon atoms is a secondary amino group, a tertiary amino group, or a quaternary amino group. When there a plurality of R¹¹, R¹², and R¹³, they may individually be the same or different. R¹¹, R¹², and R¹³ may have a substituent.

Examples of the alkyl group having 1 to 24 carbon atoms include a methyl group, an ethyl group, an n-propyl group, an isopropyl group, an n-butyl group, an isobutyl group, a tert-butyl group, a pentyl group, a hexyl group, and an octyl group.

Examples of the alkoxy group having 1 to 24 carbon atoms include a methoxy group, an ethoxy group, and a butoxy group.

Examples of the cycloalkyl group having 3 to 24 carbon atoms include a cyclopropyl group, a cyclobutyl group, a cyclopentyl group, and a cyclohexyl group.

Examples of the alkenyl group having 2 to 24 carbon atoms include an ethenyl group, a propenyl group, a butenyl group, a pentenyl group, a hexenyl group, and an octenyl group.

Examples of the alkynyl group having 2 to 24 carbon atoms include an ethynyl group, a propynyl group, a butynyl group, a pentynyl group, a hexynyl group, and an octynyl group.

Examples of the aryl group having 6 to 24 carbon atoms include a phenyl group, a naphthyl group, an anthracenyl group (or an anthracene group), a phenanthrenyl group (or a phenanthrene group), a biphenyl group, a group in which two or more phenyl groups are bonded together via a divalent linking group, a terphenyl group, a pyrenyl group (or a pyrene group), a perylenyl group (or a perylene group), a triphenylenyl group (or a triphenylene group), and a fluorenyl group.

The heteroaryl group having 3 to 24 carbon atoms may be a group the same as, in Cy¹, Cy², and Cy³ above, "a heterocyclic group having 1 to 20 carbon atoms (the heteroatom is one or more selected from the group consisting of oxygen, nitrogen, and sulfur; when there are a plurality of heteroatoms, they may be the same or different)".

In the formula (La), A¹¹, A¹², and A¹³ are groups corresponding to the linking groups that bond together Cy¹, Cy², and Cy³, which are bonded to the phosphorus atom, and the polymer chains. A¹¹, A¹², and A¹³ are each independently a group selected from the group consisting of a direct bond, an alkylene group having 1 to 24 carbon atoms, a cycloalkylene group having 3 to 24 carbon atoms, an alkenylene group having 1 to 24 carbon atoms, an alkynylene group having 1 to 24 carbon atoms, an arylene group having 6 to 24 carbon atoms, an aryleneoxy group having 6 to 24 carbon atoms, an arylene sulfide group having 6 to 24 carbon atoms, a heteroarylene group having 3 to 24 carbon atoms (the heteroatom is one or more selected from the group consisting of oxygen, nitrogen, and sulfur; when there are a plurality of heteroatoms, they may be the same or different), an ester group (-COO- or -OCO-), an ether group, a thioether group, an amide group, a urethane group, a carbonate group, and an amine group having 0 to 24 carbon atoms; two or more of the foregoing may be bonded together. When there are a plurality of A¹¹, A¹², and A¹³, they may be the same or different. A¹¹, A¹², and A¹³ may have a substituent. A¹¹, A¹², and A¹³ are preferably an ether group or an ester group.

In the formula (La), Poly¹¹, Poly¹², and Poly¹³ are each independently one or more polymer chains selected from the group consisting of polyether, polyamide, polyester, and polyurethane. When there are a plurality of Poly¹¹, Poly¹², and Poly¹³, they may be the same or different.

Of these, preferred are one or more polymer chains selected from the group consisting of polyether, polyamide, and polyester, and preferred are one or more selected from the group consisting of polyoxyalkylene, aliphatic polyamide, and aliphatic polyester. Particularly preferred are one or more selected from the group consisting of polyoxyethylene, polyoxypropylene, and polyoxybutylene. The most preferred is polyoxyethylene. Note that, when the compound has two or more polymer chains, they may be provided by random copolymerization, block copolymerization, or alternating copolymerization.

The number of repeating units of such a polymer chain can be, for example, 10 or more. When the number of repeating units is less than 10, characteristics of polymer chains may not be exhibited. The upper limit of the number of repeating units is not particularly limited, but can be, for example, 100,000 or less, preferably 10,000 or less, and more preferably 1,000 or less. When the number of repeating units is more than 100,000, the function of the ligand may degrade. The number-average molecular weight of the polymer chain can be a value of, for example, 200 or more, preferably 400 or more, and more preferably 500 or more, and can be a value of, for example, 10,000 or less, preferably 8,000 or less, and more preferably 5,000 or less.

In the formula (La), E¹¹, E¹², and E¹³ correspond to the end groups of the polymer chains. E¹¹, E¹², and E¹³ are each independently a group selected from the group consisting of an alkyl group having 1 to 24 carbon atoms, an alkoxy group having 1 to 24 carbon atoms, an alkylthio group having 1 to 24 carbon atoms, a cycloalkyl group having 3 to 24 carbon atoms, an alkenyl group having 2 to 24 carbon atoms, an alkynyl group having 2 to 24 carbon atoms, an aryl group having 6 to 24 carbon atoms, an aryloxy group having 6 to 24 carbon atoms, an arylthio group having 6 to 24 carbon atoms, a heteroaryl group having 3 to 24 carbon atoms (the heteroatom is one or more selected from the group consisting of oxygen, nitrogen, and sulfur; when there are a plurality of heteroatoms, they may be the same or different), an acyl group having 1 to 24 carbon atoms, an amino group having 1 to 24 carbon atoms, a halogen group, a cyano group, a nitro group, a hydroxyl group, a mercapto group, and a carboxyl group. When there a plurality of E¹¹, E¹², and E¹³, they may be the same or different. E¹¹, E¹², and E¹³ may have a substituent. For E¹¹, E¹², and E¹³, specific examples of the alkyl group, the alkoxy group, the cycloalkyl group, the alkenyl group, the alkynyl group, the aryl group, the heteroaryl group, and the like may be groups the same as those described above for R¹¹, R¹², and R¹³.

In the formula (La), p1, q1, r1, s1, t1, and u1 are each independently 0 or an integer of 1 or more and satisfy p1 + q1 + r1 ≥ 1. In addition, p1 + s1 is 0 or an integer of equal to or less than the number of substitutable positions in the Cy¹ group; q1 + t1 is 0 or an integer of equal to or less than the number of substitutable positions in the Cy² group; and r1 + u1 is 0 or an integer of equal to or less than the number of substitutable positions in the Cy³ group. Preferably, 2 ≥ p1 + q1 + r1 ≥ 1 and 4 ≥ s1 + t1 + u1 ≥ 0 are satisfied.

In the formula (La), for 1 or more of each of R¹¹, R¹², R¹³, A¹¹, A¹², and A¹³, two or more may be bonded together to form a carbon ring or a heterocycle. For example, two R¹¹ may be bonded together to form a ring; R¹¹ and A¹¹ may be bonded together to form a ring; or R¹¹ and R¹² may be bonded together to form a ring.

In the formula (La), a substituent of each group is a group selected from the group consisting of an alkyl group having 1 to 24 carbon atoms, an alkoxy group having 1 to 24 carbon atoms, an alkylthio group having 1 to 24 carbon atoms, a cycloalkyl group having 3 to 24 carbon atoms, an alkenyl group having 2 to 24 carbon atoms, an alkynyl group having 2 to 24 carbon atoms, an aryl group having 6 to 24 carbon atoms, an aryloxy group having 6 to 24 carbon atoms, an arylthio group having 6 to 24 carbon atoms, a heteroaryl group having 3 to 24 carbon atoms (the heteroatom is one or more selected from the group consisting of oxygen, nitrogen, and sulfur; when there are a plurality of heteroatoms, they may be the same or different), an acyl group having 1 to 24 carbon atoms, an amino group having 0 to 24 carbon atoms, a halogen group, a cyano group, a nitro group, a hydroxyl group, a mercapto group, and a carboxyl group; when there are a plurality of substituents, they may be the same or different. When there are a plurality of substituents, they may be the same or different. In the substituent, specific examples of the alkyl group, the alkoxy group, the cycloalkyl group, the alkenyl group, the alkynyl group, the aryl group, the heteroaryl group, and the like may be groups the same as those described above for R¹¹, R¹², and R¹³.

Note that these substituents do not lower the catalytic activity of the metallic compound in the mechanochemical reaction.

Examples of the compound represented by the formula (La) include compounds represented by the following (La1) to (La5) and compounds in which one or more alkyl groups having 1 to 6 carbon atoms are bonded to a ring of such a compound.

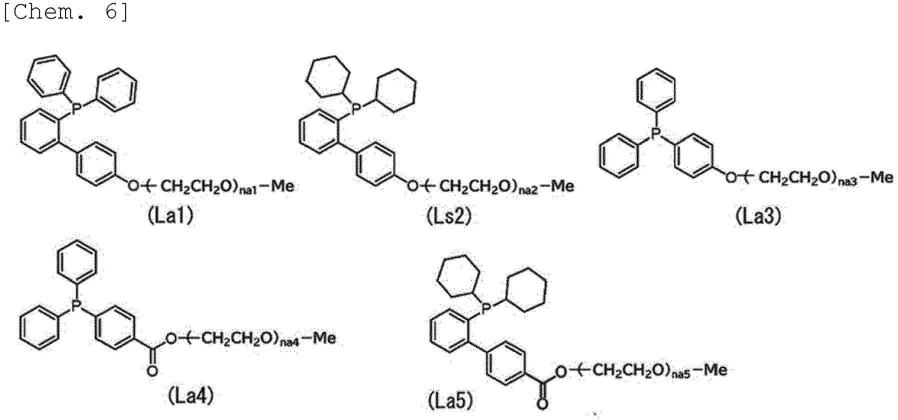

In the formulas (La1) to (La5), na1 to na5 are each independently the number of repeating units of the polyoxyethylene chain, for example, 1000 or less, preferably 500 or less, and more preferably 200 or less, and, for example, 10 or more, and preferably 15 or more.

### (Compound represented by formula (Lb))

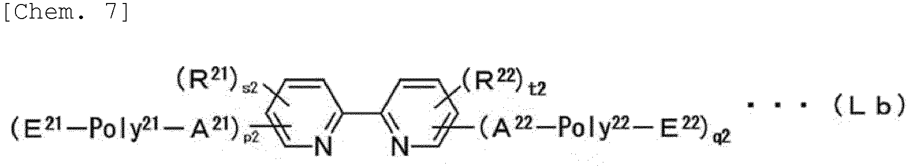

In the compound represented by the formula (La), one or more polymer chains selected from the group consisting of polyether, polyamide, polyester, and polyurethane are bonded to one or more bipyridine rings of the bipyridine compound. In the present invention, as the compound represented by the formula (Lb), a salt thereof may be used.

In the formula (Lb), R²¹ and R²² correspond to the substituents of bipyridine. When there are a plurality of R²¹ and R²², they may be the same or different. R²¹ and R²² may have a substituent. R²¹ and R²² are independently groups the same as those described above, in (Compound represented by formula (La)), for R¹¹, R¹², and R¹³.

In the formula (Lb), A²¹ and A²² are groups corresponding to linking groups bonding together the bipyridine moiety and the polymer chains. When there are a plurality of A²¹ and A²², they may be the same or different. A²¹ and A²² may have a substituent. A²¹ and A²² are independently groups the same as those described above, in (Compound represented by formula (La)), for A¹¹, A¹², and A¹³.

In the formula (Lb), Poly²¹ and Poly²² are each independently one or more polymer chains selected from the group consisting of polyether, polyamide, polyester, and polyurethane. When there are a plurality of Poly²¹ and Poly²², they may be the same or different. Poly²¹ and Poly²² are independently the same as those described above, in (Compound represented by formula (La)), for Poly¹¹, Poly¹², and Poly¹³.

In the formula (La), E²¹ and E²² correspond to the end groups of the polymer chains. When there are a plurality of E²¹ and E²², they may be the same or different. E²¹ and E²² may have a substituent. E²¹ and E²² are independently groups the same as those described above, in (Compound represented by formula (La)), for E¹¹, E¹², and E¹³.

In the formula (Lb), for one or more of each of R²¹, R²², A²¹, and A²², two or more may be bonded together to form a carbon ring or a heterocycle. For example, two R²¹ may be bonded together to form a ring; R²¹ and A²¹ may be bonded together to form a ring; or R²¹ and R²² may be bonded together to form a ring.

In the formula (Lb), each group may have a substituent. Such substituents are the same as those described above, in (Compound represented by formula (La)), for the substituent.

p2, q2, s2, and t2 are each independently 0 or an integer of 1 or more, and satisfy p2 + q2 ≥ 1, 4 ≥ p2 + s2 ≥ 0, and 4 ≥ q2 + t2 ≥ 0.

Examples of the compound represented by the formula (Lb) include compounds represented by the following (Lb1) to (Lb4) and compounds in which one or more alkyl groups having 1 to 6 carbon atoms are bonded to a ring of such a compound.

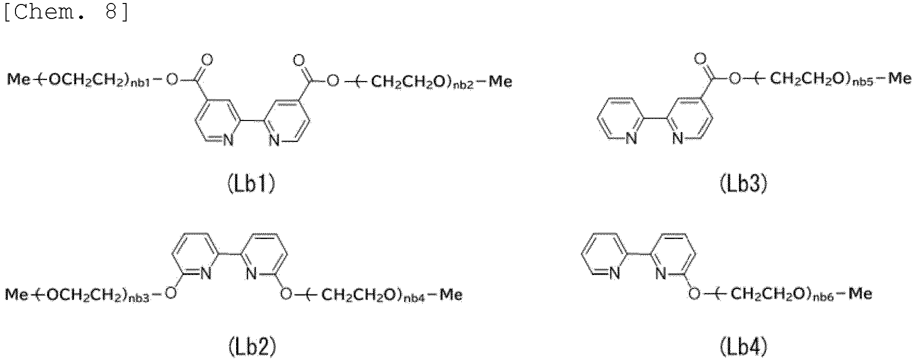

In the formulas (Lb1) to (Lb4), nb1 to nb6 are each independently the number of repeating units of the polyoxyethylene chain, can be, for example, 1000 or less, preferably 500 or less, and more preferably 200 or less, and can be, for example, 8 or more, preferably 10 or more, and more preferably 112 or more. nb1 to nb6 can be such values that the polyoxyethylene chains have a number-average molecular weight of, for example, 200 or more, preferably 400 or more, and more preferably 500 or more, and can be such values that the polyoxyethylene chains have a number-average molecular weight of, for example, 10,000 or less, preferably 8,000 or less, and more preferably 5,000 or less.

### (Compound represented by formula (Lc))

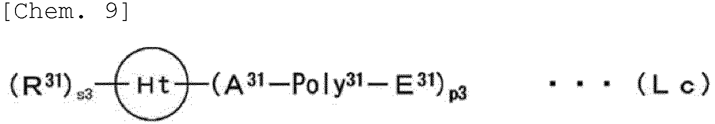

In the compound represented by the formula (Lc), one or more polymer chains selected from the group consisting of polyether, polyamide, polyester, and polyurethane are bonded to an N-heterocyclic carbene ligand compound. In the present invention, as the compound represented by the formula (Lc), a salt thereof may be used.

In the formula (Lb), Ht is a group represented by any one of the following formulas (Ht1) to (Ht10).

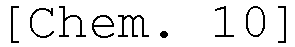

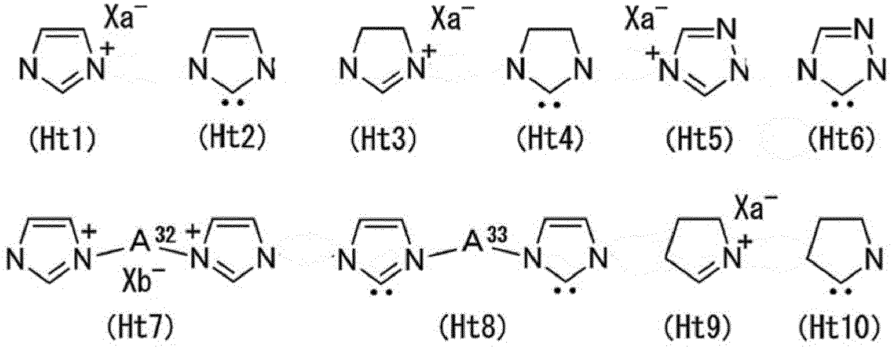

Xa⁻ is a monovalent anion, and Xb⁻ is a divalent anion or two monovalent anions.

Examples of the monovalent anion include F-, Cl-, Br-, I⁻, NO₃⁻, CH₃COO⁻, OH⁻, and BF₄⁻. Examples of the divalent anion include SO₄²- and CO₃²-. When two or more monovalent anions are included, they may be the same or different.

In (Ht7), A³² is a group selected from the group consisting of a direct bond, an alkylene group having 1 to 24 carbon atoms, a cycloalkylene group having 3 to 24 carbon atoms, an alkenylene group having 1 to 24 carbon atoms, an alkynylene group having 1 to 24 carbon atoms, an arylene group having 6 to 24 carbon atoms, an aryleneoxy group having 2 to 24 carbon atoms, a heteroarylene group having 3 to 24 carbon atoms (the heteroatom is one or more selected from the group consisting of oxygen, nitrogen, and sulfur; when there are a plurality of heteroatoms, they may be the same or different), an ester group (-COO- or -OCO-), an ether group, a thioether group, an amide group, a urethane group, a carbonate group, and an amine group having 0 to 24 carbon atoms; two or more of the foregoing may be bonded together. When there are a plurality of A³², they may be the same or different.

In the formula (Lc), R³¹ corresponds to a substituent of the N-heterocyclic carbene. When there are a plurality of R³¹, they may be the same or different. R³¹ may have a substituent. R³¹ are independently groups the same as those described above, in (Compound represented by formula (La)), for R¹¹, R¹², and R¹³.

In the formula (Lc), A³¹ is a group corresponding to a linking group that bonds together the N-heterocyclic carbene moiety and the polymer chain. When there are a plurality of A³¹, they may be the same or different. A³¹ may have a substituent.

In the formula (Lc), A³¹ is a group the same as the groups described above, in (Compound represented by formula (La)), for A¹¹, A¹², and A¹³.

In the formula (Lc), Poly³¹ are each independently one or more polymer chains selected from the group consisting of polyether, polyamide, polyester, and polyurethane. When there are a plurality of Poly³¹, they may be the same or different. Poly³¹ is the same as those described above, in (Compound represented by formula (La)), for Poly¹¹, Poly¹², and Poly¹³.

In the formula (Lc), E³¹ corresponds to the end group of the polymer chain. When there are a plurality of E³¹, they may be the same or different. E³¹ may have a substituent. E³¹ is a group the same as the groups described above, in (Compound represented by formula (La)), for E¹¹, E¹², and E¹³.

In the formula (Lc), for one or more of each of R³¹ and A³¹, two or more may be bonded together to form a carbon ring or a heterocycle. For example, two R³¹ may be bonded together to form a ring; R³¹ and A³¹ may be bonded together to form a ring; or two A³¹ may be bonded together to form a ring.

In the formula (Lc), the groups may have a substituent. Such substituents are the same as those described above, in (Compound represented by formula (La)), for substituents.

In the formula (Lc), p3 is an integer of 1 or more, and s3 is 0 or an integer of 1 or more. In addition, p3 + s3 is an integer of equal to or less than the number of substitutable positions in the Ht group.

Examples of the compound represented by the formula (Lc) include compounds represented by the following (Lc1) to (Lc14), and compounds in which one or more alkyl groups having 1 to 6 carbon atoms are bonded to a ring of such a compound.

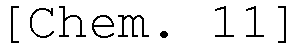

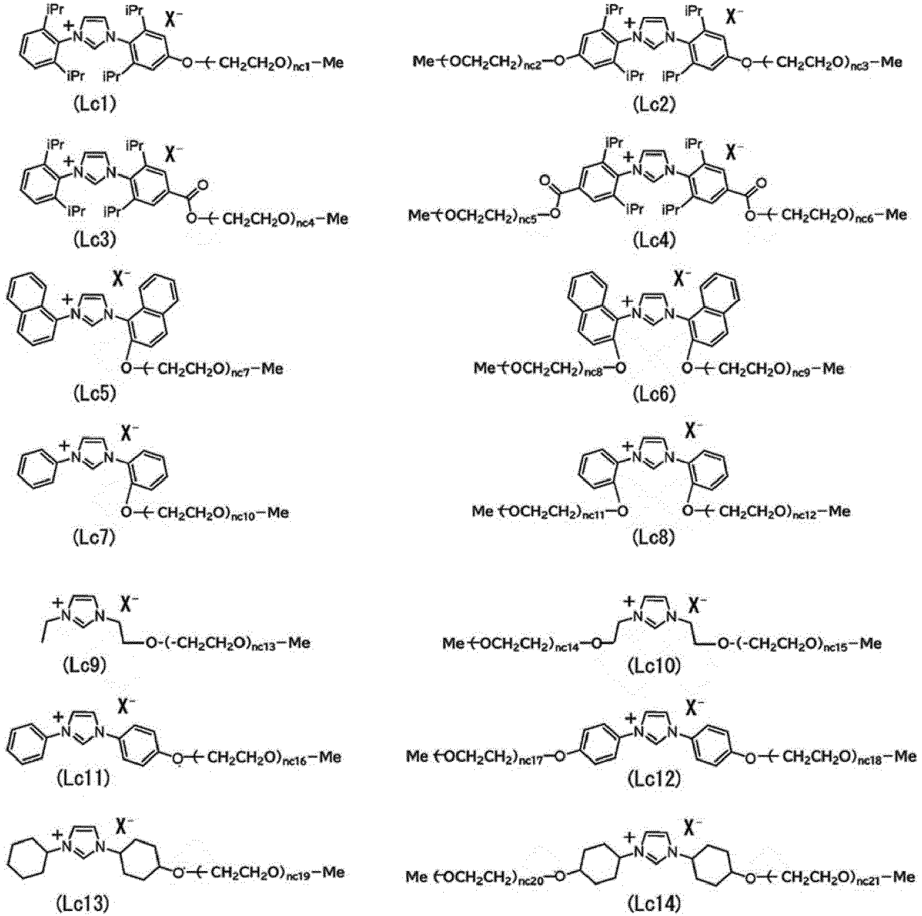

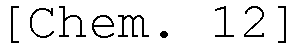

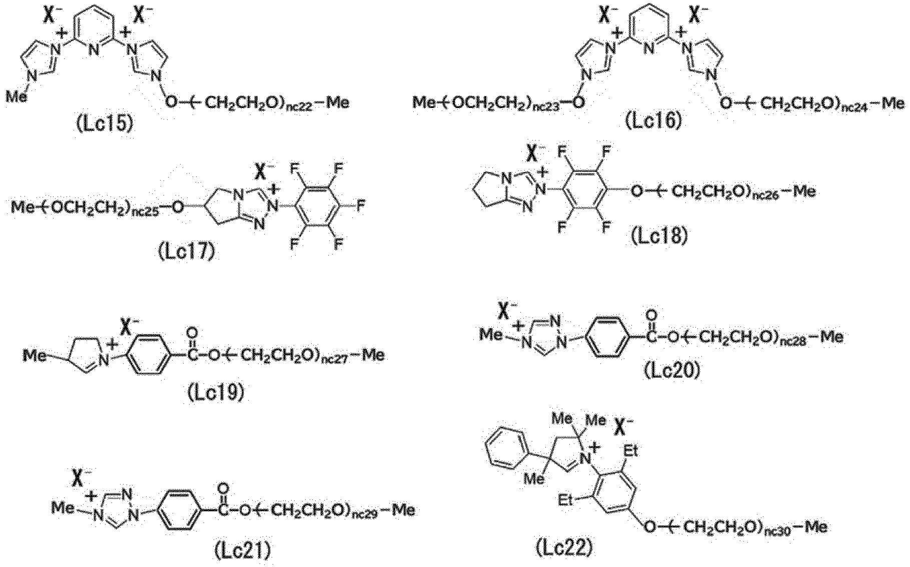

In the formulas (Lc1) to (Lc22), nc1 to nc30 are each independently the number of repeating units of the polyoxyethylene chain, can be, for example, 1000 or less, preferably 500 or less, and more preferably 200 or less, and can be, for example, 10 or more, and preferably 15 or more. nc1 to nc30 can each independently be a value of, for example, 200 or more, preferably 400 or more, and more preferably 500 or more, and can be a value of, for example, 10,000 or less, preferably 8,000 or less, and more preferably 5,000 or less. Note that Me is a methyl group; iPr is an isopropyl group; X⁻ is a monovalent anion and is, for example, F-, Cl-, Br-, I-, or BF₄-.

A ligand compound (Lx) according to the present invention may have the form of a salt thereof. The means for conversion to the form of a salt is not particularly limited and can be performed on the basis of a well-known technique or the like in the organic chemistry field. Preferred examples of the salt include inorganic acid salts such as hydrochloric acid salt, sulfuric acid salt, nitric acid salt, and phosphoric acid salt; organic acid salts such as acetic acid salt, fumaric acid salt, maleic acid salt, oxalic acid salt, methanesulfonic acid salt, benzenesulfonic acid salt, and p-toluenesulfonic acid salt; inorganic salts of sodium, potassium, lithium, calcium, or magnesium; and salts formed with an organic base such as trometamol, arginine, lysine, diethanolamine, triethanolamine, or trimethylamine.

### <Metallic compound>

A metallic compound included in a mechanochemical-reaction additive according to the present invention, for example, a metallic compound included in a mechanochemical-reaction additive used in a Suzuki-Miyaura cross-coupling reaction is not particularly limited as long as it catalyzes (accelerates) the reaction of the substrate. In a mechanochemical-reaction additive according to the present invention, the metallic compound exhibits, together with the ligand compound (Lx), functions of metallic catalysts.

The metal (element) constituting the metallic compound may be, as long as it can catalyze (accelerate) the reaction of the substrate, a transition metal (element) or a typical metal (element), and is not particularly limited.

The transition metal (element) is, for example, one or more selected from the group consisting of scandium, titanium, vanadium, chromium, manganese, iron, cobalt, nickel, copper, zinc, yttrium, zirconium, niobium, molybdenum, technetium, ruthenium, rhodium, palladium, silver, cadmium, hafnium, tantalum, tungsten, rhenium, osmium, iridium, platinum, gold, and the like.

The typical metal (element) is, for example, one or more selected from the group consisting of aluminum, gallium, germanium, indium, tin, antimony, thallium, lead, and bismuth.

In the present invention, from the viewpoint of catalytic activity and the like, examples include the transition metals (elements) belonging to the fourth period to the sixth period. For example, preferred is one or more selected from the group consisting of titanium, vanadium, manganese, iron, cobalt, nickel, copper, zinc, molybdenum, ruthenium, rhodium, palladium, silver, tantalum, tungsten, rhenium, osmium, iridium, platinum, and gold; more preferred is one or more selected from the group consisting of palladium, nickel, iron, ruthenium, platinum, rhodium, iridium, and cobalt; and more preferred is one or more selected from the group consisting of palladium, nickel, iron, and copper.

The metallic compound can be selected from metallic compounds having various forms and is, for example, one or more selected from the group consisting of the following (1) to (4) and the like:
(1) powdery or porous, elemental metals;
(2) elemental metals or metallic compounds supported on supports of alumina, carbon, silica, zeolite, or the like;
(3) metallic salts (chlorides, bromides, iodides, nitrates, sulfates, carbonates, oxalates, acetates, oxides, and the like); and
(4) complex compounds of a metal and a complex (olefin complex, phosphine complex, amine complex, ammine complex, acetylacetonate complex, or the like).

In the present invention, the metallic compound is particularly preferably a palladium compound (palladium catalyst).

The palladium compound (palladium catalyst) is, for example, one or more selected from the group consisting of divalent palladium compounds such as palladium(II) acetate, palladium(II) chloride, palladium(II) bromide, palladium(II) iodide, palladium(II) acetylacetonate, dichlorobis(benzonitrile)palladium(II), bis(dibenzylideneacetone)palladium, dichlorobis(acetonitrile)palladium(II), dichlorobis(triphenylphosphine)palladium(II), dichlorotetraamminepalladium(II), dichloro(cycloocta-1,5-diene)palladium(II), dichlorobis(tricyclohexylphosphine)palladium(II), and palladium(II) trifluoroacetate; 0-valent palladium compounds such as tris(dibenzylideneacetone)dipalladium(0), tris(dibenzylideneacetone)dipalladium(0) chloroform complex, and tetrakis(triphenylphosphine)palladium(0); and the like.

Such metallic compounds can be used alone or in combination of two or more thereof.

For the metallic compounds, commercially available products with or without being further purified can be used.

The content of the metallic compound is not particularly limited as long as, with the amount of use, the mechanochemical reaction such as a Suzuki-Miyaura cross-coupling reaction proceeds upon addition of the mechanochemical-reaction additive to the reaction system, and can be appropriately determined in accordance with the types or amounts of the ligand compound (Lx) or salt thereof, the metallic compound, the substrate, optionally used base and unsaturated hydrocarbon compound, the reaction product, and the like, the reaction temperature, and the like.

The amount of the metallic compound used can be, for example, on the basis (100%) of the number of moles provided by multiplying the amount of moles of the compound (H) having a leaving group in the substrate by the valence number, 0.05 mol% or more, preferably 0.1 mol% or more, more preferably 0.5 mol% or more, and still more preferably 1.0 mol% or more; the upper limit value is not particularly limited, but can be 25 mol% or less, preferably 20 mol% or less, more preferably 15 mol% or less, and still more preferably 10 mol% or less.

### <Complex>

For a complex included in a mechanochemical-reaction additive according to the present invention, such as a complex included in a mechanochemical-reaction additive used in a Suzuki-Miyaura cross-coupling reaction, a complex including at least the ligand compound (Lx) or salt thereof and a metallic atom is included; the ligand compound (Lx) is one or more of a phosphorus-based compound, a bipyridinebased compound, and an N-heterocyclic carbene-based compound; the ligand compound (Lx) intramolecularly has a polymer chain; and the polymer chain is one or more of polyether, polyamide, polyester, and polyurethane.

The ligand compound (Lx) or salt thereof constituting the complex may be the ligand compound (Lx) or salt thereof described above in <Ligand compound (Lx) or salt thereof> of [Mechanochemical-reaction additive], and is preferably the ligand compound represented by the formula (La), (Lb), or (Lc) .

The metallic atom constituting the complex may be the metallic atom constituting the metallic compound described above in <Metallic compound> of [Mechanochemical-reaction additive], is preferably a transition metal atom, preferably palladium, silver, copper, gold, ruthenium, iron, or nickel, and particularly preferably palladium, silver, copper, gold, or ruthenium.

The complex can be obtained by mixing together at least the ligand compound (Lx) or salt thereof and a metallic compound supplying the metallic atom, to cause a reaction. During the reaction, heating or the like can be performed as needed.

The reaction amount ratio of the ligand compound (Lx) or salt thereof to the metallic compound is not particularly limited. The reaction amount ratio of the ligand compound (Lx) or salt thereof can be adjusted in accordance with the valence of the metallic atom in the complex.

### <Other component>

A mechanochemical-reaction additive according to the present invention may include a component other than the ligand compound (Lx) or salt thereof, the metallic compound included as needed, and the complex including the ligand compound (Lx) or salt thereof and the metallic atom, namely, "other component".

Examples of the other component include a ligand compound or salt thereof other than the ligand compound (Lx) or salt thereof, a complex including a ligand compound or salt thereof other than the ligand compound (Lx) or salt thereof and a metallic atom, a base, an unsaturated hydrocarbon compound, a reaction accelerator, and a solvent.

The ligand compound or salt thereof other than the ligand compound (Lx) is, for example, one or more selected from the group consisting of arylphosphines such as triphenylphosphine, tri(o-tolyl)phosphine, and tri(mesityl)phosphine; alkylphosphines such as tri(cyclohexyl)phosphine, tri(isopropyl)phosphine, and tri(tert-butyl)phosphine; Buchwald phosphine ligands such as 2-dicyclohexylphosphino-2',6'-dimethoxybiphenyl (SPhos), 2-dicyclohexylphosphino-2'-(N,N-dimethylamino)biphenyl (DavePhos), 2-(di-tert-butylphosphino)-2',4',6'-triisopropyl-3,6-dimethoxy-1,1'-biphenyl (tBuBrettPhos), 2-dicyclohexylphosphino-2',6'-diisopropoxybiphenyl, 2-dicyclohexylphosphino-2'-methylbiphenyl, 2-dicyclohexylphosphino-2',4',6'-triisopropylbiphenyl, 2-(di-tert-butylphosphino)-2',4',6'-triisopropylbiphenyl, 2-dicyclohexylphosphino-3,6-dimethoxy-2',4',6'-triisopropylbiphenyl, 2-(dicyclohexylphosphino)biphenyl, and 2-(di-tert-butylphosphino)-2'-(N,N-dimethylamino)biphenyl; bidentate phosphines such as 1,2-bis(diphenylphosphino)ethane, 1,2-bis(diphenylphosphino)propane, 1,2-bis(dicyclohexylphosphino)ethane, 1,2-bis(diphenylphosphino)butane, and 1,2-bis(diphenylphosphino)ferrocene; N-heterocarbene ligands such as 1,3-bis(2,6-diisopropylphenyl)-4,5-dihydro-1H-imidazolium chloride, 1,3-bis(2,6-diisopropylphenyl)imidazolium chloride, and 1,3-bis(2,4,6-trimethylphenyl)-4,5-dihydro-1H-imidazolium chloride; and trialkylphosphonium tetrafluoroborates such as t-Bu₃P·HBF₄ (tri-tert-butylphosphonium tetrafluoroborate).

The complex including the ligand compound or salt thereof other than the ligand compound (Lx) or salt thereof and a metallic atom may be a complex including the ligand compound or salt thereof other than the ligand compound (Lx) or salt thereof and the above-described metallic atom.

For the base, the unsaturated hydrocarbon compound, the reaction accelerator, and the solvent, for example, compounds and the like and amounts of use described in <Base>, <Unsaturated hydrocarbon compound>, <Reaction accelerator>, and <Solvent> of [Mechanochemical-reaction method] described later are employed.

### [Mechanochemical-reaction method]

A mechanochemical-reaction method according to the present invention is a method including using at least [Mechanochemical-reaction additive] described above to cause a substrate to react. In a mechanochemical-reaction method according to the present invention, a reaction accelerator or the like can be additionally used.

### <Mechanochemical-reaction additive>

A mechanochemical-reaction additive used in a mechanochemical-reaction method according to the present invention includes at least the ligand compound (Lx) or salt thereof and further includes a metallic compound.

A mechanochemical-reaction additive used in another mechanochemical-reaction method according to the present invention includes a complex at least including a ligand or salt and a metallic atom.

As the mechanochemical-reaction additive used in a mechanochemical-reaction method according to the present invention, the additive described above in [Mechanochemical-reaction additive] is used.

The ligand compound (Lx) or salt thereof included in the mechanochemical-reaction additive may be the ligand compound (Lx) or salt thereof described above in <Ligand compound (Lx) or salt thereof> of [Mechanochemical-reaction additive], and is preferably the ligand compound represented by the formula (La), (Lb), or (Lc).

The metallic compound included in the mechanochemical-reaction additive may be the metallic compound described above in <Metallic compound> of [Mechanochemical-reaction additive], is preferably a transition metal compound, and is preferably a palladium compound.

The complex included in the mechanochemical-reaction additive is preferably a complex including the ligand compound represented by the formula (La), (Lb), or (Lc) described above in <Ligand compound (Lx) or salt thereof> of [Mechanochemical-reaction additive], and a transition metal atom. The transition metal atom is preferably palladium, silver, copper, gold, ruthenium, iron, or nickel, and particularly preferably palladium, silver, copper, gold, or ruthenium.

The amount of the mechanochemical-reaction additive used is not particularly limited as long as, with the amount of the ligand compound (Lx) or the ligand compound (Lx) in the complex in the mechanochemical-reaction additive, the mechanochemical reaction such as a Suzuki-Miyaura cross-coupling reaction proceeds. The amount can be appropriately determined in accordance with the types and amounts of the substrate, the metallic compound, optionally used base and unsaturated hydrocarbon compound, and the reaction product, the reaction temperature, and the like.

The amount of the mechanochemical-reaction additive used can be set such that, for example, the amount of the ligand compound (Lx) used in the reaction system satisfies a molar ratio of the ligand compound (Lx) to the metallic compound (ligand compound (Lx)/metallic compound) of 10/1 to 1/10, preferably 5/1 to 1/5, more preferably 3/1 to 1/3, and still more preferably 2/1 to 1/2.

### <Metallic compound>

In a mechanochemical-reaction method according to the present invention such as a Suzuki-Miyaura cross-coupling reaction method, a metallic compound that can catalyze (accelerate) the reaction of the substrate can be used. The metallic compound exhibits, together with the ligand compound (Lx) or salt thereof, functions of metallic catalysts.

As the metallic compound, the same metallic compound as described above in <Metallic compound> of [Mechanochemical-reaction additive] can be used.

In a mechanochemical-reaction method according to the present invention, as the metallic compound, a palladium compound (palladium catalyst) is particularly preferably used.

The metallic compound may be included in the mechanochemical-reaction additive, or may be used separately from the mechanochemical-reaction additive.

The metallic compound and the ligand compound (Lx) or salt thereof may be separately added to the reaction system to cause the mechanochemical reaction. Alternatively, both of them may be mixed together to undergo a reaction in advance. In the case of using, as the ligand compound (Lx) or salt thereof, an N-heterocyclic carbene-based ligand compound or salt thereof, it is preferably mixed with the metallic compound in advance to undergo a reaction.

The amount of the metallic compound used is not particularly limited as long as, with the amount of use, the mechanochemical reaction such as a Suzuki-Miyaura cross-coupling reaction proceeds, and can be appropriately determined in accordance with the types and amounts of the ligand compound (Lx) or salt thereof, the metallic compound, the substrate, optionally used base and unsaturated hydrocarbon compound, the reaction product, and the like, the reaction temperature, and the like.

The amount of the metallic compound used can be, for example, on the basis (100%) of the number of moles provided by multiplying the amount of moles of the compound having a leaving group in the substrate by the valence number, 0.05 mol% or more, preferably 0.1 mol% or more, more preferably 0.5 mol% or more, and still more preferably 1.0 mol% or more; the upper limit value is not particularly limited, but can be 25 mol% or less, preferably 20 mol% or less, more preferably 15 mol% or less, and still more preferably 10 mol% or less.

### <Substrate>

A substrate used in a mechanochemical-reaction method according to the present invention is a compound (H) having a leaving group and a compound (B) that reacts with an organic compound having a leaving group. The compound (H) and the compound (B) are each an organic compound that is solid at room temperature (25°C) and have a melting point of 30°C or more, preferably 40°C or more, more preferably 50°C or more, still more preferably 60°C or more, and most preferably 80°C or more.

The compound (H) and the compound (B) are not particularly limited as long as they individually have predetermined melting points and react with each other. Examples of the compound (H) and the compound (B) include compounds described later individually. Alternatively, the compound (H) and the compound (B) may be the same.

The amount of the compound (B) used is appropriately adjusted in accordance with the equivalent ratio of the compound (H) to the compound (B). The equivalent ratio of the compound (H) to the compound (B) (compound (H)/compound (B)) is not particularly limited as long as the reaction proceeds in the equivalent ratio. For example, the equivalent ratio is 10/1 to 1/10, preferably 5/1 to 1/5, more preferably 3/1 to 1/3, and still more preferably 2/1 to 1/2.

### (Compound (H))

The compound (H) used in a mechanochemical-reaction method according to the present invention may be a compound represented by the following formula (H1).

A⁴⁰⁰-Xₘ (H1)

(in the formula, A⁴⁰⁰ represents any one of an m-valent aromatic hydrocarbon group that may have a substituent, an m-valent aromatic heterocyclic group that may have a substituent, an m-valent aliphatic hydrocarbon group that may have a substituent, and an m-valent unsaturated aliphatic hydrocarbon group that may have a substituent.

X each independently represent a leaving group.

m represents the number of X and an integer of 1 or more.)

The compound (H) is not particularly limited as long as it reacts with the compound (B) to generate a reaction product (for example, undergoes a cross-coupling reaction to generate, for example, a cross-coupling reaction product in which any one or more of a C-B bond, a C-C bond, a C-N bond, a C-O bond, and a C-S bond are formed).

Such compounds (H) can be used alone or in combination of two or more thereof.

As the compound (H), commercially available products with or without being further purified can be used.

{A⁴⁰⁰ group in formula (H) }

In A⁴⁰⁰, the number of carbon atoms of the m-valent aromatic hydrocarbon group that may have a substituent is not particularly limited, and is, for example, 6 to 60, preferably 6 to 40, and more preferably 6 to 30.

In the m-valent aromatic hydrocarbon group, m is an integer of 1 or more, for example, 1 to 10, preferably 1 to 6, and more preferably 1 to 4.

In A⁴⁰⁰, for the m-valent aromatic hydrocarbon group that may have a substituent, examples of the monovalent aromatic hydrocarbon group in which m = 1 include a phenyl group, a naphthyl group, an anthracenyl group (or an anthracene group), a phenanthrenyl group (or a phenanthrene group), a biphenyl group, a terphenyl group, a pyrenyl group (or a pyrene group), a perylenyl group (or a perylene group), a triphenylenyl group (or a triphenylene group), and a fluorenyl group.

In A⁴⁰⁰, for the m-valent aromatic hydrocarbon group that may have a substituent, the m-valent aromatic hydrocarbon group in which m is an integer of 2 or more is, for example, a group in which m - 1 hydrogens are removed from the aromatic ring of the monovalent aromatic hydrocarbon group.

In A⁴⁰⁰, the number of carbon atoms of the m-valent aromatic heterocyclic group that may have a substituent is not particularly limited, and is, for example, 4 to 60, preferably 4 to 40, and more preferably 4 to 30.

In A⁴⁰⁰, in the m-valent aromatic heterocyclic group, m is an integer of 1 or more, and is, for example, 1 to 10, preferably 1 to 6, and more preferably 1 to 4.

In A⁴⁰⁰, in the m-valent aromatic heterocyclic group that may have a substituent, examples of the monovalent aromatic heterocyclic group in which m = 1 include sulfurcontaining heteroaryl groups such as a thiophenyl group (a thiophene group or a thienyl group), a thienylenyl group (or a thiophenediyl group), a benzothienyl group (a benzothiophene group), a dibenzothienyl group (a dibenzothiophene group), a phenyldibenzothienylenyl group, and a dibenzothienylenylphenyl group; oxygen-containing heteroaryl groups such as a furanyl group (or a furan group), a benzofuranyl group (a benzofuran group), a dibenzofuranyl group (a dibenzofuran group), a phenyldibenzofuranyl group, and a dibenzofuranylphenyl group; nitrogen-containing heteroaryl groups such as a pyridyl group (or a pyridine group), a pyridylenyl group (or a pyridinediyl group), a pyrimidinyl group (or a pyrimidine group), a pyrazyl group (or a pyrazine group), a quinolyl group (or a quinoline group), an isoquinolyl group (or an isoquinoline group), a carbazolyl group (or a carbazole group), a 9-phenylcarbazolyl group, an acridinyl group (or an acridine group), a quinazolyl group (or a quinazoline group), a quinoxalyl group (or a quinoxaline group), a 1,6-naphthyridinyl group, a 1,8-naphthyridinyl group, and a porphyrin group (or a porphyrin ring); and heteroaryl groups including two or more heteroatoms M (for example, nitrogen and sulfur) such as a benzothiazolyl group (or a benzothiazole group) and a benzothiadiazole group. Other examples include a pyrrole group, a silole group, a borole group, a phosphole group, a selenophene group, a germole group, an indole group, an indene group, a benzosilole group, a benzoborole group, a benzophosphole group, a benzoselenophene group, a benzogermole group, a dibenzosilole group, a dibenzoborole group, a dibenzophosphole group, a dibenzoselenophene group, a dibenzogermole group, a dibenzothiophene 5-oxide group, a 9H-fluoren-9-one group, a dibenzothiophene 5,5-dioxide group, an azabenzothiophene group, an azabenzofuran group, an azaindole group, an azaindene group, an azabenzosilole group, an azabenzoborole group, an azabenzophosphole group, an azabenzoselenophene group, an azabenzogermole group, an azadibenzothiophene group, an azadibenzofuran group, an azacarbazole group, an azafluorene group, an azadibenzosilole group, an azadibenzoborole group, an azadibenzophosphole group, an azadibenzoselenophene group, an azadibenzogermole group, an azadibenzothiophene 5-oxide group, an aza-9H-fluoren-9-one group, an azadibenzothiophene 5,5-dioxide group, a pyridazine group, a triazine group, a phenanthroline group, a pyrazole group, an imidazole group, a triazole group, an oxazole group, an isooxazole group, a thiazole group, an isothiazole group, an oxadiazole group, a thiadiazole group, a benzopyrazole group, a benzoimidazole group, a benzooxazole group, a benzooxadiazole group, a 5,6,7,8-tetrahydroisoquinoline group, and a 5,6,7,8-tetrahydroquinoline group.

In A⁴⁰⁰, in the m-valent aromatic heterocyclic group that may have a substituent, the m-valent aromatic heterocyclic group in which m is an integer of 2 or more is, for example, a group in which m - 1 hydrogens are removed from the aromatic ring in the monovalent aromatic heterocyclic group, or a benzo[1,2-c:4,5-c']bis[1,2,5]thiadiazole skeleton (benzobisthiadiazole group) or the like.

In A⁴⁰⁰, the number of carbon atoms of the m-valent aliphatic hydrocarbon group that may have a substituent is not particularly limited, and is, for example, 2 to 60, preferably 3 to 40, and more preferably 5 to 30.

In A⁴⁰⁰, in the m-valent aliphatic hydrocarbon group, m is an integer of 1 or more, for example, 1 to 10, preferably 1 to 6, and more preferably 1 to 4.

In A⁴⁰⁰, in the m-valent aliphatic hydrocarbon group that may have a substituent, examples of the monovalent aliphatic hydrocarbon group in which m = 1 include saturated aliphatic hydrocarbon groups such as alkyl groups and cycloolefin groups.

In A⁴⁰⁰, in the m-valent aliphatic hydrocarbon group that may have a substituent, the m-valent aliphatic hydrocarbon group in which m is an integer of 2 or more is, for example, a group in which m - 1 hydrogens are removed from the monovalent aliphatic hydrocarbon group.

In A⁴⁰⁰, the number of carbon atoms of the m-valent unsaturated aliphatic hydrocarbon group that may have a substituent is not particularly limited, and is, for example, 2 to 60, preferably 3 to 40, and more preferably 5 to 30.

In A⁴⁰⁰, in the m-valent unsaturated aliphatic hydrocarbon group, m is an integer of 1 or more, for example, 1 to 10, preferably 1 to 6, and more preferably 1 to 4.

In A⁴⁰⁰, in the m-valent unsaturated aliphatic hydrocarbon group that may have a substituent, examples of the monovalent aromatic hydrocarbon group in which m = 1 include alkenyl groups and alkynyl groups.

In A⁴⁰⁰, in the m-valent unsaturated aliphatic hydrocarbon group that may have a substituent, the m-valent unsaturated aliphatic hydrocarbon group in which m is an integer of 2 or more is, for example, a group in which m - 1 hydrogens are removed from the monovalent unsaturated aliphatic hydrocarbon group.

In the compound (H), specific examples of A⁴⁰⁰ in the formula (H1) include the following groups:
naphthyl groups such as a naphthyl group, aryl (such as phenyl) naphthyl groups, naphthyl groups having an alkylene (such as ethylene) bridge, and naphthyl groups having an arylene (such as phenylene) bridge;
a phenanthrenyl group;
anthracenyl groups such as an anthracenyl group, aryl (such as phenyl) anthracenyl groups, diaryl (such as dinaphthyl) anthracenyl groups, and diarylboryl (such as bis(trialkylphenyl)boryl) anthracenyl groups;
pyrenyl groups such as a pyrenyl group and alkyl (such as tert-butyl) pyrenyl groups;
biphenyl groups such as a biphenyl group and biphenyl groups having an alkylene (such as propylene or isopropylene) bridge;
terphenyl groups such as a terphenyl group and tetraaryl (such as tetraphenyl) terphenyl groups;
a triphenylenyl group;
phenyl groups such as 2-aryl (such as phenyl) ethenylphenyl groups, 1,2,2-triaryl (such as triphenyl) ethenylphenyl groups, 2-aryl (such as phenyl) ethynylphenyl groups, a phenyl group, alkyl (such as methyl) phenyl groups, dialkyl (such as dimethyl) phenyl groups, alkoxy (such as methoxy) phenyl groups, dialkylamino (such as dimethylamino) phenyl groups, diaryl (such as diphenyl) aminophenyl groups, perfluoroalkyl (such as trifluoromethyl) phenyl groups, alkyl (such as ethyl) oxycarbonylphenyl groups, and alkanoyl (such as acyl) phenyl groups;
aryl (such as phenyl) substituted carbazolyl groups;
an anthracene-9.10-dione group;
aryl (such as phenyl) substituted thienyl groups, a thiophene group, and a benzothiadiazole group;
a thiophene group and a benzothiadiazole group, and
di- or higher valent groups such as a phenylene group, aryl (such as bis(3,5-methylphenyl)) porphyrin rings, a pyren-tetra-yl group, and a benzo[1,2-c:4,5-c']bis[1,2,5]thiadiazole skeleton (benzobisthiadiazole group) .

In A⁴⁰⁰, for the m-valent aromatic hydrocarbon group that may have a substituent, the m-valent aromatic heterocyclic group that may have a substituent, the m-valent aliphatic hydrocarbon group that may have a substituent, and the m-valent unsaturated aliphatic hydrocarbon group that may have a substituent, the substituent that such a group may have is not particularly limited as long as a target reaction of the present invention (such as a cross-coupling reaction) can be performed.

The substituent is, for example, one or more selected from the group consisting of alkyl groups having 1 to 24, preferably 1 to 18, more preferably 1 to 12, and still more preferably 1 to 8 carbon atoms (such as a methyl group, an ethyl group, an n-propyl group, an isopropyl group, an n-butyl group, an isobutyl group, a tert-butyl group, a pentyl group, a hexyl group, and an octyl group); alkoxy groups having 1 to 24, preferably 1 to 18, more preferably 1 to 12, and still more preferably 1 to 8 carbon atoms (such as a methoxy group, an ethoxy group, an n-propoxy group, an isopropoxy group, an n-butoxy group, an isobutoxy group, a tert-butoxy group, a pentyloxy group, a hexyloxy group, and an octyloxy group); cycloalkyl groups having 3 to 24, preferably 3 to 18, more preferably 3 to 12, and still more preferably 3 to 8 carbon atoms (such as a cyclopropyloxy group, a cyclobutyloxy group, a cyclopentyloxy group, and a cyclohexyloxy group); alkenyl groups having 1 to 24, preferably 1 to 18, more preferably 1 to 12, and still more preferably 1 to 8 carbon atoms (such as an ethenyl group, a propenyl group, a butenyl group, a pentenyl group, a hexenyl group, and an octenyl group); alkynyl groups having 1 to 24, preferably 1 to 18, more preferably 1 to 12, and still more preferably 1 to 8 carbon atoms (such as an ethynyl group, a propynyl group, a butynyl group, a pentynyl group, a hexynyl group, and an octynyl group); aryl groups having 5 to 24, preferably 5 to 18, more preferably 5 to 12, and still more preferably 5 to 8 carbon atoms (such as a phenyl group, a naphthyl group, and a biphenyl group); arylalkyl groups having 7 to 24, preferably 7 to 19, more preferably 7 to 13, and still more preferably 7 to 9 carbon atoms (such as a monophenylmethyl group, a monophenylpropyl group, and a triphenylmethyl group); aryloxy groups having 5 to 24, preferably 5 to 18, more preferably 5 to 12, and still more preferably 5 to 8 carbon atoms (such as a phenoxy group, a naphthyloxy group, and a biphenyloxy group); heteroaryl groups having 4 to 24, preferably 4 to 18, more preferably 4 to 12, and still more preferably 4 to 8 carbon atoms (such as a thiophenyl group, a furanyl group, a carbazole group, a benzothiophenyl group, a benzofuranyl group, an indolyl group, a pyrrolyl group, and a pyridyl group); acyl groups having 1 to 24, preferably 1 to 18, more preferably 1 to 12, and still more preferably 1 to 8 carbon atoms (such as an acetyl group, a propionyl group, a butanoyl group, a pentanoyl group, a heptanoyl group, and groups in which the carbonyl group included in such an acyl group is substituted with an ester group or an amide group); amino groups having 1 to 24, preferably 1 to 18, more preferably 1 to 12, and still more preferably 1 to 8 carbon atoms (such as a diphenylamino group and a dimethylamino group); fluorine and fluorine-containing groups such as fluorine-containing hydrocarbon groups having 1 to 30 and preferably 1 to 12 carbon atoms; a cyano group, a nitro group, and the like.

Substituents may be crosslinked together or substituents as a whole may form a cyclic structure (aromatic group). Substituents may further have a substituent.

### {Leaving group in formula (H1)}

The leaving group of the compound (H) used in a reaction method according to the present invention is a leaving group ordinarily used in a chemical reaction (such as a cross-coupling reaction) and is not particularly limited as long as, with the leaving group, a predetermined reaction of the present invention (such as a cross-coupling reaction) can be performed.

The leaving group is, for example, a group selected from the group consisting of chloro, bromo, iodo, diazonium salt, trifluoromethane sulfonate, carboxylic acid derivatives, and the like, preferably a group selected from the group consisting of chloro, bromo, iodo, diazonium salt, and trifluoromethane sulfonate, and more preferably a group selected from the group consisting of chloro, bromo, and iodo.

The compound (I) can have a plurality of leaving groups. In this case, the plurality of leaving groups may be the same or different.

In the present invention, the number m of leaving groups is not particularly limited as long as it is an integer in a range in which a reaction (such as a cross-coupling reaction) can be performed. The number m can be, for example, 1 to 10, preferably 1 to 8, more preferably 1 to 6, and still more preferably 1 to 4.

### {Specific example of compound (H)}

A specific example of the compound (H) used in a mechanochemical-reaction method according to the present invention such as a Suzuki-Miyaura cross-coupling reaction method, is, for example, one or more selected from the group consisting of aromatic halides such as compounds (H1) to (H13) used in Examples 201 to 234.

### (Compound (B))

Examples of the compound (B) used in a mechanochemical-reaction method according to the present invention include compounds represented by the following formulas (B1) and/or (B2) .

### {Compound (B1)}

The compound (B1) is represented by the following formula.

A⁵⁰⁰-Yₙ (B1)

(in the formula, A⁵⁰⁰ represents an n-valent aromatic hydrocarbon group that may have a substituent, an n-valent aromatic heterocyclic group that may have a substituent, an n-valent aliphatic hydrocarbon group that may have a substituent, or an n-valent unsaturated aliphatic hydrocarbon group that may have a substituent.

n represents the number of Y and an integer of 1 or more.

Y each independently represent,

-B(OR⁵⁰¹) (OR⁵⁰²),

-NHR⁵⁰³,

-R⁵⁰⁴-OH, or

-R⁵⁰⁵-SH.

R⁵⁰¹ and R⁵⁰² each independently represent hydrogen, a monovalent aromatic hydrocarbon group that may have a substituent, or a monovalent aliphatic hydrocarbon group that may have a substituent. R⁵⁰¹ and R⁵⁰² may be bonded together.

R⁵⁰³ each independently represent hydrogen, a monovalent aromatic hydrocarbon group that may have a substituent, a monovalent aromatic heterocyclic group that may have a substituent, a monovalent aliphatic hydrocarbon group that may have a substituent, or a monovalent unsaturated aliphatic hydrocarbon group that may have a substituent. R⁵⁰⁴ and R⁵⁰⁵ each independently represent a single bond, a divalent aromatic hydrocarbon group that may have a substituent, or a divalent aliphatic hydrocarbon group that may have a substituent.)

The compound represented by the formula (B1) is not particularly limited as long as the compound reacts with the compound (H) to generate a reaction product (for example, undergoes a cross-coupling reaction to generate a cross-coupling reaction product in which one or more of a C-B bond, a C-C bond, a C-N bond, a C-O bond, and a C-S bond are formed).

### -A⁵⁰² group in formula (B1)-

In the formula (B1), in the A⁵⁰² group, the n-valent aromatic hydrocarbon group that may have a substituent, the n-valent aromatic heterocyclic group that may have a substituent, the n-valent aliphatic hydrocarbon group that may have a substituent, or the n-valent unsaturated aliphatic hydrocarbon group that may have a substituent can be respectively a group the same as, in the A⁵⁰¹ group in the formula (H1) relating to the compound (H), the m-valent aromatic hydrocarbon group that may have a substituent, the m-valent aromatic heterocyclic group that may have a substituent, the m-valent aliphatic hydrocarbon group that may have a substituent, or the m-valent unsaturated aliphatic hydrocarbon group that may have a substituent.

In the formula (B1), in the A⁵⁰² group, the substituent can be the same as the substituent in the A⁴⁰⁰ group in the formula (H1) relating to the compound (H).

Note that the A⁵⁰² group in the formula (B1) and the A⁴⁰⁰ group in the formula (H1) relating to the compound (H) are each independently a group having an appropriate structure and such groups may be the same or different.

### -Compound represented by formula (B1) and having, as Y, - B (OR⁵⁰¹) (OR⁵⁰²)-

The compound represented by the formula (B1) and having, as Y, -B(OR⁵⁰¹) (OR⁵⁰²) may be an aromatic boronic acid or an aromatic boronic acid ester. The aromatic boronic acid or aromatic boronic acid ester is not particularly limited as long as it reacts with the compound (H) (for example, undergoes a cross-coupling reaction) to provide a reaction product in which a C-C bond is formed.

The aromatic boronic acid ester includes aromatic boronic acid alkyl esters, aromatic boronic acid alkylene glycol esters, aromatic boronic acid aryl esters, and aromatic boronic acid arylene glycol esters.

In the formula (B1), in the -B(OR⁵⁰¹) (OR⁵⁰²) group, R⁵⁰¹ and R⁵⁰² each independently represent hydrogen, a monovalent aromatic hydrocarbon group that may have a substituent, or a monovalent aliphatic hydrocarbon group that may have a substituent. R⁵⁰¹ and R⁵⁰² may be bonded together.

In this case, the monovalent aromatic hydrocarbon group that may have a substituent and the monovalent aliphatic hydrocarbon group that may have a substituent can be groups the same as, in the A⁴⁰⁰ group in the formula (H1) relating to the compound (H), the m-valent aromatic hydrocarbon group that may have a substituent and the m-valent aliphatic hydrocarbon group that may have a substituent.

Note that R⁵⁰¹ and R⁵⁰² in the -B(OR⁵⁰¹) (OR⁵⁰²) group in the formula (B1) and A⁴⁰⁰ in the formula (H1) relating to the compound (H) are groups independent from each other and may be the same or different.

The group in which R⁵⁰¹ and R⁵⁰² are bonded together is a group in which R⁵⁰¹ and R⁵⁰² together form a cyclic structure. In the case of an aromatic group, it is, for example, a 1,2-phenylene group. Alternatively, in the case of a hydrocarbon group, it is, for example, for example, an ethylene group, a 1,1,2,2-tetramethylethylene group (a pinacolato group), a neopentyl glycolate group, or a propylene group.

Such aromatic boronic acids or aromatic boronic acid esters that are compounds represented by the formula (B1) can be used alone or in combination of two or more thereof.

For the aromatic boronic acid or aromatic boronic acid ester that is a compound represented by the formula (B1), commercially available products with or without being further purified can be used.

### -Compound represented by formula (B1) and having, as Y, - NHR⁵⁰³-

The compound represented by the formula (B1) and having, as Y, -NHR⁵⁰³ may be an aromatic amino compound. The aromatic amino compound is not particularly limited as long as it reacts with the compound (I) (such as a cross-coupling reaction) to provide a product in which a C-N bond is formed.

In the formula (B1), in the -NHR⁵⁰³ group, the R⁵⁰³ group each independently represent hydrogen, a monovalent aromatic hydrocarbon group that may have a substituent, a monovalent aromatic heterocyclic group that may have a substituent, a monovalent aliphatic hydrocarbon group that may have a substituent, or a monovalent unsaturated aliphatic hydrocarbon group that may have a substituent.

In this case, the monovalent aromatic hydrocarbon group that may have a substituent, the monovalent aromatic heterocyclic group that may have a substituent, the monovalent aliphatic hydrocarbon group that may have a substituent, or the monovalent unsaturated aliphatic hydrocarbon group that may have a substituent can be a group the same as, in the A⁴⁰⁰ group in the formula (I) relating to the compound (I), the m-valent aromatic hydrocarbon group that may have a substituent, the m-valent aromatic heterocyclic group that may have a substituent, the m-valent aliphatic hydrocarbon group that may have a substituent, or the m-valent unsaturated aliphatic hydrocarbon group that may have a substituent.

Such aromatic amino compounds that are compounds represented by the formula (B1) can be used alone or in combination of two or more thereof.

For the aromatic amino compound that is a compound represented by the formula (B1), commercially available products with or without being further purified can be used.

### -Compound represented by formula (B1) and having, as Y, - R⁵⁰⁴-OH-

In the present invention, the compound represented by the formula (B1) and having, as Y, -R⁵⁰⁴-OH may be an aromatic compound having a hydroxy group. The aromatic compound having a hydroxy group is not particularly limited as long as it reacts with the compound (H) (such as a cross-coupling reaction) to provide a product in which a C-O bond is formed.

In the formula (B1), in the -R⁵⁰⁴-OH group, the R⁵⁰⁴ group each independently represent a single bond, a divalent aromatic hydrocarbon group that may have a substituent, or a divalent aliphatic hydrocarbon group that may have a substituent. Note that, when R⁵⁰⁴ is a single bond, the hydroxy group is directly bonded to A⁵⁰².

In this case, the divalent aromatic hydrocarbon group that may have a substituent or the divalent aliphatic hydrocarbon group that may have a substituent can be a group the same as, in the A⁴⁰⁰ group in the formula (H1) relating to the compound (H), the divalent group in the m-valent aromatic hydrocarbon group that may have a substituent or the m-valent aliphatic hydrocarbon group that may have a substituent.

Note that the R⁵⁰⁴ group in the -R⁵⁰⁴-OH group in the formula (B1) and the A⁵⁰² group in the formula (B1) are groups independent from each other and may be the same or different.

Such aromatic compounds having a hydroxy group that are compounds represented by the formula (B1) can be used alone or in combination of two or more thereof.

For the aromatic compound having a hydroxy group that is a compound represented by the formula (B1), commercially available products with or without being further purified can be used.

### -Compound represented by formula (B1) and having, as Y, - R⁵⁰⁵-SH-

In the present invention, the compound represented by the formula (B1) and having, as Y, -R⁵⁰⁵-SH may be an aromatic compound having a thiol group. The aromatic compound having a thiol group is not particularly limited as long as it reacts with the compound (H) (such as a cross-coupling reaction) to provide a product in which a C-S bond is formed.

In the formula (B1), in the -R⁵⁰⁵-SH group, the R⁵⁰⁵ group each independently represent a single bond, a divalent aromatic hydrocarbon group that may have a substituent, or a divalent aliphatic hydrocarbon group that may have a substituent. Note that, when R⁵⁰⁵ is a single bond, the thiol group is directly bonded to A⁵⁰².

In this case, the divalent aromatic hydrocarbon group that may have a substituent or the divalent aliphatic hydrocarbon group that may have a substituent can be a group the same as, in the A⁴⁰⁰ group in the formula (H1) relating to the compound (H), the divalent group in the m-valent aromatic hydrocarbon group that may have a substituent or the m-valent aliphatic hydrocarbon group that may have a substituent.

Note that the R⁵⁰⁵ group in the -R⁵⁰⁴-SH group in the formula (B1) and the A⁵⁰² group in the formula (B1) are groups independent from each other and may be the same or different.

Such aromatic compounds having a thiol group that are compounds represented by the formula (B1) can be used alone or in combination of two or more thereof.

For the aromatic compound having a thiol group that is a compound represented by the formula (B1), commercially available products with or without being further purified can be used.

### {Compound (B2)}

The compound (B2) is represented by the following formula.

(R⁶⁰¹O) (R⁶⁰²O)B-B(OR⁶⁰³) (OR⁶⁰⁴) (B2)

(in the formula, R⁶⁰¹ to R⁶⁰⁴ each independently represent hydrogen, a monovalent aromatic hydrocarbon group that may have a substituent, or a monovalent aliphatic hydrocarbon group that may have a substituent. R⁶⁰¹ and R⁶⁰² may be bonded together, and R⁶⁰³ and R⁶⁰⁴ may be bonded together.)

The compound (B2) is not particularly limited as long as it reacts with the compound (H) (such as a cross-coupling reaction) to generate a reaction product in which a C-B bond is formed.

The compound represented by the formula (B2) may be one or more selected from the group consisting of a diboronic acid ester (a diboronic acid tetraester, a diboronic acid triester, a diboronic acid diester, or a diboronic acid monoester) and diboronic acid.

The diboronic acid ester is, for example, one or more selected from the group consisting of a diboronic acid alkyl ester, a diboronic acid alkylene glycol ester, a diboronic acid aryl ester, a diboronic acid arylene glycol ester, and the like. The diboronic acid is, for example, tetrahydroxydiborane (Tetrahydroxydiborane).

In the formula (B2), for R⁶⁰¹ to R⁶⁰⁴, the monovalent aromatic hydrocarbon groups that may have a substituent are, for example, each independently one or more groups selected from the group consisting of a phenyl group, a naphthyl group, a biphenyl group, and the like.

In the formula (B2), for R⁶⁰¹ to R⁶⁰⁴, the monovalent aliphatic hydrocarbon groups that may have a substituent are, for example, each independently one or more selected from the group consisting of a methyl group, an ethyl group, a propyl group, an isopropyl group, a butyl group, an isobutyl group, a tert-butyl group, and the like.

When R⁶⁰¹ to R⁶⁰⁴ in the formula (B2) are monovalent aliphatic hydrocarbon groups that may have a substituent, R⁶⁰¹ and R⁶⁰², and R⁶⁰³ and R⁶⁰⁴ may be bonded together. For example, R⁶⁰¹-R⁶⁰² and R⁶⁰³-R⁶⁰⁴ may each be independently, for example, one or more groups selected from the group consisting of an ethylene group, a 1,1,2,2-tetramethylethylene group, a 2,2-dimethylpropylene group, a hexylene group (or a 1,1,3-trimethylpropylene group), and the like.

In R⁶⁰¹ to R⁶⁰⁴ above, the substituents that the aromatic hydrocarbon group and the aliphatic hydrocarbon group may have and the number of the substituents are not particularly limited as long as the substituents do not inhibit the reaction (such as a cross-coupling reaction). The substituents are, for example, each independently one or more groups selected from the group consisting of an alkyl group, an aryl group, an alkoxy group, an aryloxy group, and the like; for such a substituent, the aromatic hydrocarbon group and the aliphatic hydrocarbon group can have one or more substituents. Such substituents may be crosslinked together, and may further have a substituent.

In the compound represented by the formula (B2), the diboronic acid ester is more specifically, for example, one or more selected from the group consisting of: bis(pinacolato)diboron (Bis(pinacolato)diboron), bis(neopentylglycolato)diboron (Bis(neopentylGlycolate)diboron), bis(hexyleneglycolato)diboron (Bis(hexyleneGlycolato)diboron), bis(catecholato)diboron (Bis(catecholato)diboron), and the like.

Such compounds represented by the formula (B2) can be used alone or in combination of two or more thereof.

For the compound represented by the formula (B2), commercially available products with or without being further purified can be used.

### (Amount of compound (B) used and the like)

The amount of the compound (B) used is appropriately adjusted in accordance with the equivalent ratio of the compound (H) to the compound (B). The equivalent ratio of the compound (H) to the compound (B) (compound (H)/compound (B)) is not particularly limited as long as the reaction (such as a cross-coupling reaction) proceeds in the equivalent ratio. For example, the equivalent ratio is 10/1 to 1/10, preferably 5/1 to 1/5, more preferably 3/1 to 1/3, and still more preferably 2/1 to 1/2.

In the present invention, such compounds (B) can be used alone or in combination of two or more thereof.

For example, compounds represented by the formula (B1) can be used alone or in combination of two or more thereof. Alternatively, one or more compounds represented by the formula (B1) and one or more compounds represented by the formula (B2) can be used in combination.

For the compound (B), commercially available products with or without being further purified can be used.

### <Base>

In a mechanochemical-reaction method according to the present invention, in addition to the ligand compound (Lx) or salt thereof, the metallic compound, the substrate (the compound (H) and the compound (B)), a base can be used as needed.

The base is not particularly limited as long as it can accelerate the mechanochemical reaction (such as a Suzuki-Miyaura cross-coupling reaction).

The base does not include compounds corresponding to the ligand compound (Lx) or salt thereof, the metallic compound, or the substrate (the compound (H) and the compound (B)).

The base is, for example, one or more selected from the group consisting of inorganic bases such as sodium hydroxide, potassium hydroxide, sodium carbonate, sodium hydrogen carbonate, potassium carbonate, potassium hydrogen carbonate, rubidium carbonate, cesium carbonate, potassium phosphate, sodium phosphate, potassium fluoride, and cesium fluoride; alkali metal hydrides such as sodium hydride and potassium hydride; alkali metal alkoxides such as sodiummethoxide, sodium-ethoxide, potassium-methoxide, potassium-methoxide, potassium-ethoxide, lithium-tert-butoxide, sodium-tert-butoxide, and potassium-tert-butoxide; organic bases such as tertiary amine bases such as triethylamine, tributylamine, dimethylpropylamine, dimethylbutylamine, dimethylcyclohexylamine, dimethylbenzylamine, diisopropylmethylamine, diisopropylethylamine, pyridine, diazabicycloundecene (1,8-diazabicyclo[5.4.0]undec-7-ene), diazabicyclononene (1,5-diazabicyclo[4.3.0]non-5-ene), 1,4-diazabicyclo[2.2.2]octane, N-ethylmorpholine, N,N,N',N'-tetramethylethylenediamine, N,N,N',N'-tetramethylpropylenediamine, N,N,N',N'-tetramethylhexanediamine, bis(dimethylaminoethyl) ether, N,N',N'-trimethylaminoethylpiperazine, and N,N,N',N'',N"-pentamethyldiethylenetriamine; and the like.

Such bases can be used alone or in combination of two or more thereof.

For the base, commercially available products with or without being further purified can be used.

The amount of the base used is not particularly limited as long as, with the amount of use, the mechanochemical reaction (such as a Suzuki-Miyaura cross-coupling reaction) proceeds, and can be appropriately determined in accordance with the types and amounts of the ligand compound (Lx) or salt thereof, the metallic compound, the substrate (the compound (H) and the compound (B)), a base, an optionally used unsaturated hydrocarbon compound, the reaction product, and the like, the reaction temperature, and the like.

The amount of the base used can be, for example, relative to 1 equivalent of the compound (H), 0.5 equivalents or more, preferably 0.8 equivalents or more, more preferably 1.0 equivalent or more, still more preferably 1.2 equivalents or more, and most preferably 1.4 equivalents or more. The upper limit of the amount of the base used is not particularly limited, but can be, for example, 10.0 equivalents or less, preferably 5.0 equivalents or less, more preferably 4.0 equivalents or less, and still more preferably 3.0 equivalents or less.

### <Unsaturated hydrocarbon compound>

In a mechanochemical-reaction method according to the present invention, in addition to the ligand compound (Lx) or salt thereof, the metallic compound, the substrate (the compound (H) and the compound (B)), and a base, an unsaturated hydrocarbon compound can be used as needed. The unsaturated hydrocarbon compound is a chain and/or cyclic compound intramolecularly having at least one carbon-carbon unsaturated double bond or at least one carbon-carbon unsaturated triple bond.

The unsaturated hydrocarbon compound is not particularly limited as long as it can accelerate the mechanochemical reaction (such as a Suzuki-Miyaura cross-coupling reaction).

The unsaturated hydrocarbon compound does not include, for example, aromatic compounds such as benzene and naphthalene. In addition, the unsaturated hydrocarbon compound does not include compounds corresponding to the ligand compound (Lx) or salt thereof, the metallic compound, the substrate, or the base.

The number of carbon atoms of the unsaturated hydrocarbon compound is, for example, 5 to 24, preferably 5 to 18, more preferably 5 to 12, still more preferably 6 to 10, and most preferably 6 to 8.

An unsaturated hydrocarbon compound having a carbon-carbon unsaturated double bond is, for example, one or more selected from the group consisting of hexene, heptene, octene, nonene, decene, and the like.

An unsaturated hydrocarbon compound having a carbon-carbon unsaturated double bond is, for example, one or more selected from the group consisting of cyclohexene, cycloheptene, cyclooctene, cyclodecene, and the like.

An unsaturated hydrocarbon compound having two carbon-carbon unsaturated double bonds is, for example, one or more selected from the group consisting of hexadiene, heptadiene, octadiene, nonadiene, decadiene, and the like.

An unsaturated hydrocarbon compound having two carbon-carbon unsaturated double bonds is, for example, one or more selected from the group consisting of cyclohexadiene, cycloheptadiene, cyclooctadiene, cyclodecadiene, and the like.

An unsaturated hydrocarbon compound having a carbon-carbon unsaturated triple bond is, for example, one or more selected from the group consisting of hexyne, heptyne, octyne, decyne, and the like.

A cyclic compound (4) having a carbon-carbon unsaturated triple bond is, for example, one or more selected from the group consisting of cyclooctyne, cyclodecyne, and the like.

Such unsaturated hydrocarbon compounds can be used alone or in combination of two or more thereof.

For the unsaturated hydrocarbon compound, commercially available products with or without being further purified can be used.

In the case of using an unsaturated hydrocarbon compound, the amount of use is not particularly limited as long as, with the amount of use, the mechanochemical reaction (such as a Suzuki-Miyaura cross-coupling reaction) proceeds. The amount can be appropriately determined in accordance with, for example, the types and amounts of the ligand compound (Lx) or salt thereof, the metallic compound, the substrate (the compound (H) and the compound (B)), the base, the unsaturated hydrocarbon compound, the reaction product, and the like, the reaction temperature, and the like.

In the case of using an unsaturated hydrocarbon compound, the amount of use relative to the total mass of all the raw materials (such as the ligand compound (Lx) or salt thereof, the metallic compound, the compound (H), the compound (B), and the base) added in order to perform the mechanochemical reaction (such as a Suzuki-Miyaura cross-coupling reaction) can be, for example, 0.01 µL/mg or more, preferably 0.05 µL/mg or more, and more preferably 0.10 µL/mg or more, and, for example, 3.0 µL/mg or less, preferably 1.0 µL/mg or less, and more preferably 0.50 µL/mg or less.

In a reaction method according to the present invention, use of an unsaturated hydrocarbon compound can markedly improve the reaction activity, though dependent on the types or usage amounts of the ligand compound (Lx) or salt thereof, the metallic compound, and the substrate (the compound (H) and the compound (B)), compared with the case of not using unsaturated hydrocarbon compounds.

This is inferred by the inventors of the present invention as follows.

In the case of performing a solid phase reaction by a mechanochemical reaction (for example, for example, a Suzuki-Miyaura cross-coupling reaction) under substantially solventless conditions, it is often difficult to perform dispersion of the ligand compound (Lx) or salt thereof, the metallic compound, the substrate (the compound (H) and the compound (B)), the base, and the reaction product, in particular, efficient dispersion of the metallic compound, so that the cross-coupling reaction may be less likely to proceed.

The inventors of the present invention used a transmission electron microscope to observe the postreaction metallic compound, and have found that use of an unsaturated hydrocarbon compound can suppress aggregation of the metallic compound and can efficiently disperse the metallic compound.

The unsaturated hydrocarbon compound inferentially contributes to suppression of aggregation of the metallic compound and contributes to improvement in the reaction activity, and a reaction method according to the present invention (such as a cross-coupling reaction method) provides marked advantages, which are inferred by the inventors of the present invention. However, the present invention is not limited at all by such inference.

### <Reaction accelerator>

In a mechanochemical-reaction method according to the present invention, in addition to the ligand compound (Lx) or salt thereof, the metallic compound, the substrate (the compound (H) and the compound (B)), a base, and the unsaturated hydrocarbon compound, a reaction accelerator can be used as needed.

The reaction accelerator employed can be components known as reaction accelerators in various reactions performed in mechanochemical-reaction methods (such as a Suzuki-Miyaura cross-coupling reaction). The reaction accelerator does not include compounds corresponding to the ligand compound (Lx) or salt thereof, the metallic compound, the substrate, the base, or unsaturated hydrocarbon compounds.

Of these, water (such as pure water or ion-exchanged water) and/or an organic solvent is preferably used. Note that the amount of the organic solvent used relative to 1 mmol of the total amount of the compound (H) and the compound (B) is less than 0.7 mL.

The amount of the reaction accelerator used is not particularly limited as long as, with the amount of use, the mechanochemical reaction (such as a cross-coupling reaction) proceeds. For example, the amount can be appropriately determined in accordance with the types and amounts of the ligand compound (Lx) or salt thereof, the metallic compound, the substrate (the compound (H) and the compound (B)), the base, the unsaturated hydrocarbon compound, the reaction product, and the like, the reaction temperature, and the like. The amount of the accelerator used can be, for example, relative to the equivalent of the compound (1), 20.0 equivalents or less, preferably 10.0 equivalents or less, and more preferably 9.0 equivalents or less. The lower limit of the amount of use is not particularly defined, but can be, for example, 0.5 equivalents or more, preferably 0.8 equivalents or more, more preferably 1.0 equivalent or more, still more preferably 1.2 equivalents or more, and most preferably 1.4 equivalents or more.

<Solvent>

In a mechanochemical-reaction method according to the present invention, in addition to the ligand compound (Lx) or salt thereof, the metallic compound, the substrate (the compound (H) and the compound (B)), the base, the unsaturated hydrocarbon compound, and the reaction accelerator, a solvent can be used. In a mechanochemical-reaction method according to the present invention (such as a Suzuki-Miyaura cross-coupling reaction method), the amount of organic solvent present relative to 1 mmol of the total amount of the compound (H) and the compound (B) is 0.7 mL or less. Such a condition is regarded as a condition of substantially not using organic solvents. Note that, in the present invention, the condition of substantially not using organic solvents refers to any one of an embodiment in which organic solvents are not used at all, an embodiment in which solvents are not actively used, and an embodiment in which an organic solvent is used, but is used in such a very small amount that the solvent effect is not exhibited.

In the present invention, the amount of organic solvent present relative to 1 mmol of the total amount of the substrate (the compound (H) and the compound (B)) is 0.7 mL or less. The amount is ordinarily 0.5 mL or less, preferably 0.2 mL or less, more preferably 0.1 mL or less, still more preferably 0.05 mL or less, most preferably 0.02 mL or less, and still most preferably 0 mL (without use of organic solvents).

For example, in an ordinary cross-coupling reaction, 1 to 2 mL of an organic solvent is used relative to 1 mmol of the total amount of the reaction raw materials. In the present invention, the amount of organic solvent used is small and hence, for the reaction raw materials, ordinarily, at the start of the reaction, at least a portion of the substrate does not dissolve in the organic solvent and the like. In some cases, the substrate as a whole does not dissolve in the organic solvent and the like and can be present in a solid state.

In the present invention, the organic solvent that may be present in an amount of 0.7 mL or less relative to 1 mmol of the total amount of the substrate (the compound (H) and the compound (B)) may be organic solvents used in reactions (such as a cross-coupling reaction).

Such an organic solvent is, for example, one or more selected from the group consisting of aromatic-based solvents such as benzene, toluene, xylene, mesitylene durene, and decalin; ether-based solvents such as diethyl ether, diisopropyl ether, dibutyl ether, tetrahydrofuran, dimethoxyethane, 1,4-dioxane, and cyclopentyl methyl ether; alcohol-based solvents such as methanol, ethanol, n-propanol, 2-propanol, 1-butanol, 1,1-dimethylethanol, tertbutanol, 2-methoxyethanol, and ethylene glycol; halogenated hydrocarbon-based solvents such as dichloromethane, chloroform, carbon tetrachloride, chlorobenzene, and 1,2-dichlorobenzene; polar solvents such as acetonitrile, N,N-dimethylformamide, N,N'-dimethylacetamide, N-methyl-2-pyrrolidone, and dimethyl sulfoxide; ketone-based solvents such as acetone and methyl ethyl ketone; pyridine, acetic acid, and the like. In particular, preferred is one or more selected from the group consisting of benzene, toluene, xylene, chlorobenzene, diethyl ether, dibutyl ether, cyclopentyl methyl ether, tetrahydrofuran, 1,4-dioxane, dichloromethane, chloroform, acetone, acetonitrile, N,N-dimethylformamide, methanol, ethanol, 2-propanol, tertbutanol, dimethyl sulfoxide, and the like.

### <Other component>

In a mechanochemical-reaction method according to the present invention, in addition to the ligand compound (Lx) or salt thereof, the metallic compound, the substrate (the compound (H) and the compound (B)), the reaction accelerator, the base, the unsaturated hydrocarbon compound, and the solvent, various components can be used. Such a component is, for example, a ligand compound not having the predetermined polymer chains. This ligand compound may be used in combination with one or more of the formulas (La), (Lb), and (Lc). The ligand compound other than the ligand compound (Lx) is, for example, one or more selected from the group consisting of arylphosphines such as triphenylphosphine, tri(o-tolyl)phosphine, and tri(mesityl)phosphine; alkylphosphines such as tri(cyclohexyl)phosphine, tri(isopropyl)phosphine, and tri(tert-butyl)phosphine; Buchwald phosphine ligands such as 2-dicyclohexylphosphino-2',6'-dimethoxybiphenyl (SPhos), 2-dicyclohexylphosphino-2'-(N,N-dimethylamino)biphenyl (DavePhos), 2-(di-tert-butylphosphino)-2',4',6'-triisopropyl-3,6-dimethoxy-1,1'-biphenyl (tBuBrettPhos), 2-dicyclohexylphosphino-2',6'-diisopropoxybiphenyl, 2-dicyclohexylphosphino-2'-methylbiphenyl, 2-dicyclohexylphosphino-2',4',6'-triisopropylbiphenyl, 2-(ditert-butylphosphino)-2',4',6'-triisopropylbiphenyl, 2-dicyclohexylphosphino-3,6-dimethoxy-2',4',6'-triisopropylbiphenyl, 2-(dicyclohexylphosphino)biphenyl, and 2-(di-tert-butylphosphino)-2'-(N,N-dimethylamino)biphenyl; bidentate phosphines such as 1,2-bis(diphenylphosphino)ethane, 1,2-bis(diphenylphosphino)propane, 1,2-bis(dicyclohexylphosphino)ethane, 1,2-bis(diphenylphosphino)butane, and 1,2-bis(diphenylphosphino)ferrocene; N-heterocarbene-based ligands such as 1,3-bis(2,6-diisopropylphenyl)-4,5-dihydro-1H-imidazolium chloride, 1,3-bis(2,6-diisopropylphenyl)imidazolium chloride, and 1,3-bis(2,4,6-trimethylphenyl)-4,5-dihydro-1H-imidazolium chloride; and trialkylphosphonium tetrafluoroborates such as t-Bu₃P·HBF₄ (tri-tert-butylphosphonium tetrafluoroborate).

### <Applications of mechanochemical-reaction method>

A mechanochemical-reaction method according to the present invention can be applied to one or more reactions selected from the group consisting of a coupling reaction, an alkylation reaction, a halogenation reaction, a hydrolysis reaction, an oxidation reaction, a reduction reaction, a metalation reaction, a radical reaction, a metathesis reaction, and a cycloaddition reaction. Of these, the coupling reaction is, for example, a homocoupling reaction or a cross-coupling reaction, and is, for example, a cross-coupling reaction that forms one or more chemical bonds selected from the group consisting of a C-N bond, a C-B bond, a C-C bond, a C-O bond, and a C-S bond. In particular, the method is suitably applied to a Suzuki-Miyaura cross-coupling reaction.

### <Reaction conditions>

A mechanochemical-reaction method according to the present invention is an organic synthesis reaction method in which components are brought into direct contact with each other and mixed together to undergo a reaction without use of organic solvents, and the method has a low environmental load, but has high reaction activity. For example, a means such as mixing, milling, shearing, impacting, or compression is performed to apply mechanical energy to the components to thereby activate the raw materials to cause the reaction.

The reaction conditions can be appropriately determined in accordance with the type of the reaction. The mechanochemical reaction may be one or more reactions selected from the group consisting of a coupling reaction, an alkylation reaction, a halogenation reaction, a hydrolysis reaction, an oxidation reaction, a reduction reaction, a metalation reaction, a radical reaction, a metathesis reaction, and a cycloaddition reaction.

### (Reaction apparatus)

A mechanochemical reaction according to the present invention is performed using a reaction apparatus that applies mechanical energy to components. The method of applying mechanical energy to components is not particularly limited, and may be a method such as shaking, grinding, pressing, dispersion, kneading, or disintegration. An apparatus used in a mechanochemical reaction according to the present invention is, for example, one or more selected from the group consisting of:
mills such as a ball mill, a rod mill, a jet mill, and a SAG mill;
grinding machines such as a rotary stone mill and an automated mortar;
(horizontal-axis rotation) rotary mixing machines of a horizontal cylinder type, a V type, a double cone type, a regular cubic type, an S type, a continuous V type, and the like;
(baffle and impeller-equipped) rotary mixing machines of a horizontal cylinder type, a V type, a double cone type, a ball mill type, and the like;
(rotary vibration) rotary mixing machines of a rocking type, a cross rotary type, and the like;
(horizontal-axis rotation) stationary mixing machines of a ribbon type, a paddle type, a single-axis rotor type, a pug mill type, and the like;
(vertical-axis rotation) stationary mixing machines of a ribbon type, a screw type, a planetary type, a turbine type, a high-speed flow type, a rotating-disc type, a muller type, and the like;
(vibration) stationary mixing machines of a vibration mill type, a screen, and the like;
(fluidized) fluid motion mixing machines of a heterogeneous fluidized bed, a swirling fluidized bed, a riser tube-equipped type, a jet pump type, and the like;
(gravity) fluid motion mixing machines of a gravity type, a static mixer, and the like; and the like.

In the present invention, as long as the cross-coupling reaction proceeds, the method and employed apparatus are not particularly limited. For example, an apparatus that mechanically performs mixing treatment can be employed.

A mixing machine can be preferably used. For the mixing machine, for example, reference can be made to the powder mixing machines described in Table 5 and Fig. 9 in Sakashita, "Mixture Process Technology for the Powders" Journal of the Japan Society of Colour Material, 77(2), 75-85(2004). Specifically, a ball mill, a biaxial kneader, a planetary ball mill, a SPEX mixer mill, a biaxial ball mill, or the like can be employed.

A reaction apparatus used in a mechanochemical-reaction method according to the present invention may further include various means that can be included in reaction apparatuses of compounds, such as measuring means, depressurizing or pressurizing means, atmosphere adjusting means (gas introduction or exhaustion means), means for introducing various components, means for taking out various components or reaction products, purification means, and analysis means.

In a mechanochemical-reaction method according to the present invention, in the case of using a mixing machine, the mixing rate is not particularly limited, and can be appropriately determined in accordance with the types and amounts of the substrate (such as the compound (H) and the compound (B)), the ligand compound (Lx) or salt thereof, the metallic compound, the optionally used compounds such as the base and the unsaturated hydrocarbon compound, and the reaction product, the reaction temperature, and the like.

For example, in the mechanochemical-reaction method, components can be mixed together in a ball mill by shaking at a vibration frequency of 5 Hz or more, preferably 10 Hz or more, and more preferably 20 Hz or more.

### (Reaction temperature)

In a mechanochemical-reaction method according to the present invention such as a Suzuki-Miyaura cross-coupling reaction method, the reaction temperature (reaction vessel internal temperature) is not particularly limited. The reaction temperature is equal to or less than a temperature at which the compounds used such as the substrate and the ligand compound (Lx) or salt thereof are not thermally decomposed, such as 20°C or more and 500°C or less, and more preferably 35°C or more and 500°C or less. When the reaction temperature is less than 20°C, the reaction efficiency may lower.

The method for controlling the reaction temperature is not particularly limited, but temperature control methods used during chemical reactions can be used. Examples include a method of using hot air to control the internal temperature of the reaction vessel, a method of covering the reaction vessel with a heating medium at a predetermined temperature to control the internal temperature of the reaction vessel, and a method of disposing a heating member to control the internal temperature of the reaction vessel.

In the present invention, preferred is, for example, a method of applying hot air generated from a heat gun to the reaction vessel to control the internal temperature of the reaction vessel from the viewpoint of safety, easiness of temperature control operation, and the like.

### (Reaction atmosphere)

In a mechanochemical-reaction method according to the present invention such as a Suzuki-Miyaura cross-coupling reaction method, the reaction atmosphere (the atmosphere within the reaction vessel) is not particularly limited. The reaction atmosphere can be appropriately determined in accordance with, for example, the types and amounts of the ligand compound (Lx) or salt thereof, the metallic compound, the substrate (the compound (H) and the compound (B)), optionally used unsaturated hydrocarbon compound and base, the reaction product, and the like, the reaction temperature, and the like.

For example, the method can be performed, without particular control of the atmosphere, in the air atmosphere. Alternatively, the method can be performed in an inert gas atmosphere such as nitrogen, helium, neon, or argon.

### (Reaction time)

In a mechanochemical-reaction method according to the present invention such as a Suzuki-Miyaura cross-coupling reaction method, the reaction time (time for performing treatment using a mechanical means) is not particularly limited. The reaction time can be appropriately determined in accordance with the types and amounts of the ligand compound (Lx) or salt thereof, the metallic compound, the substrate (the compound (H) and the compound (B)), optionally used unsaturated hydrocarbon compound and base, the reaction product, and the like, the reaction temperature, and the like.

For example, the reaction time can be 1 minute or more, preferably 3 minutes or more, and more preferably 5 minutes or more. The upper limit of the reaction time is not particularly limited, but can be, for example, 48 hours or less, preferably 10 hours or less, more preferably 5 hours or less, and still more preferably 3 hours or less.

### <Post-reaction treatment and the like>

In a mechanochemical-reaction method according to the present invention such as a Suzuki-Miyaura cross-coupling reaction method, the resultant reaction product can be purified as needed. The method for purifying the reaction product is not particularly limited and a method such as recrystallization, column chromatography, or washing with a solvent can be employed.

### [Ligand compound (Ly) or salt thereof]

A ligand compound (Ly) or salt thereof according to the present invention is a ligand compound represented by the formula (La), (Lb), or (Lc) or salt thereof.

Such ligand compounds (Ly) correspond to ligand compounds represented by the formula (La), (Lb), or (Lc) described above in <Ligand compound (Lx) or salt thereof> of [Mechanochemical-reaction additive].

The method for producing the ligand compound (Ly) is not particularly limited. Examples include a method in which a polymer having a reactive group and a ligand compound having a functional group that reacts with the reactive group are caused to react, and a method in which a polymer is synthesized in the presence of a ligand compound having a functional group.

For a compound having, as a polymer chain, polyether, examples include a method in which a polyether having a reactive group at one end (such as a polyoxyalkylene) and a ligand compound having a functional group that reacts with the reactive group in the polyether are caused to react, and a method in which a cyclic ether and a ligand compound having a functional group that reacts with the cyclic ether are caused to react.

For a compound having, as a polymer chain, polyamide, examples include a method in which a polyamide having a reactive group at one end and a ligand compound having a functional group that reacts with the reactive group in the polyamide are caused to react, and a method in which a cyclic amide such as caprolactam and a ligand compound having a functional group that reacts with the cyclic amide are caused to react.

For a compound having, as a polymer chain, polyester, examples include a method in which a polyester having a reactive group at one end and a ligand compound having a functional group that reacts with the reactive group in the polyester are caused to react, and a method in which a cyclic ester and a ligand compound having a functional group that reacts with the cyclic ester are caused to react.

For a compound having, as a polymer chain, polyurethane, examples include a method in which a polyurethane having a reactive group at one end and a ligand compound having a functional group that reacts with the reactive group in the polyurethane are caused to react.

A ligand compound (Ly) according to the present invention can be converted into the form of a desired salt. The means for conversion to the form of a salt is not particularly limited and can be performed on the basis of a well-known technique or the like in the organic chemistry field. Preferred examples of the salt include inorganic acid salts such as a hydrochloric acid salt, a sulfuric acid salt, a nitric acid salt, and a phosphoric acid salt; organic acid salts such as an acetic acid salt, a fumaric acid salt, a maleic acid salt, an oxalic acid salt, a methanesulfonic acid salt, a benzenesulfonic acid salt, and a p-toluenesulfonic acid salt; inorganic salts of sodium, potassium, lithium, calcium, or magnesium; and salts formed with an organic base such as trometamol, arginine, lysine, diethanolamine, triethanolamine, or trimethylamine.

### [Complex including ligand compound (Ly) or salt thereof and metallic atom]

In a complex according to the present invention, the complex including the ligand compound (Ly) or salt thereof and a metallic atom, the ligand compound (Ly) is a ligand compound or salt thereof represented by the formula (La), (Lb), or (Lc) described above in <Ligand compound (Lx) or salt thereof> of [Mechanochemical-reaction additive].

In a complex according to the present invention, the complex including the ligand compound (Ly) or salt thereof and a metallic atom, the metallic atom is the same as the metallic atom described above in <Complex> of [Mechanochemical-reaction additive].

Furthermore, in a complex according to the present invention, the complex including the ligand compound (Ly) or salt thereof and a metallic atom, the metallic atom is the same as in the method for producing the complex described above in <Complex> of [Mechanochemical-reaction additive].

### [EXAMPLES]

Hereinafter, the present invention will be described in detail with reference to Examples and Comparative Examples. These Examples are merely embodiments of the present invention. The present invention is not limited at all by these examples.

The compounds used in Examples were commercially available products without being further purified unless otherwise specified.

Note that, in Examples and Comparative Examples, Me represents a methyl group, Et represents an ethyl group, iPr represents an isopropyl group, and tBu or t-Bu represents a tertiary butyl group.

In Examples and Comparative Examples, in the case of using a ball mill to cause a reaction, reagents were placed into the stainless-steel ball mill jar and a ball mill MM400 model manufactured by Verder Scientific Co., Ltd. (Verder Scientific Co., Ltd. (the former Retsch GmbH (Retsch)) was used.

In the case of using the ball mill to cause a reaction, for heating, a heat gun (manufactured by Takagi Co., Ltd., HG-1450B) was used to heat the outside of the ball mill jar at a predetermined temperature.

The relation between the set temperature of the heat gun and the internal temperature of the ball mill jar (the temperature of the reaction system) was examined using Thermographic image and the following was found.

**[Table 1]**

| Temperature of Heat gun | Internal temperature of ball mill jar |
|---|---|
| 250°C | 120°C |
| 200°C | 100°C |
| 150°C | 80°C |
| 130°C | 70°C |
| 70°C | 40°C |
| No Heating | 32°C |

### [Synthesis of phosphorus-based ligand compound (La)]

### <Example 1>

### (Production of phosphorus-based ligand compound (La101))

The reaction schemes of S1 to S3 below were used to produce a phosphorus-based ligand compound (La101).

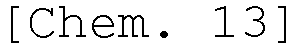

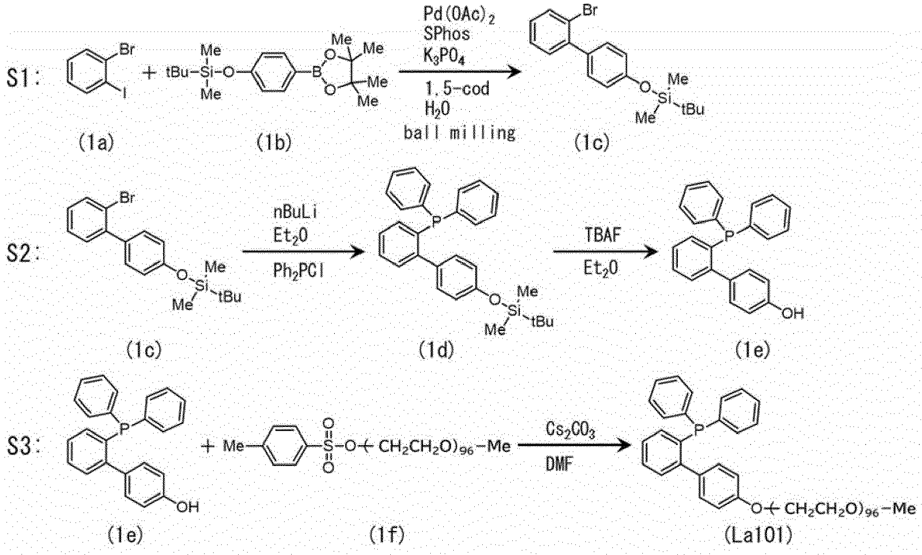

### ·S1: production of compound (1c)

A 1.5 mL stainless-steel ball mill jar containing stainless-steel balls having a diameter of 5 mm was charged with, in the air, 0.7 mmol of the compound (1b), 2.0 equiv (relative to the compound (1b)) of the compound (1a), 3.0 mol% (relative to the compound (1b)) of palladium(II) acetate (Pd(OAc)₂), 4.5 mol% (relative to the compound (1b)) of 2-dicyclohexylphosphino-2',6'-dimethoxybiphenyl (SPhos), 3.0 equiv (relative to the compound (1b)) of potassium phosphate (K₃PO₄), 3.7 equiv (relative to the compound (1b)) of water (H₂O), and 0.2 µL/mg (relative to the total amount in the system) of 1,5-cyclooctadiene (1,5-cod). The ball mill jar was sealed with the lid and mounted on the ball mill; the jar was stirred (30 Hz) by shaking for 5 minutes under heating (at an internal temperature of 120°C) with the heat gun set at 250°C to cause a cross-coupling reaction, to obtain the compound (1c). The compound (1c) was isolated by column chromatography and the isolation yield was 57%.

### ·S2: production of compound (1e)

A reaction vessel was charged with 1.0 mmol (1.0 equiv) of the compound (1c) obtained in S1, 1.0 equiv (relative to the compound (1c)) of n-butyl lithium (nBuLi), and an amount of diethyl ether (Et₂O) added such that the concentration of the compound (1c) would be 0.35 M (0.35 mol/L), stirred at room temperature (25°C) for 2 hours, subsequently charged with 1.1 equiv (relative to the compound (1c)) of chlorodiphenylphosphine (Ph₂PCl) at 0°C, and subsequently stirred at room temperature (25°C) for 24 hours to cause a reaction, to obtain the compound (1d). The compound (1d) was isolated by column chromatography and the isolation yield was 86%.

A reaction vessel was charged with 0.88 mmol (1.0 equiv) of the obtained compound (1d), 1.5 equiv (relative to the compound (1d)) of tetra-n-butylammonium fluoride (TBAF), and an amount of diethyl ether added such that the concentration of the compound (1d) would be 0.44 M (0.44 mol/L), and stirred at room temperature (25°C) for 2 hours to cause a reaction, to obtain the compound (1e). The compound (1e) was isolated by column chromatography and the isolation yield was 84%.

### ·S3: production of phosphorus-based ligand compound (La101)

A reaction vessel was charged with 0.62 mmol (3.0 equiv) of the compound (1e), 1.0 equiv (relative to the compound (1e)) of the compound (1f), 8.0 equiv (relative to the compound (1f)) of cesium carbonate (Cs₂CO₃), and an amount of N,N-dimethylformamide (DMF) added such that the compound (1e) content would be 0.02 M (0.02 mol/L), and stirred at 100°C for 24 hours to cause a reaction, to obtain a ligand compound (L1). The phosphorus-based ligand compound (La101) was isolated by recrystallization and the isolation yield was 89%.

### <Example 2>

### (Production of phosphorus-based compound (La102))

The reaction schemes of S1 to S3 below were used to produce a phosphorus-based ligand compound (La102).

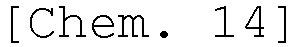

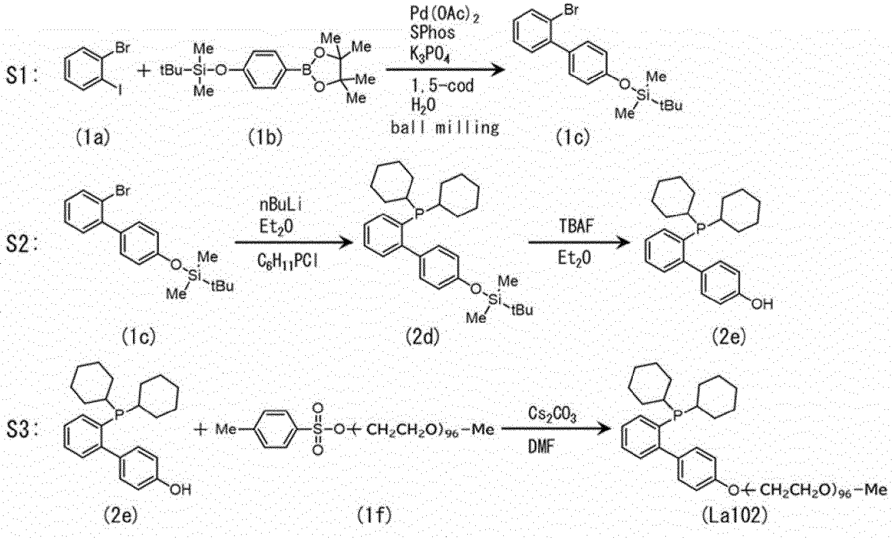

In S1, the same procedures as in Example 1 were performed to obtain the compound (1c).

In S2, the same procedures as in Example 1 were performed except that, instead of chlorodiphenylphosphine (Ph₂PCl), chlorocyclohexylphosphine ((C₆H₁₁)₂PCl) was used, to obtain the compound (2d). The isolation yield of the compound (2d) was 86%.

In addition, the same procedures as in Example 1 were performed except that, instead of the compound (1d), the compound (2d) was used, to obtain the compound (2e). The isolation yield of the compound (2e) was 99%.

In S3, the same procedures as in Example 1 were performed except that, instead of the compound (1e), the compound (2e) was used, to obtain the phosphorus-based ligand compound (La102). The isolation yield of the phosphorus-based ligand compound (La102) was 92%.

### <Example 3>

### (Production of phosphorus-based ligand compound (La103))

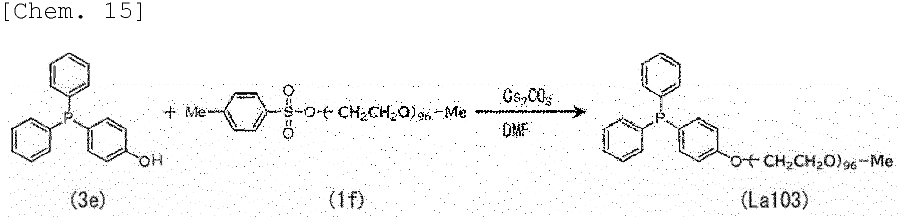

A reaction vessel was charged with 0.69 mmol (3.0 equiv) of the compound (3e), 1.0 equiv (relative to the compound (3e)) of the compound (1f), 8.0 equiv (relative to the compound (1f)) of cesium carbonate (Cs₂CO₃), and an amount of N,N-dimethylformamide (DMF) added such that the compound (1f) content would be 0.05 M (0.05 mol/L), and stirred at 100°C for 12 hours to cause a reaction, to obtain the phosphorus-based ligand compound (La103). The phosphorus-based ligand compound (La103) was isolated by recrystallization and the isolation yield was 89%.

### <Example 4>

### (Production of phosphorus-based compound (La104))

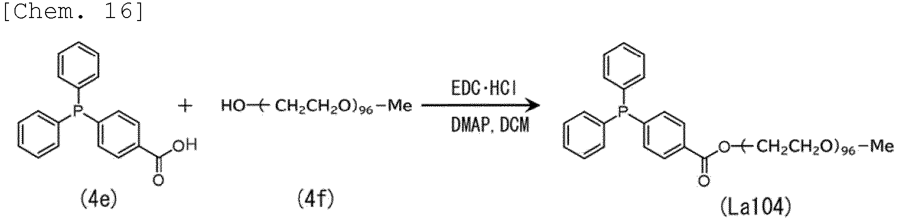

A reaction vessel was charged with 0.45 mmol (1.5 equiv) of the compound (4e), 1.0 equiv (relative to the compound (4e)) of the compound (4f), 1.1 equiv (relative to the compound (4f)) of 1-(3-Dimethylaminopropyl)-3-ethylcarbodiimide Hydrochloride (EDC·HCl), and amounts of 4-Dimethylaminopyridine (DMAP) and dichloromethane (DCM) added such that the compound (4f) content would be 0.09 M (0.09 mol/L), and stirred at room temperature for 24 hours to cause a reaction, to obtain the phosphorus-based ligand compound (La104). The phosphorus-based ligand compound (La104) was isolated by recrystallization and the isolation yield was 86%.

### <Example 5>

### (Production of phosphorus-based compound (La105))

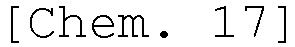

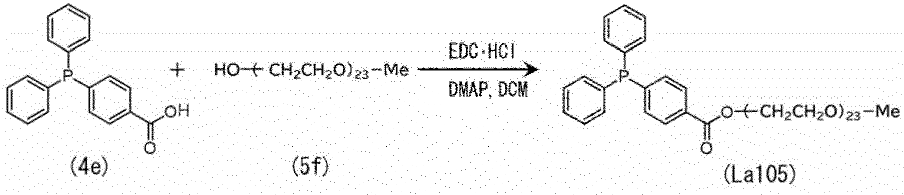

The same procedures as in Example 4 were performed except that, instead of the compound (4f), the compound (5f) was used, to obtain the phosphorus-based ligand compound (La105). The phosphorus-based ligand compound (La105) was isolated by recrystallization and the isolation yield was 92%.

### [Use of phosphorus-based ligand compound (La) in mechanochemical synthesis]

### <Examples 201 to 234 and Comparative Examples 201 to 247>

The substrate (the compound (H) and the compound (B)), the phosphorus-based ligand compound (La), and the polyether-based compound (E) used in Examples 201 to 234 and Comparative Examples 201 to 247 and the reaction product (P) obtained in Examples 201 to 234 and Comparative Examples 201 to 247 will be described below. Of the phosphorus-based ligand compound (La), (La101) to (La105) correspond to ligand compounds (Lx) and (Ly) according to the present invention.

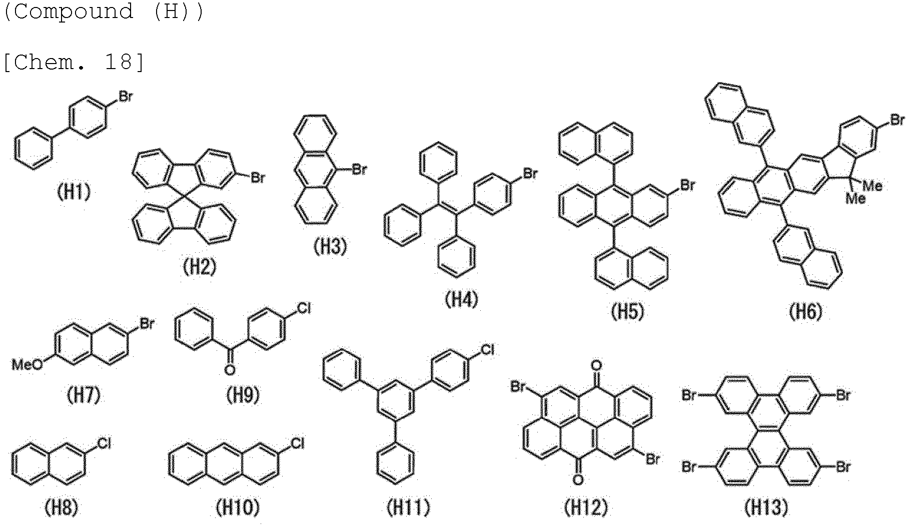

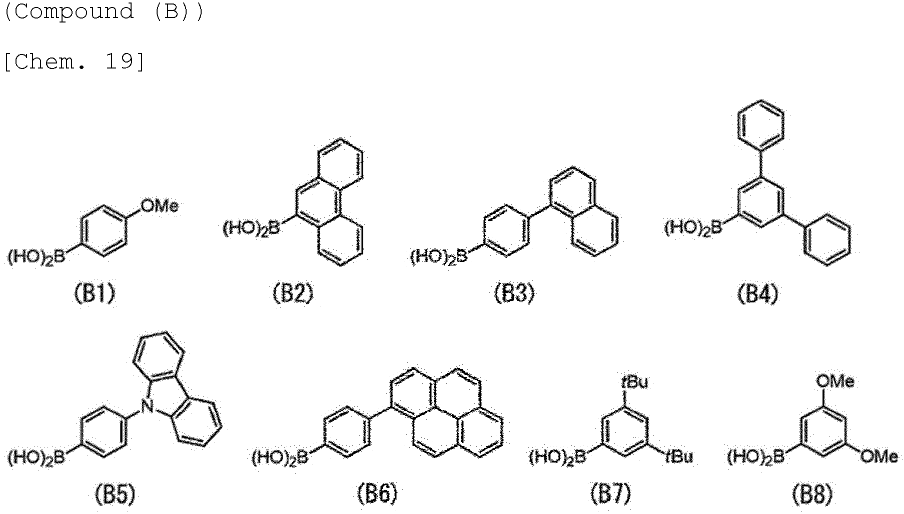

### (Phosphorus-based ligand compound)

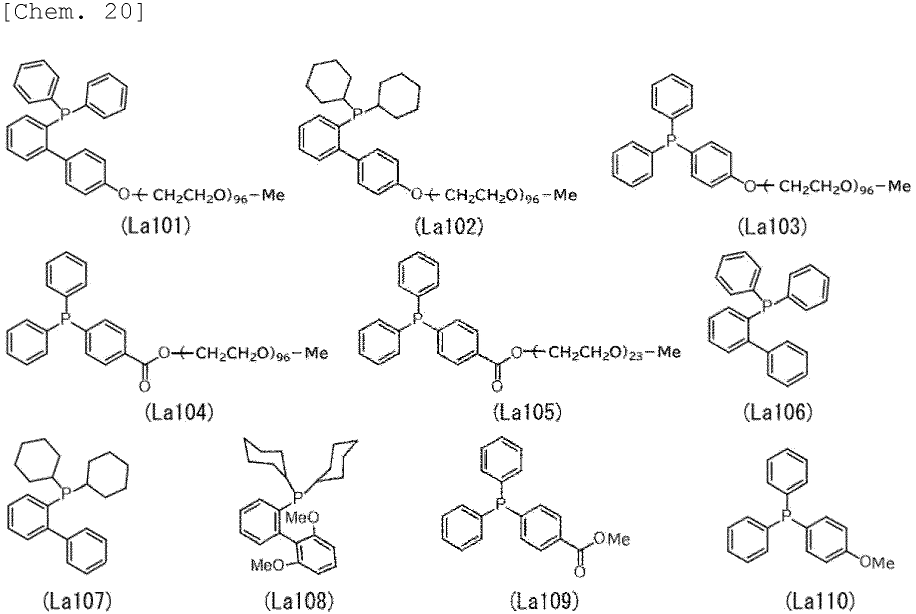

### (Polyether-based compound (E))

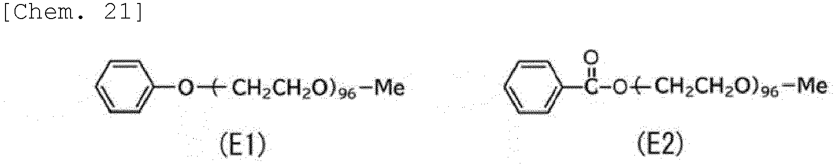

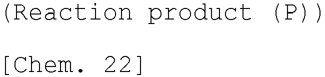

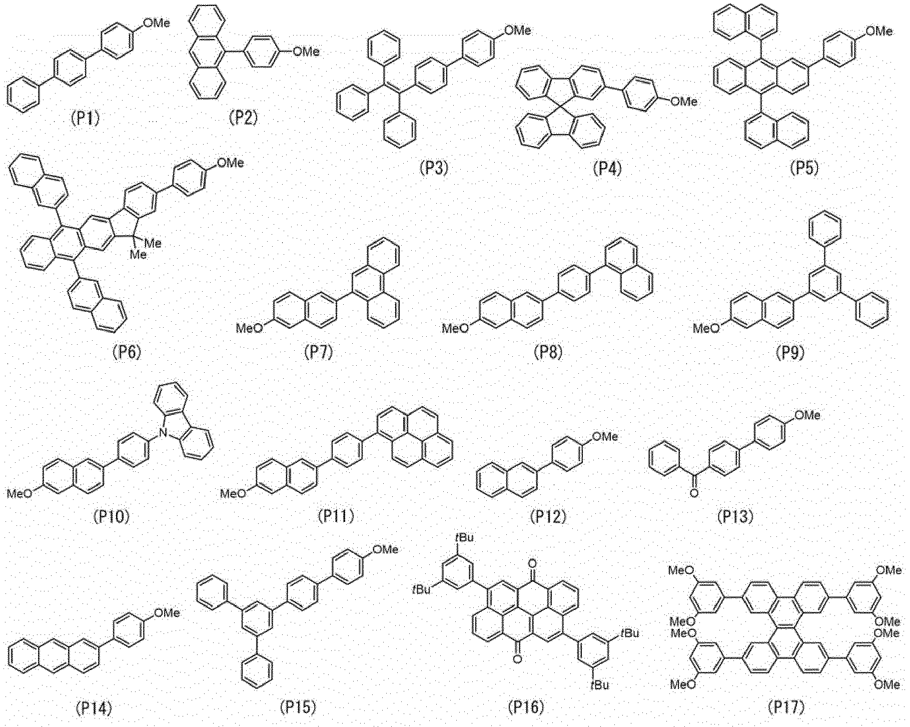

### [Acceleration effect of mechanochemical coupling reaction due to phosphorus-based ligand compound]

### <Example 201>

A 1.5 mL stainless-steel ball mill jar containing stainless-steel balls having a diameter of 5 mm was charged with, in the air, 0.3 mmol (1.0 eqiv) of (H1) serving as the compound (H), 1.2 equiv (relative to the compound (H)) of (B1) serving as the compound (B), 3.0 mol% (relative to the compound (H)) of palladium(II) acetate (Pd(OAc)₂) serving as the metallic compound, 6.0 mol% (relative to the compound (H)) of the phosphorus-based ligand compound (La101) serving as the ligand compound (La), 3.0 equiv (relative to the compound (H)) of cesium fluoride (CsF), 3.7 equiv (relative to the compound (H)) of water, and an amount of 1,5-cyclooctadiene (1,5-cod) added such that its content would be 0.2 µL/mg. The ball mill jar was sealed with the lid, mounted on the ball mill, and stirred for 20 minutes (30 Hz) under heating of the outside of the jar with the heat gun performed such that the internal temperature of the ball mill jar was 45°C to cause a cross-coupling reaction. The NMR yield of the corresponding reaction product (P1) was 99%. The results will be described in Table 2.

### <Examples 202 to 210 and Comparative Examples 201 to 204>

The same procedures as in Example 201 were performed except that the phosphorus-based ligand compound (La) employed was the compounds in Table 2 and the reaction time (stirring time) employed was the times in Table 2, to cause a cross-coupling reaction, to obtain a reaction product (P1). The NMR yield of the reaction product (P1) will also be described in Table 2.

### <Comparative Examples 205 to 208>

The same procedures as in Example 201 were performed except that the ligand compound (La) employed was the compounds in Table 2, the polyether-based compound (E) employed was 6.0 mol% (relative to the compound (H)) of (E1), and the reaction time (stirring time) employed was the times in Table 2, to cause a cross-coupling reaction, to obtain a reaction product (P1). The NMR yield of the reaction product (P1) will also be described in Table 2.

**[Table 2]**

| Example / Comparative Example | Compound (H) | Compound (B) | Ligand compound (L) | Reaction product (P) | Reaction time (min) | NMR yield (%) |
|---|---|---|---|---|---|---|
| Example 201 | H1 | B1 | La101 | P1 | 20 | 99 |
| Example 202 | H1 | B1 | La101 | P1 | 10 | 88 |
| Example 203 | H1 | B1 | La102 | P1 | 20 | 99 |
| Example 204 | H1 | B1 | La102 | P1 | 10 | 90 |
| Example 205 | H1 | B1 | La103 | P1 | 20 | 99 |
| Example 206 | H1 | B1 | La103 | P1 | 10 | 62 |
| Example 207 | H1 | B1 | La104 | P1 | 60 | 99 |
| Example 208 | H1 | B1 | La104 | P1 | 30 | 99 |
| Example 209 | H1 | B1 | La104 | P1 | 20 | 99 |
| Example 210 | H1 | B1 | La104 | P1 | 10 | 75 |
| Comparative Example 201 | H1 | B1 | La106 | P1 | 20 | 15 |
| Comparative Example 202 | H1 | B1 | La106 | P1 | 10 | 2 |
| Comparative Example 203 | H1 | B1 | La107 | P1 | 20 | 99 |
| Comparative Example 204 | H1 | B1 | La107 | P1 | 10 | 51 |
| Comparative Example 205 | H1 | B1 | La106 (+E1) | P1 | 20 | 38 |
| Comparative Example 206 | H1 | B1 | La106 (+E1) | P1 | 10 | 11 |
| Comparative Example 207 | H1 | B1 | La107 (+E1) | P1 | 20 | 64 |
| Comparative Example 208 | H1 | B1 | La107 (+E1) | P1 | 10 | 39 |

### <Examples 211 to 217 and Comparative Examples 209 to 212>

The same procedures as in Example 201 were performed except that the phosphorus-based ligand compound (La) employed was 4.5 mol% (relative to the compound (H)) of the compounds in Table 2 and the reaction time (stirring time) employed was the times in Table 2, to cause a cross-coupling reaction, to obtain a reaction product (P1). The NMR yield of the reaction product (P1) will also be described in Table 3.

### <Comparative Example 213>

The same procedures as in Example 201 were performed except that the phosphorus-based ligand compound (La) employed was 4.5 mol% (relative to the compound (H)) of La9, the reaction time (stirring time) was set to 60 minutes, and the polyether-based compound (E) employed was 6.0 mol% (relative to the compound (H)) of (E1), to cause a cross-coupling reaction, to obtain a reaction product (P1). The NMR yield of the reaction product (P1) was 48%. The results will also be described in Table 3.

**[Table 3]**

| Example / Comparative Example | Compound (H) | Compound (B) | Ligand compound (L) | Reaction product (P) | Reaction time (min) | NMR yield (%) |
|---|---|---|---|---|---|---|
| Example 211 | H1 | B1 | La104 | P1 | 60 | 95 |
| Example 212 | H1 | B1 | La104 | P1 | 30 | 90 |
| Example 213 | H1 | B1 | La104 | P1 | 20 | 90 |
| Example 214 | H1 | B1 | La105 | P1 | 60 | 64 |
| Example 215 | H1 | B1 | La105 | P1 | 40 | 62 |
| Example 216 | H1 | B1 | La105 | P1 | 30 | 36 |
| Example 217 | H1 | B1 | La105 | P1 | 20 | 13 |
| Comparative Example 209 | H1 | B1 | La109 | P1 | 60 | 23 |
| Comparative Example 210 | H1 | B1 | La109 | P1 | 30 | 20 |
| Comparative Example 211 | H1 | B1 | La109 | P1 | 20 | 8 |
| Comparative Example 212 | H1 | B1 | La110 | P1 | 20 | 10 |
| Comparative Example 213 | H1 | B1 | La109 (+E2) | P1 | 60 | 48 |

### [Application to organic solvent-based coupling reaction]

### <Comparative Examples 214 to 216>

A reaction vessel was charged with 0.3 mmol (1.0 eqiv) of (H1) serving as the compound (H), 1.2 equiv (relative to the compound (H)) of (B1) serving as the compound (B), 3.0 mol% (relative to the compound (H)) of palladium(II) acetate (Pd(OAc)₂) serving as the metallic compound, 4.5 mol% (relative to the compound (H)) of the compounds in Table 4 serving as the phosphorus-based ligand compound (La), 3.0 equiv (relative to the compound (H)) of cesium fluoride (CsF), 3.7 equiv (relative to the compound (H)) of water, and an amount of toluene added such that the compound (H) content would be 0.1 M (0.1 mol/L). Stirring was performed for 180 minutes under heating performed such that the internal temperature of the reaction vessel was 50°C to cause a cross-coupling reaction. The NMR yields of the corresponding reaction product (P1) will be described in Table 4.

**[Table 4]**

| Example / Comparative Example | Compound (H) | Compound (B) | Ligand compound (L) | Reaction product (P) | Reaction time (min) | NMR yield (%) |
|---|---|---|---|---|---|---|
| Comparative Example 214 | H1 | B1 | La109 | P1 | 180 | 35 |
| Comparative Example 215 | H1 | B1 | La105 | P1 | 180 | 14 |
| Comparative Example 216 | H1 | B1 | La104 | P1 | 180 | 21 |

### [Reaction of various halogenated organic compounds]

### <Example 218>

A 1.5 mL stainless-steel ball mill jar containing stainless-steel balls having a diameter of 5 mm was charged with, in the air, 76.1 mg (0.2 mmol) of (H2) (2-bromo-9,9'-spirobi[fluorene) serving as the compound (H), 1.3 mg (0.006 mmol) of palladium(II) acetate (Pd(OAc)₂) serving as the metallic compound, 91.1 mg (0.6 mmol) of cesium fluoride (CsF), 13 µL (3.7 equiv relative to the compound (H)) of water, 52 µL (0.2 µL/mg) of 1,5-cyclooctadiene (1,5-cod), 55.3 mg (0.012 mmol) of (La101) serving as the phosphorus-based ligand compound (La), and 36.5 mg (0.24 mmol) of (B2) ((4-methoxyphenyl)boronic acid) serving as the compound (B). Subsequently, the ball mill jar was sealed with the lid, mounted on the ball mill, and stirred for 30 minutes (30 Hz) under heating with the heat gun (set temp.: 70°C) (internal temperature of the ball mill jar: 45°C) to cause a reaction. The NMR yield of the corresponding reaction product (P4) was 99%. The results will be described in Table 5.

After completion of the reaction, the reaction mixture was dissolved in dichloromethane, filtered, and subsequently subjected to removal of dichloromethane using an evaporator. The crude product was purified by silica gel column chromatography, to obtain 77.7 mg of the target product (P4) (isolation yield: 92%).

### <Examples 219 to 227 and Comparative Examples 217 to 236>

The same procedures as in Example 218 were performed except that the compound (H), the compound (B), and the phosphorus-based ligand compound (La) employed were the compounds in Table 5 and the reaction time (stirring time) employed was the times in Table 5, to cause a cross-coupling reaction, to obtain a reaction product (P) in Table 5. The NMR yields of the reaction product (P) will also be described in Table 5. Note that, for the cases where generation of the reaction product (P) was not observed by 1H-NMR, the NMR yields were regarded as 0% (n. r.; No Reaction).

### <Comparative Example 237>

The same procedures as in Example 218 were performed except that the compound (H) employed was (H5), the compound (B) employed was (B1), the phosphorus-based ligand compound (La) employed was (La106), the polyether-based compound (E) employed was 6.0 mol% (relative to the compound (H)) of (E1), and the reaction time (stirring time) was set to 90 minutes, to cause a cross-coupling reaction, to obtain a reaction product (P5). The NMR yield of the reaction product (P5) will also be described in Table 5.

**[Table 5]**

| Example / Comparative Example | Compound (H) | Compound (B) | Ligand compound (L) | Reaction product (P) | Reaction time (min) | NMR yield (%) |
|---|---|---|---|---|---|---|
| Example 218 | H2 | B1 | La101 | P4 | 30 | 99 |
| Example 219 | H3 | B1 | La101 | P2 | 20 | 99 |
| Example 220 | H4 | B1 | La101 | P3 | 30 | 99 |
| Example 221 | H5 | B1 | La101 | P5 | 90 | 85 |
| Example 222 | H6 | B1 | La101 | P6 | 90 | 99 |
| Example 223 | H7 | B2 | La101 | P7 | 30 | 99 |
| Example 224 | H7 | B3 | La101 | P8 | 30 | 87 |
| Example 225 | H7 | B4 | La101 | P9 | 30 | 99 |
| Example 226 | H7 | B5 | La101 | P10 | 30 | 96 |
| Example 227 | H7 | B6 | La101 | P11 | 30 | 79 |
| Comparative Example 217 | H2 | B1 | La106 | P4 | 30 | 3 |
| Comparative Example 218 | H3 | B1 | La106 | P2 | 20 | n. r. |
| Comparative Example 219 | H4 | B1 | La106 | P3 | 30 | 4 |
| Comparative Example 220 | H5 | B1 | La106 | P5 | 90 | 24 |
| Comparative Example 221 | H6 | B1 | La106 | P6 | 90 | 18 |
| Comparative Example 222 | H7 | B2 | La106 | P7 | 30 | n. r. |
| Comparative Example 223 | H7 | B3 | La106 | P8 | 30 | 12 |
| Comparative Example 224 | H7 | B4 | La106 | P9 | 30 | 3 |
| Comparative Example 225 | H7 | B5 | La106 | P10 | 30 | n. r. |
| Comparative Example 226 | H7 | B6 | La106 | P11 | 30 | n. r. |
| Comparative Example 227 | H2 | B1 | La108 | P4 | 30 | 24 |
| Comparative Example 228 | H3 | B1 | La108 | P2 | 20 | 30 |
| Comparative Example 229 | H4 | B1 | La108 | P3 | 30 | 7 |
| Comparative Example 230 | H5 | B1 | La108 | P5 | 90 | 52 |
| Comparative Example 231 | H6 | B1 | La108 | P6 | 90 | 29 |
| Comparative Example 232 | H7 | B2 | La108 | P7 | 30 | 90 |
| Comparative Example 233 | H7 | B3 | La108 | P8 | 30 | 72 |
| Comparative Example 234 | H7 | B4 | La108 | P9 | 30 | 29 |
| Comparative Example 235 | H7 | B5 | La108 | P10 | 30 | 20 |
| Comparative Example 236 | H7 | B6 | La108 | P11 | 30 | 18 |
| Comparative Example 237 | H5 | B1 | La106 | P5 | 90 | 43 |

### [Reaction with organic chloride]

### <Example 228>

A 1.5 mL stainless-steel ball mill jar containing stainless-steel balls having a diameter of 5 mm was charged with, in the air, 0.3 mmol (1.0 eqiv) of (H8) serving as the compound (H), 1.2 equiv (relative to the compound (H)) of (B1) serving as the compound (B), 3.0 mol% (relative to the compound (H)) of palladium(II) acetate (Pd(OAc)₂) serving as the metallic compound, 6.0 mol% (relative to the compound (H)) of (La102) serving as the phosphorus-based ligand compound (La), 3.0 equiv (relative to the compound (H)) of cesium fluoride (CsF), 3.7 equiv (relative to the compound (H)) of water, and an amount of 1,5-cyclooctadiene (1,5-cod) added such that its content would be 0.2 µL/mg. The ball mill jar was sealed with the lid, mounted on the ball mill, and stirred (30 Hz) for 30 minutes under heating of the outside of the jar with the heat gun performed such that the internal temperature of the ball mill jar was 45°C to cause a cross-coupling reaction. The NMR yield of the corresponding reaction product (P12) was 99%. The results will be described in Table 6.

### <Examples 229 to 231 and Comparative Examples 238 to 245>

The same procedures as in Example 228 were performed except that the compound (H) and the phosphorus-based ligand compound (La) employed were the compounds in Table 6, to cause a cross-coupling reaction, to obtain the reaction products (P) in Table 6. The NMR yields of the reaction product (P) will also be described in Table 5. Note that, for the cases where generation of the reaction product (P) was not observed by 1H-NMR, the NMR yield was regarded as 0% (n. r.; No Reaction).

**[Table 6]**

| Example / Comparative Example | Compound (H) | Compound (B) | Ligand compound (L) | Reaction product (P) | Reaction time (min) | NMR yield (%) |
|---|---|---|---|---|---|---|
| Example 228 | H8 | B1 | La102 | P12 | 30 | 99 |
| Example 229 | H9 | B1 | La102 | P13 | 30 | 99 |
| Example 230 | H10 | B1 | La102 | P14 | 30 | 64 |
| Example 231 | H11 | B1 | La102 | P15 | 30 | 99 |
| Comparative Example 238 | H8 | B1 | La107 | P12 | 30 | 75 |
| Comparative Example 239 | H9 | B1 | La107 | P13 | 30 | 31 |
| Comparative Example 240 | H10 | B1 | La107 | P14 | 30 | n. r. |
| Comparative Example 241 | H11 | B1 | La107 | P15 | 30 | n. r. |
| Comparative Example 242 | H8 | B1 | La108 | P12 | 30 | 99 |
| Comparative Example 243 | H9 | B1 | La108 | P13 | 30 | 82 |
| Comparative Example 244 | H10 | B1 | La108 | P14 | 30 | 2 |
| Comparative Example 245 | H11 | B1 | La108 | P15 | 30 | n. r. |

### [Reaction of organic pigment slightly soluble in organic solvent]

### <Example 232>

A 1.5 mL stainless-steel ball mill jar containing stainless-steel balls having a diameter of 5 mm was charged with, in the air, 0.1 mmol (1.0 eqiv) of (H12) serving as the compound (H), 2.4 equiv (relative to the compound (H)) of (B7) serving as the compound (B), 10.0 mol% (relative to the compound (H)) of palladium(II) acetate (Pd(OAc)₂) serving as the metallic compound, 20.0 mol% (relative to the compound (H)) of (La101) serving as the phosphorus-based ligand compound (La), 6.0 equiv (relative to the compound (H)) of cesium fluoride (CsF), 7.2 equiv (relative to the compound (H)) of water, and an amount of 1,5-cyclooctadiene (1,5-cod) added such that its content would be 0.2 µL/mg. The ball mill jar was sealed with the lid, mounted on the ball mill, and stirred (30 Hz) for 90 minutes under heating of the outside of the jar with the heat gun performed such that the internal temperature of the ball mill jar was 80°C to cause a cross-coupling reaction. The NMR yield of the corresponding reaction product (P16) was 88%. The results will be described in Table 7.

### <Example 233 and Comparative Example 246>

The same procedures as in Example 232 were performed except that the compound (H), the compound (B), and the phosphorus-based ligand compound (La) employed were the compounds in Table 7, to cause a cross-coupling reaction, to obtain the reaction product (P) in Table 7. The NMR yields of the reaction product (P) will also be described in Table 7.

### <Example 234>

A 1.5 mL stainless-steel ball mill jar containing stainless-steel balls having a diameter of 5 mm was charged with, in the air, 0.05 mmol (1.0 eqiv) of (H13) serving as the compound (H), 4.8 equiv (relative to the compound (H)) of (B8) serving as the compound (B), 10.0 mol% (relative to the compound (H)) of palladium(II) acetate (Pd(OAc)₂) serving as the metallic compound, 20.0 mol% (relative to the compound (H)) of (La102) serving as the phosphorus-based ligand compound (La), 12.0 equiv (relative to the compound (H)) of cesium fluoride (CsF), 7.2 equiv (relative to the compound (H)) of water, and an amount of 1,5-cyclooctadiene (1,5-cod) added such that its content would be 0.2 µL/mg. The ball mill jar was sealed with the lid, mounted on the ball mill, and stirred (30 Hz) for 90 minutes under heating of outside of the jar using the heat gun performed such that the internal temperature of the ball mill jar was 80°C to cause a cross-coupling reaction. The NMR yield of the corresponding reaction product (P17) was 84%. The results will be described in Table 7.

### <Comparative Example 247>

The same procedures as in Example 234 were performed except that the compound (H) employed, the compound (B) and the phosphorus-based ligand compound (La) employed were the compounds in Table 7, to cause a cross-coupling reaction, to obtain a reaction product (P17) in Table 7. The NMR yield of the reaction product (P17) will also be described in Table 7.

**[Table 7]**

| Example / Comparative Example | Compound (H) | Compound (B) | Ligand compound (L) | Reaction product (P) | Reaction time (min) | NMR yield (%) |
|---|---|---|---|---|---|---|
| Example 232 | H12 | B7 | La101 | P16 | 90 | 88 |
| Example 233 | H12 | B7 | La102 | P16 | 90 | 87 |
| Example 234 | H13 | B8 | La102 | P17 | 90 | 84 |
| Comparative Example 246 | H12 | B7 | La108 | P16 | 90 | 69 |
| Comparative Example 247 | H13 | B8 | La108 | P17 | 90 | 56 |

### [Synthesis of bipyridine-based ligand compound (Lb)]

### <Example 301>

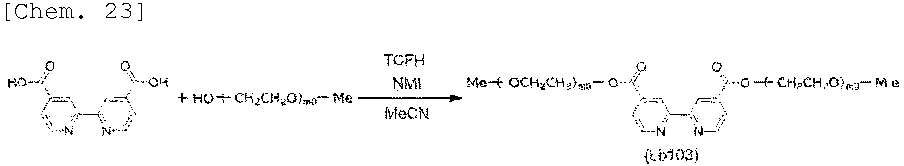

In a nitrogen atmosphere, 0.5 mmol (122.1 mg) of 2,2'-bipyridine-4,4'-dicarboxylic acid, 2.05 equiv (relative to 2,2'-bipyridine-4,4'-dicarboxylic acid) of PEG-2000 monomethyl ether (a polyethylene glycol monomethyl ether having a number-average molecular weight of 2,000), 341.2 mg of chloro-N,N,N',N'-tetramethylformamidinium hexafluorophosphate (TCFH), 280 µL of N-methylimidazole (NMI), and 55 mL of acetonitrile (MeCN) were placed into a two-neck round-bottom flask, and stirred at room temperature (25°C) for 24 hours. Subsequently, an evaporator was used to remove the solvent, and subsequently reprecipitation from a diethyl ether/dichloromethane solution was caused to achieve purification, to obtain 1.699g of a bipyridine-based ligand compound (Lb103). The isolation yield was 70%.

### [Use of bipyridine-based ligand compound (Lb) in mechanochemical synthesis]

The bipyridine-based ligand compounds (Legand (Lb)) used in Examples 401 to 411 and Reference Examples 401 to 403 are as follows.

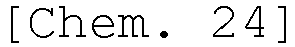

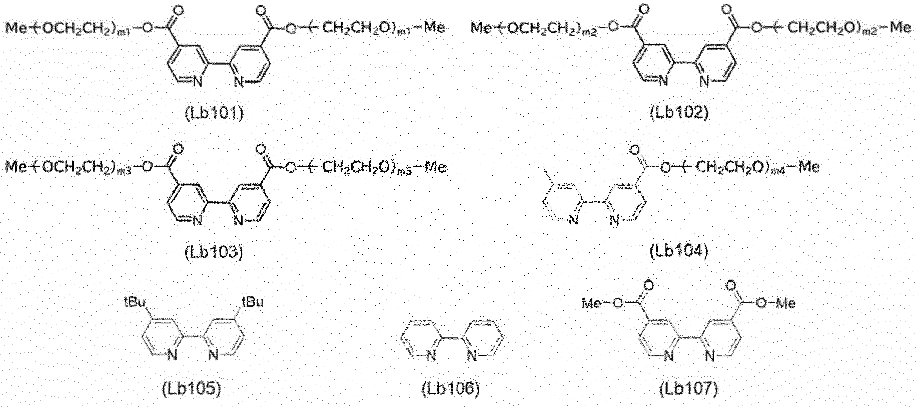

In the bipyridine-based ligand compound (Lb101), m1 in the formula is, in the case of polyoxyethylene, the number (about 12) of the repeating units corresponding to a number-average molecular weight of 550.

In the bipyridine-based ligand compound (Lb102), m2 in the formula is, in the case of polyoxyethylene, the number (about 22) of the repeating units corresponding to a number-average molecular weight of 1,000.

In the bipyridine-based ligand compound (Lb103), m3 in the formula is, in the case of polyoxyethylene, the number (about 45) of the repeating units corresponding to a number-average molecular weight of 2,000.

In the bipyridine-based ligand compound (Lb104), m4 in the formula is, in the case of polyoxyethylene, the number (about 45) of the repeating units corresponding to a number-average molecular weight of 2,000.

### <Examples 401 to 404 and Reference Example 401>

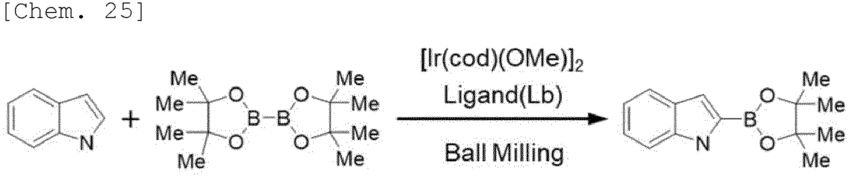

A 5 mL stainless-steel ball mill jar containing stainless-steel balls having a diameter of 10 mm was charged with, in the air, 1.0 mmol (1.0 eqiv) of 1H-indole, 0.6 equiv (relative to 1H-indole) of bis(pinacolato)diboron, 0.75 mol% (relative to 1H-indole) of (1,5-Cyclooctadiene)(methoxy)iridium(I) Dimer ([Ir(cod)(OMe)]₂) serving as the metallic compound, and 1.5 mol% (relative to 1H-indole) of a compound in Table 8 serving as the bipyridine-based ligand compound (Ligand (Lb)). The ball mill jar was sealed with the lid, mounted on the ball mill, and shaken and stirred at a vibration frequency of 30 Hz for 60 minutes under heating of the outside of the ball mill jar with the heat gun performed such that the internal temperature of the ball mill jar was 40°C, to cause a reaction. The NMR yields of the corresponding reaction products will be described in Table 8.

**[Table 8]**

| | Ligand (Lb) | NMR yield |
|---|---|---|
| Example 401 | Lb101 | 81% |
| Example 402 | Lb102 | 91% |
| Example 403 | Lb103 | 97% |
| Example 404 | Lb104 | 81% |
| Reference Example 401 | Lb105 | 81% |

### <Examples 405 to 407 and Reference Examples 402 to 404>

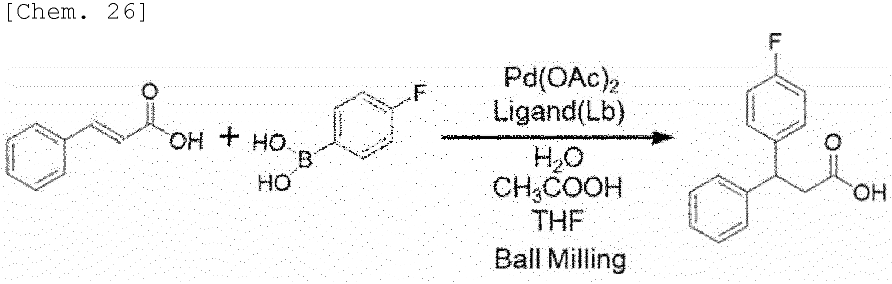

A 5 mL stainless-steel ball mill jar containing stainless-steel balls having a diameter of 10 mm was charged with, in the air, 0.3 mmol (1.0 eqiv) of trans-3-phenylacrylic acid, 2.0 equiv (relative to trans-3-phenylacrylic acid) of 4-fluorophenylboronic acid, 5 mol% (relative to trans-3-phenylacrylic acid) of palladium(II) acetate (Pd(OAc)₂) serving as the metallic compound, 10 mol% (relative to trans-3-phenylacrylic acid) of a compound in Table 9 serving as the bipyridine-based ligand compound (Ligand (Lb)), 3.0 equiv (relative to trans-3-phenylacrylic acid) of each of water and acetic acid, and an amount of tetrahydrofuran (THF) added such that its content would be 0.2 µL/mg (relative to the total amount of the reaction system). The ball mill jar was sealed with the lid, mounted on the ball mill, and shaken and stirred for 60 minutes at a vibration frequency in Table 9 under heating of the outside of the ball mill jar with the heat gun performed such that the internal temperature of the ball mill jar was a temperature in Table 9, to cause a reaction. The NMR yields of the corresponding reaction products will be described in Table 9.

### <Example 408>

The same procedures as in Example 405 were performed except that the metallic compound employed was 2.5 mol% (relative to trans-3-phenylacrylic acid) of palladium(II) acetate (Pd(OAc)₂) and the bipyridine-based ligand compound (Ligand (Lb)) employed was 5 mol% (relative to trans-3-phenylacrylic acid) of the bipyridine-based ligand compound (Lb103), to cause a reaction to obtain a reaction product. The NMR yield of the corresponding reaction product will be described in Table 9.

### <Reference Example 405>

The same procedures as in Example 405 were performed except that the bipyridine-based ligand compound (Ligand (Lb)) employed was the bipyridine-based ligand compound (Lb107) and 145.6 mg of polyethylene glycol (number-average molecular weight: 2,000) was added, to cause a reaction to obtain a reaction product. The NMR yield of the corresponding reaction product will be described in Table 9.

**[Table 9]**

| | Ligand (Lb) | Internal temperature of ball mill jar (°C) | Vibration frequency (Hz) | Conversion ratio | NMR yield |
|---|---|---|---|---|---|
| Example 405 | Lb103 | 80 | 25 | >99% | >99% |
| Example 406 | Lb103 | 80 | 20 | >99% | 89% |
| Example 407 | Lb103 | 70 | 25 | 65% | 65% |
| Example 408 | Lb103 | 80 | 25 | 36% | 19% |
| Reference Example 402 | Lb106 | 80 | 25 | >99% | 70% |
| Reference Example 403 | Lb106 | 80 | 20 | 77% | 70% |
| Reference Example 404 | Lb107 | 80 | 20 | 53% | 47% |
| Reference Example 405 | Lb107 | 80 | 20 | 40% | 18% |

### [Synthesis of N-heterocyclic carbene-based compound (Lc)]

### <Example 501>

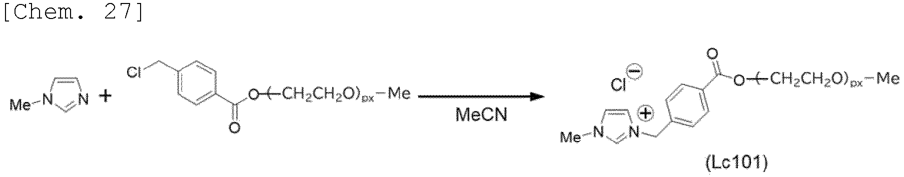

(In the formula, px is, in the case of polyoxyethylene, the number (about 91) of the repeating units corresponding to a number-average molecular weight of 4000.)

A screw-top test tube was charged with 458.5 mg (0.1 mmol, 1.0 equiv) of a substrate (an esterified compound of 4-(2-chloroethyl)benzoic acid and PEG-4000 monomethyl ether), and purged with nitrogen three times. Subsequently, 1 mL (0.1 M) of acetonitrile and 40 µL (0.5 mmol, 5.0 equiv) of 1-methylimidazole were added, and heated for 24 hours at 80°C. After a lapse of 24 hours, the solution was returned to room temperature (25°C) and an evaporator was used to remove the solvent. After 10 mL of diethyl ether was added to precipitate a solid, the solid was collected by suction filtration, to obtain 414.7 mg (0.089 mmol) of an N-heterocyclic carbene-based compound (Lc101). The isolation yield was 89%.

### <Example 502>

The same procedures as in Example 501 were performed except that the substrate employed was 0.1 mmol (1.0 equiv) of a compound (PEG-4000-methyl-2-chloroethyl ether) represented by the following formula;

Cl-CH₂CH₂-(-OCH₂CH₂-)ₚₓ-OCH₃

(in the formula, px is, in the case of polyoxyethylene, the number (about 91) of the repeating units corresponding to a number-average molecular weight of 4000) to obtain an N-heterocyclic carbene-based compound (Lc102). The isolation yield was 95%.

### <Example 503>

The same procedures as in Example 501 were performed except that, instead of 1-methylimidazole, 0.5 mmol (5.0 equiv) of 1-(2,6-diisopropylphenyl)imidazole was used to obtain an N-heterocyclic carbene-based compound (Lc103). The isolation yield was 84%.

### [Use of N-heterocyclic carbene-based compound (Lc) in mechanochemical synthesis]

The N-heterocyclic carbene-based compounds (Legands (Lc)) used in Examples 601 to 603 and Reference Examples 601 and 602 will be described below. Note that Lc105 is a mixture of Lc101 and an esterified compound of PEG-4000 methyl ether and benzoic acid.

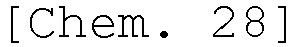

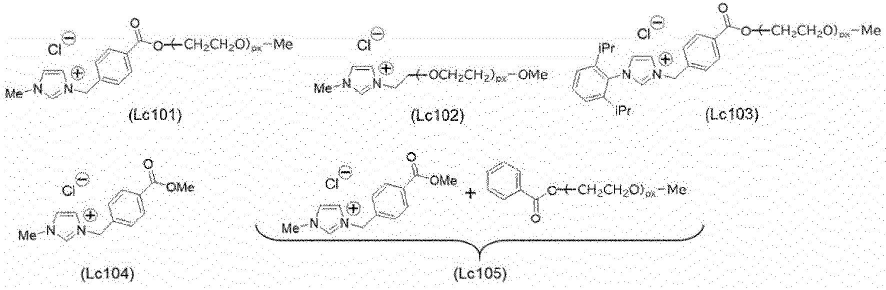

In the N-heterocyclic carbene-based compounds (Lc101) to (Lc103) and (Lc105), in the formulas, px is, in the case of polyoxyethylene, the number (about 91) of the repeating units corresponding to a number-average molecular weight of 4000.

### <Examples 601 to 603 and Reference Examples 601 and 602>

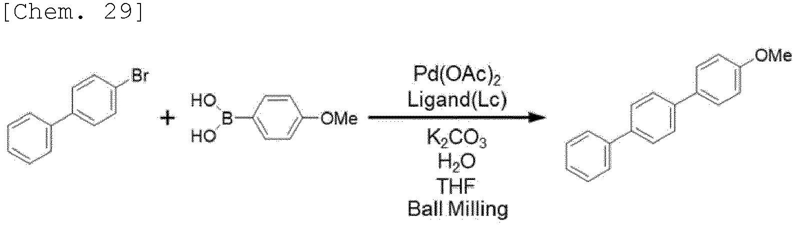

A 1.5 mL stainless-steel ball mill jar containing stainless-steel balls having a diameter of 5 mm was charged with, in the air, 46.6 mg (0.2 mmol, 1.0 equiv) of 4-bromobiphenyl, 36.5 mg (0.24 mmol, 1.2 equiv (relative to 4-bromobiphenyl)) of 4-methoxyphenylboronic acid, 1.3 mg (0.006 mmol, 3 mol% (relative to 4-bromobiphenyl)) of palladium acetate serving as the metallic compound, 0.012 mmol (in the case of Lc101, 56.0 mg; 6 mol% (relative to 4-bromobiphenyl)) of a compound in Table 10 serving as the N-heterocyclic carbene-based compound (Legand (Lc)), 82.9 mg (0.6 mmol, 3.0 equiv (relative to 4-bromobiphenyl)) of potassium carbonate, 45 µL (0.2 µL/mg relative to the total mass of 4-bromobiphenyl, 4-methoxy phenylboronic acid, potassium carbonate, palladium acetate, and the N-heterocyclic carbene-based compound) of tetrahydrofuran, and 13 µL (3.7 equiv (relative to 4-bromobiphenyl)) of water. The ball mill jar was sealed with the lid, mounted on the ball mill, and shaken and stirred for 60 minutes at a vibration frequency of 30 Hz under heating of the outside of the ball mill jar with the heat gun set at 100°C to cause a reaction (a Suzuki-Miyaura cross-coupling (carbon-carbon coupling) reaction). After completion of the reaction, the reaction mixture was passed using ethyl acetate/dichloromethane (1:1, v:v) through a short silica gel column chromatography to thereby remove the catalyst and the inorganic salt. An evaporator was used to remove the solvent and subsequently the NMR yield was measured; the resultant NMR yields of the corresponding reaction products will be described in Table 10.

### <Examples 604 and 605 and Reference Example 603>

The same procedures as in Example 601 to 603 were performed except that the N-heterocyclic carbene-based compound (Legand (Lc)) employed was a compound in Table 10 and the reaction time was set to 30 minutes, to cause a reaction to obtain reaction products. The NMR yields of the corresponding reaction products will be described in Table 10.

**[Table 10]**

| | Ligand (Lb) | NMR yield |
|---|---|---|
| Example 601 | Lc101 | >99% |
| Example 602 | Lc102 | >99% |
| Example 603 | Lc103 | 37% |
| Example 604 | Lc101 | >99% |
| Example 605 | Lc102 | >99% |
| Reference Example 601 | Lc104 | 80% |
| Reference Example 602 | Lc105 | 65% |
| Reference Example 603 | Lc104 | 70% |

Examples 1 to 5 have demonstrated that the novel phosphorus-based ligand compounds (La101) to (La105) according to the present invention can be handled in the air and can be easily synthesized. In addition, Examples 201 to 234 have demonstrated that the novel phosphorus-based ligand compounds (La101) to (La105) according to the present invention exhibit high activity in mechanochemical reactions and constitute mechanochemical-reaction additives and mechanochemical-reaction methods that can be applied to wide-ranging substrates under mild conditions.

Examples 201 to 210 and Comparative Examples 201 to 208 are examples that demonstrate the effect of the presence or absence of a polymer chain in the phosphorus-based ligand compound (La) on the mechanochemical reactions.

The cases where the phosphorus-based ligand compound (La) has a polymer chain (Examples 201 to 210) have demonstrated that, compared with the cases where the phosphorus-based ligand compound (La) does not have polymer chains (Comparative Examples 201 to 208), high yield can be achieved in a short time. In addition, the biphenyl-type ligand compounds such as the phosphorus-based ligand compounds (La101), (La102), and the like have demonstrated that the compounds can activate further the reactions.

Examples 207 to 217 and Comparative Examples 209 to 213 are examples that demonstrate the effect of the length of the polymer chain (the number of repeating units) in the phosphorus-based ligand compound (La) and the amount of the phosphorus-based ligand compound (La) used on the mechanochemical reactions.

The cases where the phosphorus-based ligand compound (La) has a polymer chain (Examples 207 to 217) have demonstrated that, compared with the cases where the phosphorus-based ligand compound (La) does not have polymer chains (Comparative Examples 209 to 213), high yield can be achieved in a short time.

In Comparative Example 213 in which the polymer having the same structure as the polymer chain introduced into the phosphorus-based ligand compound (La) is added, the yield is low and the activity of the mechanochemical reaction is not improved. This has demonstrated that introduction of the polymer chain into the phosphorus-based ligand compound (La) is the key to the improved performance of the phosphorus-based ligand compound (La) in the mechanochemical reaction.

The cases where the phosphorus-based ligand compound (La) has a long polymer chain (Examples 211 to 213) have demonstrated that, compared with the cases of a short polymer chain (Examples 214 to 217), high yield can be achieved in a short time.

The cases where the amount of the phosphorus-based ligand compound (La) used is increased (Examples 207 to 210) have demonstrated that, compared with the cases where the amount of the phosphorus-based ligand compound (La) used is small (Examples 211 to 213), high yield can be achieved in a short time.

Comparative Example 214 is an example in which the phosphorus-based ligand compound (La) intramolecularly not having polymer chains is used and Comparative Examples 215 and 216 are examples in which the ligand compounds (Lx) intramolecularly having a polymer chain are used to cause a solution-based cross-coupling reaction. Comparative Examples 214 to 216 have demonstrated that the ligand compound (Lx) intramolecularly having a polymer chain exhibits, in the solution-based reaction, merely the same activity as the phosphorus-based ligand compound (La) not having polymer chains. This has demonstrated that the ligand compound (Lx) intramolecularly having a polymer chain according to the present invention is a ligand compound dedicated to mechanochemical-reaction methods.

Examples 218 to 227 and Comparative Examples 217 to 237 are examples in which the substrates employed are various compounds. The mechanochemical-reaction method according to the present invention is markedly improved, compared with the mechanochemical-reaction methods using publicly known ligands, in terms of yield, reaction time, and the like. For example, even the cases of using the substrates that are polycyclic aromatic boronic acids having low reactivity (Example 227 and Comparative Examples 226 and 236) have demonstrated that the reactions efficiently proceed. This has demonstrated that the ligand compound (Lx) according to the present invention used in the mechanochemical-reaction additive and the mechanochemical-reaction method and the ligand compound (Ly) according to the present invention exhibit higher activity than the ligand compounds having been regarded as being optimal in mechanochemical reactions.

Examples 228 to 231 and Comparative Examples 238 to 245 are examples in which the substrates employed are aryl chlorides having low reactivity. The mechanochemical-reaction method according to the present invention in which the yield is markedly improved, compared with the mechanochemical-reaction methods using publicly known ligands, has been demonstrated to be effective to wide-ranging substrates.

Examples 232 to 234 and Comparative Examples 246 and 247 are examples in which the substrates employed are compounds insoluble in organic solvents (the compounds (H12) and (H13)). The mechanochemical-reaction method according to the present invention in which the yield is markedly improved, compared with the mechanochemical-reaction methods using publicly known ligands, has been demonstrated to be effective to wide-ranging substrates. This has demonstrated that, for the mechanochemical-reaction additive, the mechanochemical-reaction method, and the ligand compound (Ly) according to the present invention, for example, compounds slightly soluble in organic solvents such as organic pigments can be used as substrates to undergo mechanochemical reactions under mild conditions, and, even in the cases of using substrates that cannot react in organic solvents, reaction products can be obtained. Thus, these have been demonstrated to be effective in synthesis of various functional materials.

Examples 301 and 401 to 408 have demonstrated that the novel bipyridine-based ligand compounds (Lb101) to (Lb104) according to the present invention can be handled in the air, exhibit high activity in mechanochemical reactions, and constitute mechanochemical-reaction additives and mechanochemical-reaction methods that can be applied to wide-ranging substrates under mild conditions.

Examples 501 to 503 and 601 to 605 have demonstrated that the novel N-heterocyclic carbene-based ligand compounds (Lc101) to (Lc103) according to the present invention can be handled in the air, exhibit high activity in mechanochemical reactions, and constitute mechanochemical-reaction additives and mechanochemical-reaction methods that can be applied to wide-ranging substrates under mild conditions.

### [Action mechanism of ligand compound]

### <Reference Example 701>

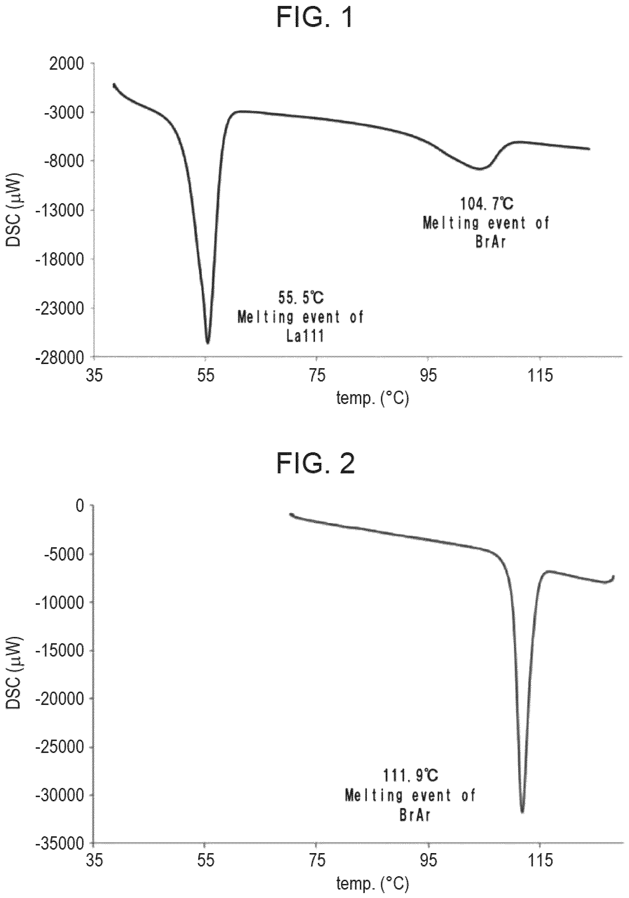

A ball mill mixture of aryl bromide BrAr (1-bromo-3,5-diphenylbenzene) and a phosphorus-based ligand compound (La111) below was subjected to ball mill grinding (vibration frequency: 30 Hz) at 45°C for 30 minutes; and the resultant sample was subjected to DSC analysis. The results will be described in Fig. 1.

In Fig. 1, peaks at 55.5°C and 104.7°C can be observed and hence the same melting events of two of aryl bromide BrAr (1-bromo-3,5-diphenylbenzene) and the phosphorus-based ligand compound (La111) occurred inferentially.

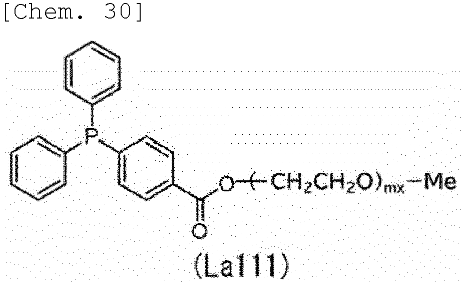

In the phosphorus-based ligand compound (La111), mx in the formula is, in the case of polyoxyethylene, the number (about 45) of repeating units corresponding to a number-average molecular weight of 2,000.

### <Reference Example 702>

In the absence of the phosphorus-based ligand compound (La111), ball mill grinding (vibration frequency: 30 Hz) was performed at 45°C for 30 minutes; and the resultant sample was subjected to DSC analysis. The results will be described in Fig. 2.

In Fig. 2, as the peak at 111.9°C, the melting point of aryl bromide BrAr (1-bromo-3,5-diphenylbenzene) having been subjected to the ball mill process was observed.

In Reference Examples 701 and 702, for the mixture of aryl bromide BrAr (1-bromo-3,5-diphenylbenzene) and the phosphorus-based ligand compound (La111), the melting point of aryl bromide BrAr (1-bromo-3,5-diphenylbenzene) changed to 104.7°C and the peak became considerably broad; this suggests that the polyethylene glycol chain interacts with aryl bromide BrAr (1-bromo-3,5-diphenylbenzene) to partially form an amorphous phase containing aryl bromide at the interface of the phase separation structure.

The ligand compound (Lx) serving as the metallic catalyst intramolecularly has a polymer chain such as polyether, so that the crystalline phase of the reaction substrate in the solid state undergoes, under mechanochemical conditions, partially phase change to the amorphous phase to form the phase separation structure, which has been demonstrated by the thermal analysis in Reference Examples 701 and 702. In this case, it is important to form the amorphous phase near the metallic catalyst serving as the reaction center, which increases the reaction activity to achieve the highly efficient reaction inferentially.

## Claims

1. A mechanochemical-reaction additive comprising at least a ligand compound (Lx) or salt thereof,
wherein the ligand compound (Lx) is one or more kinds of a phosphorus-based compound, a bipyridine-based compound, and an N-heterocyclic carbene-based compound, and
the ligand compound (Lx) intramolecularly has a polymer chain and the polymer chain is one or more kinds of polyether, polyamide, polyester, and polyurethane.

2. The mechanochemical-reaction additive according to claim 1, further comprising a metallic compound.

3. A mechanochemical-reaction additive comprising a complex including at least a ligand compound (Lx) or salt thereof and a metallic atom,
wherein the ligand compound (Lx) is one or more kinds of a phosphorus-based compound, a bipyridine-based compound, and an N-heterocyclic carbene-based compound, and
the ligand compound (Lx) intramolecularly has a polymer chain and the polymer chain is one or more kinds of polyether, polyamide, polyester, and polyurethane.

4. The mechanochemical-reaction additive according to claim 1 or 3, wherein the ligand compound (Lx) is represented by a structure (La), (Lb), or (Lc) below; 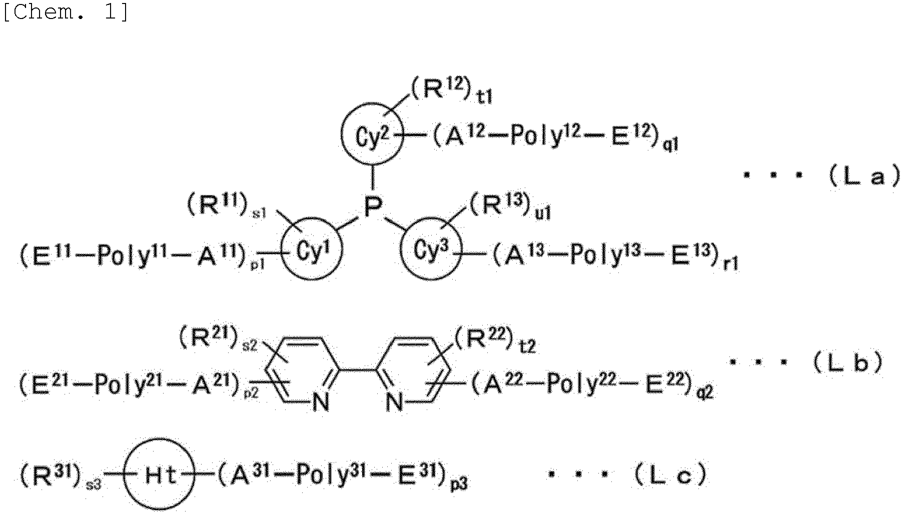 (groups in the formulas (La), (Lb), and (Lc) are as follows.
Cy¹, Cy², and Cy³ are each independently a group selected from the group consisting of an aromatic hydrocarbon group having 6 to 30 carbon atoms, an aliphatic hydrocarbon group having 1 to 20 carbon atoms, an alicyclic hydrocarbon group having 3 to 20 carbon atoms, and a heterocyclic group having 1 to 20 carbon atoms (a heteroatom is one or more selected from the group consisting of oxygen, nitrogen, and sulfur. When there are a plurality of heteroatoms, they may be the same or different.).
Ht is a group represented by any one of formulas (Ht1) to (Ht10) below. 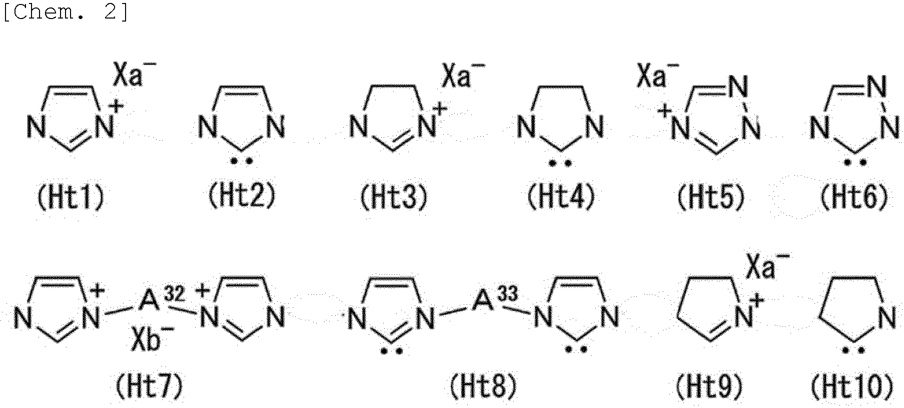
R¹¹, R¹², R¹³, R²¹, R²², and R³¹ are each independently a group selected from the group consisting of an alkyl group having 1 to 24 carbon atoms, an alkoxy group having 1 to 24 carbon atoms, an alkylthio group having 1 to 24 carbon atoms, a cycloalkyl group having 3 to 24 carbon atoms, an alkenyl group having 2 to 24 carbon atoms, an alkynyl group having 2 to 24 carbon atoms, an aryl group having 6 to 24 carbon atoms, an aryloxy group having 6 to 24 carbon atoms, an arylthio group having 6 to 24 carbon atoms, a heteroaryl group having 3 to 24 carbon atoms (a heteroatom is one or more selected from the group consisting of oxygen, nitrogen, and sulfur. When there are a plurality of heteroatoms, they may be the same or different.), an acyl group having 1 to 24 carbon atoms, an amino group having 0 to 24 carbon atoms, a halogen group, a cyano group, a nitro group, a hydroxyl group, a mercapto group, and a carboxyl group. When there are a plurality of R¹¹, R¹², R¹³, R²¹, R²², and R³¹, they may be the same or different.
A¹¹, A¹², A¹³, A²¹, A²², A³¹, A³², and A³³ are each independently a group selected from the group consisting of a direct bond, an alkylene group having 1 to 24 carbon atoms, a cycloalkylene group having 3 to 24 carbon atoms, an alkenylene group having 1 to 24 carbon atoms, an alkynylene group having 1 to 24 carbon atoms, an arylene group having 6 to 24 carbon atoms, an aryleneoxy group having 6 to 24 carbon atoms, an arylene sulfide group having 6 to 24 carbon atoms, a heteroarylene group having 3 to 24 carbon atoms (a heteroatom is one or more selected from the group consisting of oxygen, nitrogen, and sulfur. When there are a plurality of heteroatoms, they may be the same or different.), an ester group (-COO- or -OCO-), an ether group, a thioether group, an amide group, a urethane group, a carbonate group, and an amine group having 0 to 24 carbon atoms; two or more kinds of the foregoing may be bonded together. When there are a plurality of A¹¹, A¹², A¹³, A²¹, A²², A³¹, A³², and A³³, they may be the same or different.
Poly¹¹, Poly¹², Poly¹³, Poly²¹, Poly²², and Poly³¹ are each independently one or more kinds of polymer chains selected from the group consisting of polyether, polyamide, polyester, and polyurethane. When there are a plurality of Poly¹¹, Poly¹², Poly¹³, Poly²¹, Poly²², and Poly³¹, they may be the same or different.
E¹¹, E¹², E¹³, E²¹, E²², and E³¹ are each independently a group selected from the group consisting of an alkyl group having 1 to 24 carbon atoms, an alkoxy group having 1 to 24 carbon atoms, an alkylthio group having 1 to 24 carbon atoms, a cycloalkyl group having 3 to 24 carbon atoms, an alkenyl group having 2 to 24 carbon atoms, an alkynyl group having 2 to 24 carbon atoms, an aryl group having 6 to 24 carbon atoms, an aryloxy group having 6 to 24 carbon atoms, an arylthio group having 6 to 24 carbon atoms, a heteroaryl group having 3 to 24 carbon atoms (a heteroatom is one or more selected from the group consisting of oxygen, nitrogen, and sulfur. When there are a plurality of heteroatoms, they may be the same or different.), an acyl group having 1 to 24 carbon atoms, an amino group having 0 to 24 carbon atoms, a halogen group, a cyano group, a nitro group, a hydroxyl group, a mercapto group, and a carboxyl group; when there are a plurality of E¹¹, E¹², E¹³, E²¹, E²², and E³¹, they may be the same or different.
Xa⁻ is a monovalent anion and Xb⁻ is a divalent anion or two monovalent anions.
p1, q1, r1, s1, t1, and u1 are each independently 0 or an integer of 1 or more and satisfy p1 + q1 + r1 ≥ 1. And p1 + s1 is 0 or an integer of equal to or less than a number of substitutable positions in the Cy¹ group; q1 + t1 is 0 or an integer of equal to or less than a number of substitutable positions in the Cy² group; r1 + u1 is 0 or an integer of equal to or less than a number of substitutable positions in the Cy³ group.
p2, q2, s2, and t2 are each independently 0 or an integer of 1 or more, and satisfy p2 + q2 ≥ 1, 4 ≥ p2 + s2 ≥ 0, and 4 ≥ q2 + t2 ≥ 0.
p3 is an integer of 1 or more, s3 is 0 or an integer of 1 or more. And p3 + s3 is an integer of equal to or less than a number of substitutable positions in the Ht group.
In one or more of each of R¹¹, R¹², R¹³, A¹¹, A¹², and A¹³, two or more may be bonded together to form a carbon ring or a heterocycle.
In one or more of each of R²¹, R²², A²¹, and A²², two or more may be bonded together to form a carbon ring or a heterocycle.
In one or more of each of R³¹, A³¹, A³², and A³³, two or more may be bonded together to form a carbon ring or a heterocycle.
In the formulas (La), (Lb), and (Lc), Cy¹, Cy², Cy³, R¹¹, R¹², R¹³, R²¹, R²², R³¹, A¹¹, A¹², A¹³, A²¹, A²², A³¹, A³², A³³, E¹¹, E¹², E¹³, E²¹, E²², and E³¹ may each independently have a substituent. The substituent in each group is a group selected from the group consisting of an alkyl group having 1 to 24 carbon atoms, an alkoxy group having 1 to 24 carbon atoms, an alkylthio group having 1 to 24 carbon atoms, a cycloalkyl group having 3 to 24 carbon atoms, an alkenyl group having 2 to 24 carbon atoms, an alkynyl group having 2 to 24 carbon atoms, an aryl group having 6 to 24 carbon atoms, an aryloxy group having 6 to 24 carbon atoms, an arylthio group having 6 to 24 carbon atoms, a heteroaryl group having 3 to 24 carbon atoms (a heteroatom is one or more selected from the group consisting of oxygen, nitrogen, and sulfur. When there are a plurality of heteroatoms, they may be the same or different.), an acyl group having 1 to 24 carbon atoms, an amino group having 0 to 24 carbon atoms, a halogen group, a cyano group, a nitro group, a hydroxyl group, a mercapto group, and a carboxyl group; when there are a plurality of substituents, they may be the same or different.).

5. The mechanochemical-reaction additive according to claim 1 or 3, wherein the polymer chain is polyalkylene ether.

6. The mechanochemical-reaction additive according to claim 2 or 3, wherein a metallic atom included in the metallic compound or the metallic atom included in the complex is one or more kinds selected from the group consisting of Mg, Ca, Sr, Ba, Sc, Ti, V, Cr, Mn, Fe, Co, Ni, Cu, Zn, Ru, Pd, Ag, Re, Ir, Pt, Pb, Bi, Al, and Sn.

7. A mechanochemical-reaction method comprising using the mechanochemical-reaction additive according to claim 1 or 3.

8. A ligand compound (Ly) or salt thereof represented by a structure (La), (Lb), or (Lc) below; 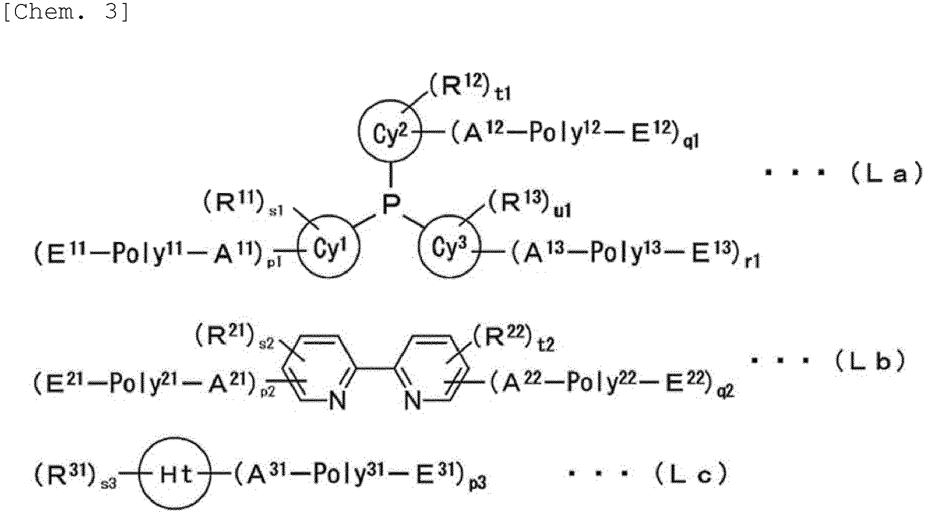 (groups in the formulas (La), (Lb), and (Lc) are as follows.
Cy¹, Cy², and Cy³ are each independently a group selected from the group consisting of an aromatic hydrocarbon group having 6 to 30 carbon atoms, an aliphatic hydrocarbon group having 1 to 20 carbon atoms, an alicyclic hydrocarbon group having 3 to 20 carbon atoms, and a heterocyclic group having 1 to 20 carbon atoms (a heteroatom is one or more selected from the group consisting of oxygen, nitrogen, and sulfur; when there are a plurality of heteroatoms, they may be the same or different.).
Ht is a group represented by any one of formulas (Ht1) to (Ht7) below. 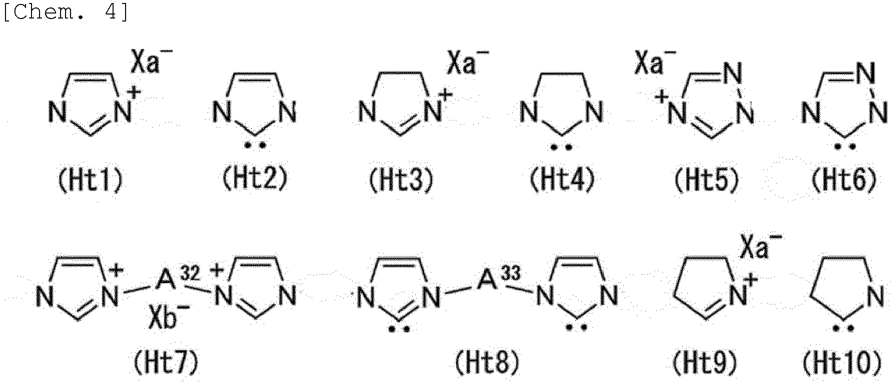
R¹¹, R¹², R¹³, R²¹, R²², and R³¹ are each independently a group selected from the group consisting of an alkyl group having 1 to 24 carbon atoms, an alkoxy group having 1 to 24 carbon atoms, an alkylthio group having 1 to 24 carbon atoms, a cycloalkyl group having 3 to 24 carbon atoms, an alkenyl group having 2 to 24 carbon atoms, an alkynyl group having 2 to 24 carbon atoms, an aryl group having 6 to 24 carbon atoms, an aryloxy group having 6 to 24 carbon atoms, an arylthio group having 6 to 24 carbon atoms, a heteroaryl group having 3 to 24 carbon atoms (a heteroatom is one or more selected from the group consisting of oxygen, nitrogen, and sulfur. When there are a plurality of heteroatoms, they may be the same or different.), an acyl group having 1 to 24 carbon atoms, an amino group having 0 to 24 carbon atoms, a halogen group, a cyano group, a nitro group, a hydroxyl group, a mercapto group, and a carboxyl group; when there are a plurality of R¹¹, R¹², R¹³, R²¹, R²², and R³¹, they may be the same or different.
A¹¹, A¹², A¹³, A²¹, A²², A³¹, A³², and A³³ are each independently a group selected from the group consisting of a direct bond, an alkylene group having 1 to 24 carbon atoms, a cycloalkylene group having 3 to 24 carbon atoms, an alkenylene group having 1 to 24 carbon atoms, an alkynylene group having 1 to 24 carbon atoms, an arylene group having 6 to 24 carbon atoms, an aryleneoxy group having 6 to 24 carbon atoms, an arylene sulfide group having 6 to 24 carbon atoms, a heteroarylene group having 3 to 24 carbon atoms (a heteroatom is one or more selected from the group consisting of oxygen, nitrogen, and sulfur; when there are a plurality of heteroatoms, they may be the same or different.), an ester group (-COO- or -OCO-), an ether group, a thioether group, an amide group, a urethane group, a carbonate group, and an amine group having 0 to 24 carbon atoms; two or more kinds of the foregoing may be bonded together. When there are a plurality of A¹¹, A¹², A¹³, A²¹, A²², A³¹, A³², and A³³, they may be the same or different.
Poly¹¹, Poly¹², Poly¹³, Poly²¹, Poly²², and Poly³¹ are each independently one or more kinds of polymer chains selected from the group consisting of polyether, polyamide, polyester, and polyurethane. When there are a plurality of Poly¹¹, Poly¹², Poly¹³, Poly²¹, Poly²², and Poly³¹, they may be the same or different.
E¹¹, E¹², E¹³, E²¹, E²², and E³¹ are each independently a group selected from the group consisting of an alkyl group having 1 to 24 carbon atoms, an alkoxy group having 1 to 24 carbon atoms, an alkylthio group having 1 to 24 carbon atoms, a cycloalkyl group having 3 to 24 carbon atoms, an alkenyl group having 2 to 24 carbon atoms, an alkynyl group having 2 to 24 carbon atoms, an aryl group having 6 to 24 carbon atoms, an aryloxy group having 6 to 24 carbon atoms, an arylthio group having 6 to 24 carbon atoms, a heteroaryl group having 3 to 24 carbon atoms (a heteroatom is one or more selected from the group consisting of oxygen, nitrogen, and sulfur; when there are a plurality of heteroatoms, they may be the same or different.), an acyl group having 1 to 24 carbon atoms, an amino group having 0 to 24 carbon atoms, a halogen group, a cyano group, a nitro group, a hydroxyl group, a mercapto group, and a carboxyl group. When there are a plurality of E¹¹, E¹², E¹³, E²¹, E²², and E³¹, they may be the same or different.
Xa⁻ is a monovalent anion and Xb⁻ is a divalent anion or two monovalent anions.
p1, q1, r1, s1, t1, and u1 are each independently 0 or an integer of 1 or more and satisfy p1 + q1 + r1 ≥ 1; p1 + s1 is 0 or an integer of equal to or less than a number of substitutable positions in the Cy¹ group; q1 + t1 is 0 or an integer of equal to or less than a number of substitutable positions in the Cy² group; r1 + u1 is 0 or an integer of equal to or less than a number of substitutable positions in the Cy³ group.
p2, q2, s2, and t2 are each independently 0 or an integer of 1 or more, and satisfy p2 + q2 ≥ 1, 4 ≥ p2 + s2 ≥ 0, and 4 ≥ q2 + t2 ≥ 0.
p3 is an integer of 1 or more, s3 is 0 or an integer of 1 or more. And p3 + s3 is an integer of equal to or less than a number of substitutable positions in the Ht group.
In one or more of each of R¹¹, R¹², R¹³, A¹¹, A¹², and A¹³, two or more may be bonded together to form a carbon ring or a heterocycle.
In one or more of each of R²¹, R²², A²¹, and A²², two or more may be bonded together to form a carbon ring or a heterocycle.
In one or more of each of R³¹, A³¹, A³², and A³³, two or more may be bonded together to form a carbon ring or a heterocycle.
In the formulas (La), (Lb), and (Lc), Cy¹, Cy², Cy³, R¹¹, R¹², R¹³, R²¹, R²², R³¹, A¹¹, A¹², A¹³, A²¹, A²², A³¹, A³², A³³, E¹¹, E¹², E¹³, E²¹, E²², and E³¹ may each independently have a substituent. The substituent in each group is a group selected from the group consisting of an alkyl group having 1 to 24 carbon atoms, an alkoxy group having 1 to 24 carbon atoms, an alkylthio group having 1 to 24 carbon atoms, a cycloalkyl group having 3 to 24 carbon atoms, an alkenyl group having 2 to 24 carbon atoms, an alkynyl group having 2 to 24 carbon atoms, an aryl group having 6 to 24 carbon atoms, an aryloxy group having 6 to 24 carbon atoms, an arylthio group having 6 to 24 carbon atoms, a heteroaryl group having 3 to 24 carbon atoms (a heteroatom is one or more selected from the group consisting of oxygen, nitrogen, and sulfur. When there are a plurality of heteroatoms, they may be the same or different.), an acyl group having 1 to 24 carbon atoms, an amino group having 0 to 24 carbon atoms, a halogen group, a cyano group, a nitro group, a hydroxyl group, a mercapto group, and a carboxyl group; when there are a plurality of substituents, they may be the same or different.).

9. A complex comprising at least the ligand compound (Ly) or salt thereof according to claim 8 and a metallic atom.
